# EUROPEAN PATENT APPLICATION

(11) **EP 4 804 442 A1**
(43) Date of publication of application: **09.09.2026**
(21) Application number: 23957357.9
(22) Date of filing: 03.11.2023
(51) Int. Cl.: H04L 5/00, H04L 25/02

(54) **COMMUNICATION METHOD, APPARATUS AND DEVICE, CHIP, STORAGE MEDIUM, PRODUCT, AND PROGRAM**

(71) Applicant: GUANGDONG OPPO MOBILE TELECOMMUNICATIONS CORP., LTD., Dongguan, Guangdong 523860 (CN)
(72) Inventor: SHI, Zhihua, Dongguan, Guangdong 523860 (CN); TIAN, Wenqiang, Dongguan, Guangdong 523860 (CN); XIAO, Han, Dongguan, Guangdong 523860 (CN)
(74) Representative: Penza, Giancarlo
(86) International application number: PCT/CN2023/129759
(87) International publication number: WO 2025/091501

(57) **Abstract**

The present application provides a communication method, apparatus and device, a chip, a storage medium, a product, and a program. The method comprises: a first device receives first information, the first information being used for configuring a first pilot signal, and at least some of time-frequency resources occupied by the first pilot signal being used for transmitting a data signal.

## Description

### TECHNICAL FIELD

The present disclosure relates to the technical field of communications, and more particularly to, a communication method, a communication device, a device, a chip, a storage medium, a product, and a program.

### BACKGROUND

In the related art, the pilot signal and the data signal occupy different time-frequency resources. That is to say, the pilot signal and the data signal are placed orthogonally on the time-frequency resources. However, in a case where the total time-frequency resources are constant, when the terminal device has a high moving speed, in order to improve the channel estimation performance, it is often necessary that the pilot signal occupies more time-frequency resources, which results in the reduction of the time-frequency resources occupied by the data signal, thereby reducing the transmission rate of the data signal.

### SUMMARY

The present disclosure provides a communication method, a communication device, a device, a chip, a storage medium, a product, and a program.

In a first aspect, a communication method provided by the embodiments of the present disclosure includes a following operation.

A first device receives first information. The first information is used for configuring a first pilot signal, and at least part of time-frequency resources occupied by the first pilot signal are used for transmission of a data signal.

In a second aspect, a communication method provided by the embodiments of the present disclosure includes a following operation.

A second device sends first information to a first device. The first information is used for configuring a first pilot signal, and at least part of time-frequency resources occupied by the first pilot signal are used for transmission of a data signal.

In a third aspect, a communication device provided by the embodiments of the present disclosure is applied to a first device, and includes a first receiving unit.

The first receiving unit is configured to receive first information. The first information is used for configuring a first pilot signal, and at least part of time-frequency resources occupied by the first pilot signal are used for transmission of a data signal.

In a fourth aspect, a communication device provided by the embodiments of the present disclosure is applied to a second device, and includes a second sending unit.

The second sending unit is configured to send first information to a first device. The first information is used for configuring a first pilot signal, and at least part of time-frequency resources occupied by the first pilot signal are used for transmission of a data signal.

In a fifth aspect, a communication device provided by the embodiments of the present disclosure includes a processor and a memory. The memory is configured to store computer-executable instructions, and the processor is connected to the memory and is configured to implement, through executing the computer-executable instructions, the communication method in the first aspect or the second aspect.

In a sixth aspect, a chip provided by the embodiments of the present disclosure is configured to implement the communication method in the first aspect or the second aspect.

Specifically, the chip includes a processor configured to invoke and execute a computer program from a memory, to enable a device on which the chip is mounted to perform the communication method in the first aspect or the second aspect.

In a seventh aspect, the embodiments of the present disclosure provide a computer-readable storage medium. The computer-readable storage medium has stored thereon a computer program that, when executed by at least one processor, implements the communication method in the first aspect or the second aspect.

In an eighth aspect, the embodiments of the present disclosure provide a computer program product. The computer program product includes a computer storage medium storing a computer program including instructions executable by at least one processor, where the instructions, when executed by at least one processor, implement the communication method in the first aspect or second aspect.

In a ninth aspect, the embodiments of the present disclosure provide a computer program that, when executed on a computer, causes the computer to perform the communication method in the first aspect or the second aspect.

The embodiments of the present disclosure provide a communication method. The first device may receive the first information. The first information is used for configuring the first pilot signal, and the at least part of time-frequency resources occupied by the first pilot signal are used for transmission of a data signal. In this way, after the first device receives the first signal, the first device may know that the first pilot signal to be configured and the data signal occupy the same at least part of time-frequency resources. In this way, in the case where the first pilot signal occupies more time-frequency resources, the at least part of the time-frequency resources occupied by the first pilot signal may also be occupied by the data signal, thereby increasing the time-frequency resources occupied by the data signal, and improving the transmission rate and transmission reliability of the data signal.

### BRIEF DESCRIPTION OF THE DRAWINGS

The accompanying drawings, which are illustrated herein, provide further understanding of the present disclosure and constitute a part of the present disclosure. The exemplary embodiments of the present disclosure and description thereof are intended to be illustrative of the present disclosure and do not constitute an undue limitation of the present disclosure. In the accompanying drawings:
FIG. 1 is a schematic diagram of a communication architecture;
FIG. 2A is a first schematic diagram of a scenario of a demodulation reference signal with one symbol;
FIG. 2B is a first schematic diagram of a scenario of a demodulation reference signal with two symbols;
FIG. 3A is a second schematic diagram of a scenario of a demodulation reference signal with one symbol;
FIG. 3B is a second schematic diagram of a scenario of a demodulation reference signal with two symbols;
FIG. 4 is a schematic flowchart of a communication method according to an embodiment of the present disclosure;
FIG. 5 is a first schematic diagram of a scenario of time-frequency resources for transmission of a pilot signal and a data signal according to an embodiment of the present disclosure;
FIG. 6 is a second schematic diagram of a scenario of time-frequency resources for transmission of a pilot signal and a data signal according to an embodiment of the present disclosure;
FIG. 7 is a third schematic diagram of a scenario of time-frequency resources for transmission of a pilot signal and a data signal according to an embodiment of the present disclosure;
FIG. 8 is a first schematic diagram of a scenario of a frequency-domain location of time-frequency resources occupied by a pilot signal according to an embodiment of the present disclosure;
FIG. 9 is a second schematic diagram of a scenario of a frequency-domain location of time-frequency resources occupied by a pilot signal according to an embodiment of the present disclosure;
FIG. 10 is a third schematic diagram of a scenario of a frequency-domain location of time-frequency resources occupied by a pilot signal according to an embodiment of the present disclosure;
FIG. 11 is a fourth schematic diagram of a scenario of a frequency-domain location of time-frequency resources occupied by a pilot signal according to an embodiment of the present disclosure;
FIG. 12 is a first schematic diagram of a scenario of a time-domain location of time-frequency resources occupied by a pilot signal according to an embodiment of the present disclosure;
FIG. 13 is a second schematic diagram of a scenario of a time-domain location of time-frequency resources occupied by a pilot signal according to an embodiment of the present disclosure;
FIG. 14 is a third schematic diagram of a scenario of a time-domain location of time-frequency resources occupied by a pilot signal according to an embodiment of the present disclosure;
FIG. 15 is a fourth schematic diagram of a scenario of a time-domain location of time-frequency resources occupied by a pilot signal according to an embodiment of the present disclosure;
FIG. 16 is a fifth schematic diagram of a scenario of a time-domain location of time-frequency resources occupied by a pilot signal according to an embodiment of the present disclosure;
FIG. 17 is a sixth schematic diagram of a scenario of a time-domain location of time-frequency resources occupied by a pilot signal according to an embodiment of the present disclosure;
FIG. 18 is a seventh schematic diagram of a scenario of a time-domain location of time-frequency resources occupied by a pilot signal according to an embodiment of the present disclosure;
FIG. 19 is an eighth schematic diagram of a scenario of a time-domain location of time-frequency resources occupied by a pilot signal according to an embodiment of the present disclosure;
FIG. 20 is a ninth schematic diagram of a scenario of a time-domain location of time-frequency resources occupied by a pilot signal according to an embodiment of the present disclosure;
FIG. 21 is a tenth schematic diagram of a scenario of a time-domain location of time-frequency resources occupied by a pilot signal according to an embodiment of the present disclosure;
FIG. 22 is an eleventh schematic diagram of a scenario of a time-domain location of time-frequency resources occupied by a pilot signal according to an embodiment of the present disclosure;
FIG. 23 is a schematic diagram of a structural composition of a communication device 2300 according to an embodiment of the present disclosure;
FIG. 24 is a schematic diagram of a structural composition of a communication device 2400 according to an embodiment of the present disclosure;
FIG. 25 is a schematic structural diagram of a communication device according to an embodiment of the present disclosure;
FIG. 26 is a schematic structural diagram of a chip according to an embodiment of the present disclosure; and
FIG. 27 is a schematic structural diagram of a communication system according to an embodiment of the present disclosure.

### DETAILED DESCRIPTION

The technical solutions of the embodiments of the present disclosure would be described in conjunction with the accompanying drawings in the embodiments of the present disclosure. It is apparent that the described embodiments are only part of the embodiments of the present disclosure, not all the embodiments. Based on the embodiments in the present disclosure, all other embodiments obtained by those of ordinary skill in the art without creative work shall fall within the scope of protection of the present disclosure.

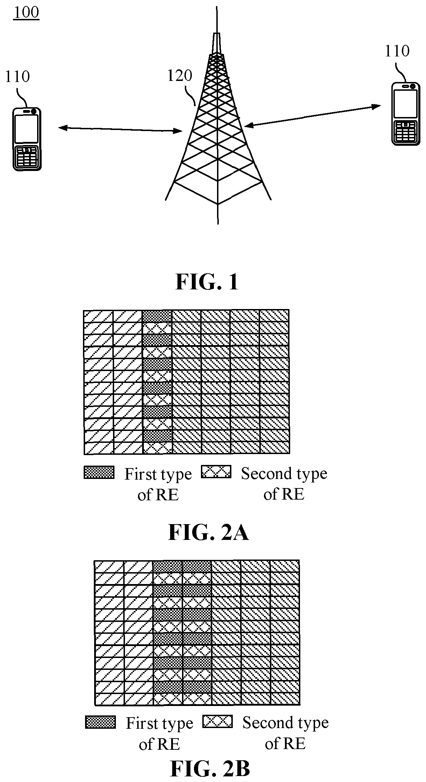

FIG. 1 is a schematic diagram of a communication architecture.

As shown in FIG. 1, the communication system 100 may include a terminal device 110 and a network device 120. The network device 120 may communicate with the terminal device 110 through an air interface. Multi-service transmission between the terminal device 110 and the network device 120 is supported.

It is to be understood that the embodiments of the present disclosure are illustrated with reference to the communication system 100 only, but are not limited thereto. That is to say, the technical solutions of the embodiments of the present disclosure may be applied to various communication systems, such as a Long Term Evolution (LTE) system, an LTE Time Division Duplex (TDD), a Universal Mobile Telecommunication System (UMTS), an Internet of Things (IoT) system, a Narrow Band Internet of Things (NB-IoT) system, an Enhanced Machine-Type Communications (eMTC) system, a 5-th Generation (5G) communication system (also referred to as a New Radio (NR) communication system), or a future communication system, etc.

In the communication system 100 shown in FIG. 1, the network device 120 may be an access network device that communicates with the terminal device 110. The access network device may provide communication coverage for a specific geographic region and may communicate with a terminal device 110 in the coverage.

The network device 120 may be an Evolutional Node B (eNB or eNodeB) in the LTE system, a Next Generation Radio Access Network (NG RAN) device, a base station (gNB) in the NR system, or a wireless controller in a Cloud Radio Access Network (CRAN). The network device may further be a relay station, an access point, a vehicle-mounted device, a wearable device, a hub, a switch, a network bridge, a router, a network device in a future evolved Public Land Mobile Network (PLMN) or the like.

The terminal device 110 may be any terminal device, which includes, but not limited to, a terminal device that has a wired or wireless connection to the network device 120 or other terminal devices.

For example, the terminal device 110 may be an access terminal, a UE, a user unit, a user station, a mobile station, a mobile platform, a remote station, a remote terminal, a mobile device, a user terminal, a terminal, a wireless communication device, a user agent, or user apparatus. The access terminal may be a cellular phone, a cordless phone, a Session Initiation Protocol (SIP) phone, an IoT device, a satellite handheld terminal, a Wireless Local Loop (WLL) station, a Personal Digital Assistant (PDA), a handheld device with a wireless communication function, a computing device, another processing device connected to a wireless modem, a vehicle-mounted device, a wearable device, a terminal device in a 5G network, a terminal device in a future evolved network, or the like.

The terminal device 110 may be applied to Device to Device (D2D) communication.

FIG. 1 exemplarily illustrates one network device and two terminal devices. It is to be understood that, the communication system 100 may include multiple network devices, and another number of terminal devices may be included in the coverage of each network device, which is not limited in the embodiments of the present disclosure.

It is to be noted that FIG. 1 only illustrates systems to which the present disclosure is applied by way of examples, and the methods in the embodiments of the present disclosure may also be applied to other systems. In addition, the terms "system" and "network" are often used interchangeably herein.

It is to be understood that the term "and/or" in the present disclosure is only an association relationship describing associated objects and represents that three relationships may exist. For example, A and/or B may represent three conditions: i.e., independent existence of A, existence of both A and B and independent existence of B. In addition, the character "/" in the present disclosure generally indicates that the relationship between the related objects is "or".

It is further to be understood that the "indication" mentioned in the embodiments of the present disclosure may be a direct indication, may be an indirect indication, or may be indicative of an association. For example, A indicates B, which may mean that A directly indicates B, for example, B may be obtained through A; it may also mean that A indirectly indicates B, for example, A indicates C, and B may be obtained by C; and it may also indicate that there is an association between A and B.

It is further to be understood that the term "correspond" mentioned in the description of the embodiments of the present disclosure may mean that there is a direct correspondence or an indirect correspondence between the two, may also mean that there is an association relationship between the two, and may also be a relationship between indication and being indicated, configuration and being configured, etc.

It is further to be understood that the term "predefined" or "predefined rule" mentioned in the embodiments of the present disclosure may be achieved by pre-storing corresponding codes, tables or other means used for indicating relevant information in devices (e.g., including the terminal devices and the network devices), and the specific implementation thereof is not limited in the present disclosure. For example, predefined may refer to what is defined in the protocol. It is further to be understood that in the embodiments of the present disclosure, the "protocol" may be a standard protocol in the communication field. For example, the protocol may include an LTE protocol, a NR protocol, and related protocols applied in future communication systems, which are not limited in the present disclosure.

In order to facilitate understanding of the technical solutions of the embodiments of the present disclosure, related technologies of the embodiments of the present disclosure are described below. The following related technologies used as optional solutions may be combined with technical solution of the embodiments of the present disclosure in various ways, and the combinations belong to the scope of protection of the embodiments of the present disclosure.

In the related art, a basic workflow of a wireless communication system may include the following operations.

At the transmitting end, the bitstream information to be transmitted is subjected to the channel encoding, to obtain the encoded bit information. The modulation is performed on the encoded bit information to obtain a modulation symbol. The modulation symbol and a Demodulation Reference Signal (DMRS) are inserted into corresponding time-frequency resources, and then subsequently processed to obtain an Orthogonal Frequency Division Multiplexing (OFDM) symbol, or a Single-Carrier-Frequency Division Multiple Access (SC-FDMA) symbol, or a multi-carrier symbol in another form.

It is to be understood that the above flow takes the OFDM system and the SC-FDMA system as examples, and may also be applied to other systems, which is not limited in the embodiments of the present disclosure.

Exemplarily, in the process of performing the modulation on the encoded bit to obtain the modulation symbol, one or more of followings may be used: Binary Phase Shift Keying (BPSK) modulation, Quadrature Phase Shift Keying (QPSK) modulation, 16 Quadrature Amplitude Modulation (QAM), 64 QAM, 256 QAM, 512 QAM, 1024 QAM, 2048 QAM, and 4096 QAM.

Exemplarily, the modulation symbol and the DMRS signal are inserted into corresponding Resource Elements (REs).

At the receiving end, through measuring the channel estimation of the DMRS signal, demodulating the modulation symbol and performing channel decoding, the receiver may obtain the bit information transmitted by the transmitting end.

It is to be understood that the aforementioned operations may be combined to perform the iteration, and the aforementioned sequence may not necessarily be strictly performed. For example, the information obtained by decoding may be used for the channel estimation and/or for the demodulation of the modulation symbol.

It is to be noted that the basic workflow of the wireless communication system is similar for the Downlink (DL) transmission, the Uplink (UL) Transmission, or the Sidelink (SL) transmission.

Exemplarily, the downlink transmission may be the transmission from the network device to the terminal device, the uplink transmission may be the transmission from the terminal device to the network device, and the sidelink transmission may be the transmission between a terminal device and another terminal device.

It is further to be noted that the receiving end needs to use the DMRS signal in order to obtain the bit information transmitted by the transmitting end.

Due to the complexity and time-varying natures of the wireless channel environment, the estimation and recovery for the wireless channel by the receiver directly affects the final data recovery performance. In the traditional communication system, for the control channel (i.e., the channel for the transmission of the control information), the DMRS signal is relatively constant. That is to say, the density and/or the pattern of the DMRS signal are not required to change dynamically. In this case, the design of the DMRS signal may be more conservative, so as to adapt to various environments of the wireless channel. In the wireless communication system, for a data channel (i.e., a channel for the transmission of the data), in order to reduce the overhead of the DMRS signal, different densities and/or patterns of the DMRS signal are often designed, so that the DMRS signal can be configured or indicated according to the current environment of the wireless channel.

Hereinafter, a brief introduction is made by taking the data DMRS signal in the NR communication system as an example.

In the NR communication system, the DMRS signal may be classified into a front-loaded DMRS signal and a post-loaded DMRS signal (which may also be referred to as an additional DMRS signal).

Exemplarily, for the UE with high vehicle speed, in order to improve the channel estimation performance, a part of DMRS signal is added into the front-loaded DMRS signal. For example, the UE with the high vehicle speed may send the additional DMRS signal at a certain location in the post part of the allocated time-domain resources, so as to obtain the post-loaded DMRS signal.

It is to be noted that the front-loaded DMRS signal is usually located at the first few OFDM symbols of the slot, and the pattern of the post-loaded DMRS signal is a repetition of the front-loaded DMRS signal (for example, using the same frequency-domain resources, or for example, using the same number of OFDM symbols), to ensure performance in the high-speed scenario. The front-loaded DMRS signal may include 1 or 2 OFDM symbols, which is configured by the network device.

It is further to be noted that two different types of DMRS signals, namely Type 1 and Type 2, may be supported in the NR. Different types of DMRS signals have different resource occupancy manners. Hereinafter, two different types of DMRS signals are illustrated with reference to FIG. 2A to FIG. 3B by taking one small grid representing one RE, 12 sub-carriers in the frequency-domain resource as one Resource Block (RB), and 7 symbols in the time-domain resource as an example.

As shown in FIG. 2A and FIG. 2B, two Code Division Multiplexing (CDM) groups may be supported on one symbol (e.g., the OFDM symbol) of each Physical Resource Block (PRB), and each CDM group includes 6 sub-carriers. The first CDM group is carried through the first type of RE, and the second CDM group is carried by the second type of RE. Each CDM group may support two ports, and orthogonality is kept between the two ports through an Orthogonal Cover Code (OCC). That is to say, the OCC code used by one port is [+1 +1 +1 +1 +1 +1], and the OCC code used by the other port is [+1 -1 +1 -1 +1 -1].

Exemplarily, as shown in FIG. 2A, up to 4 orthogonal ports may be supported on one symbol.

Exemplarily, as shown in FIG. 2B, up to 8 orthogonal ports may be supported on two symbols, and a Time Domain Orthogonal Cover Code (TD-OCC) may be adopted between the two symbols. For example, the first CDM group of the first symbol includes ports {1000, 1001}, and the second CDM group of the first symbol includes ports {1002, 1003}. The first CDM group of the second symbol includes ports {1004, 1005}, and the second CDM group of the second symbol includes ports {1006, 1007}.

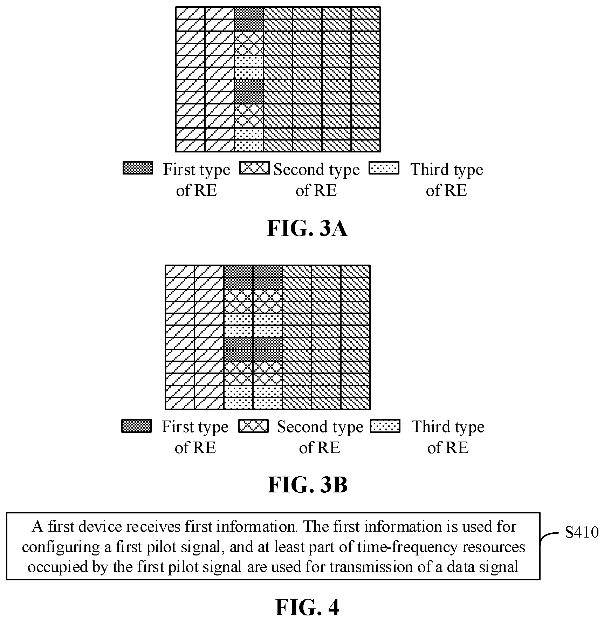

As shown in FIG. 3A and FIG. 3B, three CDM groups may be supported on one symbol of each PRB, and each CDM group includes 4 sub-carriers adjacent in pairs. The first CDM group is carried through the first type of RE, the second CDM group is carried through the second type of RE, and the third CDM group is carried through the third type of RE. Each CDM group may support two ports, and orthogonality is kept between the two ports through the OCC. That is to say, the OCC code used by one port is [+1 +1 +1 +1], and the OCC code used by the other port is [+1 -1 +1 -1].

Exemplarily, as shown in FIG. 3A, up to 6 orthogonal ports may be supported on one symbol.

Exemplarily, as shown in FIG. 3B, up to 12 orthogonal ports may be supported on two symbols, and the TD-OCC may be adopted between the two symbols. For example, the first CDM group of the first symbol includes ports {1000, 1001}, and the second CDM group of the first symbol includes ports {1002, 1003}, the third CDM group of the first symbol includes ports {1004, 1005}. The first CDM group of the second symbol includes ports {1006, 1007}, the second CDM group of the second symbol includes ports {1008, 1009}, and the third CDM group of the second symbol includes ports {1010, 1011}.

In the embodiments of the present disclosure, the RE, the RB, and the symbol are mentioned many times, and the RE, RB, and the symbol are briefly described below.

The RE is the smallest time-frequency resource unit in the wireless communication system. For example, in the NR or LTE system, the frequency domain of one RE corresponds to one sub-carrier, and the time domain of one RE corresponds to one symbol.

The RB may be K consecutive sub-carriers for the frequency domain. In addition, in some systems, the RB may also be K consecutive sub-carriers for the frequency domain and M consecutive symbols for the time domain.

Exemplarily, the value of K may be one or more of 8, 12 or 16, or may be other values, which is not limited in the embodiments of the present disclosure.

Exemplarily, the value of M may be one or more of 6, 7, 13 or 14, or may be other values, which is not limited in the embodiments of the present disclosure.

It is to be noted that, in the embodiments of the present disclosure, no distinction is made between the RB and the PRB, and the RB and PRB in the embodiments of the present disclosure are collectively referred to as the PRB.

For the symbol, the symbol in the embodiments of the present disclosure may be the OFDM symbol, the SC-FDMA symbol, or the multi-carrier symbol in another form, which is not limited in the embodiments of the present disclosure.

It is to be noted that, the SC-FDMA symbol may also be referred to as a Discrete Fourier Transform-Spread Orthogonal Frequency Division Multiplexing (DFT-SOFDM) symbol. Alternatively, the SC-FDMA symbol may also be referred to as a multi-carrier symbol using a transform precoder. Alternatively, the SC-FDMA may also be referred to as an OFDM symbol using a transform precoder.

In the related art, the pilot signal and the data signal occupy different time-frequency resources, the pilot signal and the data signal are placed orthogonally on the time-frequency resources, and the pilot signal does not overlap with the data signal on the time-frequency resources. That is to say, the pilot signal or the data signal may be placed on one time-frequency resource, but the pilot signal and the data signal cannot both be placed on one time-frequency resource. However, in the case where the total time-frequency resources are constant, when the terminal device has a high moving speed, in order to improve the channel estimation performance, it is often necessary that the pilot signal occupies more time-frequency resources, which results in the reduction of the time-frequency resources occupied by the data signal, thereby reducing the transmission rate and transmission reliability of the data signal.

Based on this, the embodiments of the present disclosure provide a communication method. The first device may receive the first information. The first information is used for configuring the first pilot signal, and the at least part of time-frequency resources occupied by the first pilot signal are used for transmission of a data signal. In this way, after the first device receives the first signal, the first device may know that the first pilot signal to be configured and the data signal occupy the same at least part of time-frequency resources. In this way, in the case where the first pilot signal occupies more time-frequency resources, the at least part of the time-frequency resources occupied by the first pilot signal may also be occupied by the data signal, thereby increasing the time-frequency resources occupied by the data signal, and improving the transmission rate and transmission reliability of the data signal.

It is to be noted that, in a Code Division Multiple Access (CDMA) system, although the transmission of the pilot signal and the data signal may be performed on the same time-frequency resources, both the pilot signal and the data signal are required to be subjected to additional spread spectrum processing. For example, the pilot signal and the data signal are required to use different orthogonal codes for distinguishing. The embodiments of the present disclosure are mainly applied to the OFDM system/SC-FDMA system and other systems based on multiple sub-carriers. The transmission of the modulation symbol (for example, the QPSK, and for another example, the 16QAM) of the data signal and modulation symbol of the demodulated pilot signal may be directly performed on the same time-frequency resources, and the pilot signal and data signal are not required to be subjected to the additional spread spectrum processing.

In order to facilitate understanding of the technical solutions of the embodiments of the present disclosure, the technical solutions of the present disclosure will be described in detail below through specific embodiments. The above related technologies used as optional solutions may be combined with technical solution of the embodiments of the present disclosure in various ways, and the combinations belong to the scope of protection of the embodiments of the present disclosure. Embodiments of the present disclosure include at least some of the following content.

FIG. 4 is a schematic flowchart of a communication method according to an embodiment of the present disclosure. As shown in FIG. 4, the method may include an operation S410.

In operation S410, a first device receives first information. The first information is used for configuring a first pilot signal, and at least part of time-frequency resources occupied by the first pilot signal are used for transmission of a data signal.

Correspondingly, a second device may send the first information to the first device.

It is to be noted that, in the embodiments of the present disclosure, the first device may be a first terminal device; and the second device may be a second terminal device or a network device, which is not limited in the embodiments of the present disclosure.

Exemplarily, in the embodiments of the present disclosure, the pilot signal may be the DMRS signal, a Channel State Information Reference Signal (CSI-RS), a Phase Tracking Reference Signal (PT-RS), or the like, which is not limited in the embodiments of the present disclosure.

It is to be noted that, unless otherwise specified (for example, a data channel is specifically specified), the data signal mentioned in the embodiments of the present disclosure may be the data to be transmitted (for example, data transferred from an upper layer to a physical layer, data of a service, etc.), or may be the control information (for example, physical layer downlink control information, physical layer uplink control information, etc.), which is not limited in the embodiments of the present disclosure.

Exemplarily, the transmission of the data signal may be performed through one or more of the following channels: a Physical Downlink Shared Channel (PDSCH), a Physical Uplink Shared Channel (PUSCH), a Physical Sidelink Shared Channel (PSSCH), a Physical Downlink Control Channel (PDCCH), a Physical Uplink Control Channel (PUCCH), a Physical Sidelink Control Channel (PSCCH), a Physical Sidelink Feedback Channel (PSFCH), or the like, which are not limited in the embodiments of the present disclosure.

It is to be noted that the at least part of time-frequency resources may be one time-frequency resource, may be multiple time-frequency resources (not all of the time-frequency resources), or may be all of the time-frequency resources, which is not limited in the embodiments of the present disclosure.

It is further to be noted that the at least part of time-frequency resources occupied by the first pilot signal being used for the transmission of a data signal may be understood as: one or more or all of the time-frequency resources occupied by the first pilot signal are time-frequency resources occupied by the data signal, i.e., one or more or all of the time-frequency resources occupied by the first pilot signal are also used for the transmission of the data signal. In order to simplify the description, the at least part of time-frequency resources may be referred to as shared time-frequency resources.

It is further to be noted that the at least part of time-frequency resources occupied by the first pilot signal being used for transmission of a data signal may be understood as: at least part of time-frequency resources occupied by the data signal are used for the transmission of the first pilot signal.

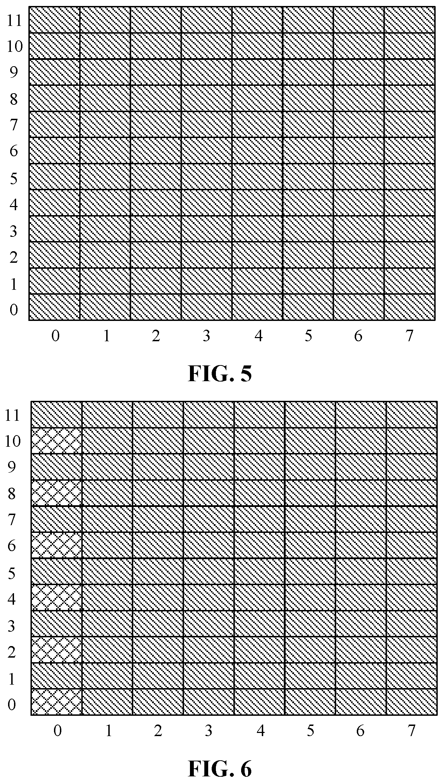

Exemplarily, the PDSCH transmission is taken as an example, it is assumed that 8 symbols scheduled by the network device on time-domain resources and 12 sub-carriers (i.e. 96 REs) on frequency-domain resources are used for the transmission of the data signal. As shown in FIG. 5, all REs may be used for the transmission of the first pilot signal and the data signal. As shown in FIG. 6, REs corresponding to the 0th, 2nd, 4th, 6th, 8th and 10th sub-carriers on the 0th symbol may be used for the transmission of the first pilot signal and the data signal, and other REs may be used for the transmission of the data signal. It is to be understood that in the embodiments of the present disclosure, the REs may be used for the transmission of the first pilot signal and the data signal. That is to say, the REs occupied by the first pilot signal may simultaneously be used for the transmission of the data signal.

In some embodiments, the first information is configured for one or more of following objects:
a cell;
a carrier;
a Bandwidth Part (BWP);
a PDSCH;
a PDCCH;
a PUSCH;
a PUCCH;
a PSSCH;
a PSCCH; or
a PSFCH.

Furthermore, the first information may be information in configuration information of one cell; or
the first information is information in configuration information of one carrier; or
the first information is information in configuration information of one BWP; or
the first information is information in configuration information of one PDSCH; or
the first information is information in configuration information of one PDCCH; or
the first information is information in configuration information of one PUSCH; or
the first information is information in configuration information of one PUCCH; or
the first information is information in configuration information of one PSSCH; or
the first information is information in configuration information of one PSCCH; or
the first information is information in configuration information of one PSFCH.

According to this method, by configuring the first information based on the aforementioned one or more objects, different configuration granularities may be obtained, thereby meeting different flexibilities.

In some embodiments, the first device may receive or send the corresponding data signal according to the first information.

It is to be noted that when the first device receives the corresponding data signal according to the first information, the first device may determine the first pilot signal according to the first information and receive the corresponding data signal. When the first device sends the corresponding data signal according to the first information, the first device may determine the first pilot signal according to the first information and sends the corresponding data signal.

It is further to be noted that, for sending the uplink data signal and the reception of the downlink data signal, the first device may receive two pieces of first information. One piece of the first information corresponds to sending the uplink data signal and the other piece of the first information corresponds to the reception of the downlink data signal.

Furthermore, the number of the first information may be expanded to multiple pieces, so that multiple times of sending uplink data signal and/or the reception of downlink data signal may be performed, or, sending different uplink signals/channels and/or receptions of different downlink signals/channels may be performed.

In some embodiments, the second device may send second information to the first device. The second information is used for configuring a second pilot signal, and time-frequency resources occupied by the second pilot signal are not used for transmission of the data signal, i.e., the REs used by the second pilot signal cannot be used for the transmission of the corresponding data signal.

Correspondingly, the first device may receive the second information.

It is to be noted that the time-frequency resources occupied by the second pilot signal being not used for the transmission of the data signal may be understood as: the time-frequency resources occupied by the second pilot signal are different from the time-frequency resources occupied by the data signal. That is to say, there is no shared time-frequency resources between the time-frequency resources occupied by the second pilot signal and the time-frequency resources occupied by the data signal, and the time-frequency resources occupied by the second pilot signal are orthogonal to the time-frequency resources occupied by the data signal.

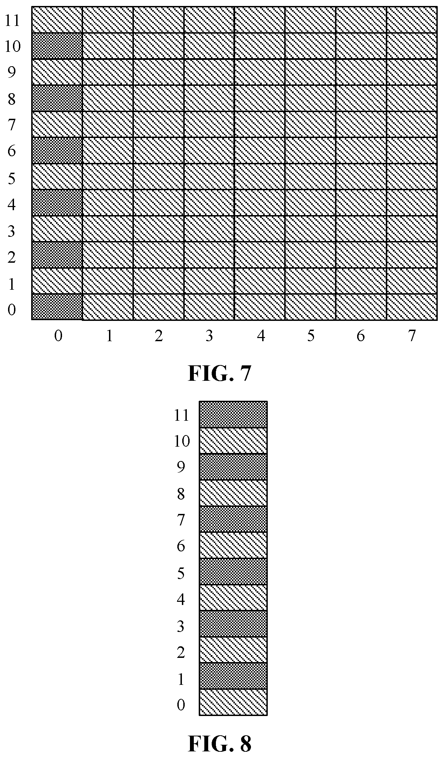

Exemplarily, as shown in FIG. 7, REs corresponding to the 0th, 2nd, 4th, 6th, 8th and 10th sub-carriers on the 0th symbol may be used for the transmission of the second pilot signal, and other REs may be used for the transmission of the data signal.

In some embodiments, the first information and/or the second information are carried through a first signaling. The first signaling includes one or more of:
a broadcast message;
a system message;
Radio Resource Control (RRC) signaling;
Media Access Control Control Element (MAC CE) signaling;
Downlink control information (DCI);
a random access message; or
a dedicated signaling.

Furthermore, first information and the second information being carried through the first signaling may include: the first information and the second information may be carried through the first signaling in different times. For example, in a certain configuration, the first signaling may carry the first information; and in another configuration, the first signaling may carry the second information.

Exemplarily, the broadcast message may be a Master Information Block (MIB) message.

Exemplarily, the system message may be a System Information Block Type1 (SIB1), a System Information Block (SIB), or the like, which is not limited in the embodiments of the present disclosure.

Exemplarily, the random access message may be a downlink message in the random access procedure. For example, the random access message may be a Message (Msg) B, Msg2, Msg4, or the like, which is not limited in the embodiments of the present disclosure.

Exemplarily, the dedicated signaling may be Artificial Intelligence (AI)/Machine Learning (ML) dedicated signaling, or the like, which is not limited in the embodiments of the present disclosure.

It is to be noted that the first information and/or the second information may be carried through the first signaling obtained by the same type of signaling. For example, the first information and/or the second information may be carried through one RRC signaling. In the case where both the first information and the second information are carried through one RRC signaling, different information contents carried by one RRC signaling may respectively correspond to the first information and the second information.

Furthermore, the first information and/or the second information may be carried through the first signaling obtained by combining multiple pieces of signaling with the same types. For example, the first signaling may correspond to multiple pieces of MAC CE signaling, and the first information and the second information may be carried through different pieces of the MAC CE signaling. For another example, a part of the first information may be carried through one piece of the MAC CE signaling, and the other part of the information may be carried through the other piece of the MAC CE signaling. For another example, a part of the second information may be carried through one piece of the RRC signaling, and the other part of the second information may be carried through another piece of the RRC signaling.

It is to be noted that the first information and/or the second information may be carried through the first signaling obtained by signaling with the different types. For example, a part of the first information may be carried through a broadcast message, and the other part of the information may be carried through the DCI. For another example, a part of the second information may be carried through a system message, and the other part of the information may be carried through a random access message. For another example, the first information may be carried through the RRC signaling, and the second information may be carried through the DCI.

In some embodiments, the first signaling may include first indication information. The first indication information is used for indicating that the first signaling carries the first information and/or the second information.

Exemplarily, different values of the first indication information may be used for indicating that the first signaling carries the first information and/or the second information. For example, the first indication information occupying 2 bits is taken as an example, in a case where the value of the first indication information is "01", the first indication information indicates that the first signaling carries the first information; in a case where the value of the first indication information is "10", the first indication information indicates that the first signaling carries the second information; in a case where the value of the first indication information is "11", the first indication information indicates that the first signaling carries the first information and the second information.

In other embodiments, the first signaling may include a first information field and a second information field. The first information field is used for carrying the first information and the second information field is used for carrying the second information.

It is to be noted that the first signaling may be based on a CHOICE structure, and by configuring different information fields (for example, the first information field, and for another example, the second information field), information carried by each of the different information fields may be determined (for example, the first information field carries the first information, and for another example, the second information field carries the second information).

In the embodiments of the present disclosure, in the case where the at least part of time-frequency resources occupied by the first pilot signal are used for the transmission of the data signal, the first device may demodulate the data signal by using the receiver.

Exemplarily, the receiver may be an iterative receiver, an AI/ML receiver, or the like, which is not limited in the embodiments of the present disclosure.

It is to be noted that the receiver may adopt various algorithms, such as, the deep learning. Exemplarily, the receiver may adopt one or a combination of the following architectures: a Fully Convolutional Network (FCN), a Convolutional Neural Network (CNN), a Recurrent Neural Network (RNN), and a Transformer neural network.

It is to be understood that the premise of using the receiver to demodulate the data signal is that the first device needs to know the corresponding configuration of the first pilot signal, otherwise the adaptation between the receiver and the actual received data signal may be caused, thereby resulting in performance degradation. Based on this, the first device may receive the first information, so as to know the corresponding configuration of the first pilot signal based on the first information. Furthermore, the first device may know the corresponding configuration of the first pilot signal through one or more of the following manners indicated by the first information.

In a manner #A, the first information may indicate a power parameter of the first pilot signal.

It is to be noted that the "power" mentioned in the embodiments of the present disclosure may be directly expanded to "energy".

Through this method, after receiving the first information, the first device is able to flexibly indicate the power allocation for the first pilot signal, so that the system can optimize the transmission power of the first pilot signal according to the wireless environment, thereby improving the system performance.

In some embodiments, the power parameter of the first pilot signal may include one or more of:
a ratio of a power for sending the first pilot signal on a first time-frequency resource to a total power on a second time-frequency resource;
a ratio of a power for sending the data signal on the first time-frequency resource to the total power on the second time-frequency resource;
a ratio of the power for sending the first pilot signal on the first time-frequency resource to the power for sending the data signal on the first time-frequency resource; or
a ratio of the power for sending the data signal on the first time-frequency resource to the power for sending the first pilot signal on the first time-frequency resource,
Based on this, following possible implementations of the power parameter of the first pilot signal may exist.

In one possible implementation, the power parameter of the first pilot signal may be the ratio of the power for sending the first pilot signal on the first time-frequency resource to the total power on the second time-frequency resource.

Herein, the first time-frequency resource is any one of the at least part of time-frequency resources.

It is to be noted that in the case where the first time-frequency resource is any one of the at least part of time-frequency resources, the first time-frequency resource may be considered to be a shared time-frequency resource.

It is further to be noted that the total power on the second time-frequency resource may be a sum of the power for sending the first pilot signal on the second time-frequency resource and the power for sending the data signal on the second time-frequency resource.

It is further to be noted that the second time-frequency resource may be any one of the at least part of time-frequency resources. In this case, the second time-frequency resource may be considered to be a shared time-frequency resource. Alternatively, the second time-frequency resource may not be any one of the at least part of time-frequency resources, in other words, the second time-frequency resource may be any one of time-frequency resources other than the at least part of time-frequency resources. In this case, the second time-frequency resource may not be considered to be a shared time-frequency resource.

In some embodiments, the second time-frequency resource may be any one of the at least part of time-frequency resources.

Furthermore, in the case where the second time-frequency resource is any one of the at least part of time-frequency resources, the second time-frequency resource and the first time-frequency resource may be the same time-frequency resource or may not be the same time-frequency resource, which is not limited in the embodiment of the present.

Exemplarily, as shown in FIG. 5, the power parameter of the first pilot signal may be the ratio of the power for sending the first pilot signal on any one RE to the total power on the any one RE. In this case, the any one RE is the shared RE. For example, the total power on one of REs is 1 and the power for sending the first pilot signal on the RE is 0.2, the ratio of the power for sending the first pilot signal on one of REs to the total power on the RE is 0.2. When the ratio of 0.2 is converted into a value in the unit of dB, the ratio of the power for sending the first pilot signal on one of REs to the total power on the RE is -7 dB. For another example, the total power on one of REs is 1 and the power for sending the first pilot signal on another RE is 0.3, the ratio of the power for sending the first pilot signal on the another RE to the total power on the one of REs is 0.3. When the ratio of 0.3 is converted into a value in the unit of dB, the ratio of the power for sending the first pilot signal on the another RE to the total power on the one of REs is -5 dB.

Exemplarily, as shown in FIG. 6, the power parameter of the first pilot signal may be a ratio of the power for sending the first pilot signal on any one of REs corresponding to the 0th, 2nd, 4th, 6th, 8th and 10th sub-carriers on the 0th symbol to the total power on any one of REs corresponding to the 0th, 2nd, 4th, 6th, 8th and 10th sub-carriers on the 0th symbol. In this case, the any one of REs corresponding to the 0th, 2nd, 4th, 6th, 8th and 10th sub-carriers on the 0th symbol is a shared RE, and other REs are not shared REs.

In other embodiments, the second time-frequency resource may be any one of time-frequency resources other than the at least part of time-frequency resources.

Exemplarily, as shown in FIG. 6, the power parameter of the first pilot signal may be a ratio of the power for sending the first pilot signal on any one of REs corresponding to the 0th, 2nd, 4th, 6th, 8th and 10th sub-carriers on the 0th symbol to the total power on any one of other REs. In this case, the any one of REs corresponding to the 0th, 2nd, 4th, 6th, 8th and 10th sub-carriers on the 0th symbol is a shared RE, and the any one of other REs is not a shared RE. For example, the total power on one of other REs is 1, and the power for sending the first pilot signal on one of the REs corresponding to the 0th, 2nd, 4th, 6th, 8th and 10th sub-carriers on the 0th symbol is 0.5, then the ratio of the power for sending the first pilot signal on one of the REs corresponding to the 0th, 2nd, 4th, 6th, 8th and 10th sub-carriers on the 0th symbol to the total power on one of other REs is 0.5. When the ratio of 0.5 is converted into a value in the unit of dB, then the ratio of the power for sending the first pilot signal on one of the REs corresponding to the 0th, 2nd, 4th, 6th, 8th and 10th sub-carriers on the 0th symbol to the total power on one of other REs is -3 dB.

Exemplarily, in a case where the ratio is a linear value, the candidate value of the ratio may be one or more of the following values: {0.01, 0.02, 0.03, 0.04, 0.05, 0.06, 0.07, 0.08, 0.09, 0.10, 0.15, 0.20, 0.25, 0.3, 0.35, 0.4, 0.45, 0.5, 0.55, 0.6, 0.65, 0.7, 0.75, 0.8, 0.85, 0.9}.

Exemplarily, in a case where the ratio is a value in the unit of dB, the candidate value of the ratio may be one or more of the following values: {-1 dB, -2 dB,-3 dB, -4 dB, -5 dB, -6 dB, -7 dB, -8 dB, -9 dB, -10 dB, -11 dB, -12 dB, -13 dB, -14 dB, -15 dB, -16 dB, -17 dB, -18 dB, -19 dB, -20 dB}.

It is to be noted that the power parameter of the first pilot signal may also be a ratio of the total power on the second time-frequency resource to the power for sending the first pilot signal on the first time-frequency resource.

Furthermore, for the power parameter of the first pilot signal being the ratio of the total power on the second time-frequency resource to the power for sending the first pilot signal on the first time-frequency resource, and for the power parameter of the first pilot signal being the ratio of the power for sending the first pilot signal on the first time-frequency resource to the total power on the second time-frequency resource: in the case where the two ratios are linear values, candidate values of the two ratios are reciprocal to each other; and in the case where the two ratios are values in the unit of dB, the candidate values of the two ratios are opposite numbers to each other.

It is to be noted that in the case where the ratio is the linear value, the indication of the first information can be simplified.

It is further to be noted that in the case where the ratio is the value in the unit of dB, the first information can indicate a finer power difference.

Through this method, the first information can directly indicate the proportion of the total power (for example, the first information indicates the ratio of the power for sending the first pilot signal on the first time-frequency resource to the total power on the second time-frequency resource), thereby simplifying the calculation of the power parameter of the first pilot signal.

In another possible implementation, the power parameter of the first pilot signal may be the ratio of the power for sending the data signal on the first time-frequency resource to the total power on the second time-frequency resource.

Herein, the first time-frequency resource is any one of the at least part time-frequency resources.

It is to be noted that in the case where the first time-frequency resource is any one of the at least part of time-frequency resources, the first time-frequency resource may be considered to be a shared time-frequency resource.

It is further to be noted that the total power on the second time-frequency resource may be a sum of the power for sending the first pilot signal on the second time-frequency resource and the power for sending the data signal on the second time-frequency resource.

It is further to be noted that the second time-frequency resource may be any one of the at least part of time-frequency resources. In this case, the second time-frequency resource may be considered to be a shared time-frequency resource. Alternatively, the second time-frequency resource may not be any one of the at least part of time-frequency resources, in other words, the second time-frequency resource may be any one of time-frequency resources other than the at least part of time-frequency resources. In this case, the second time-frequency resource may not be considered to be a shared time-frequency resource.

In some embodiments, the second time-frequency resource may be any one of the at least part of time-frequency resources.

Furthermore, in the case where the second time-frequency resource is any one of the at least part of time-frequency resources, the second time-frequency resource and the first time-frequency resource may be the same time-frequency resource or may not be the same time-frequency resource, which is not limited in the embodiment of the present.

Exemplarily, as shown in FIG. 5, the power parameter of the first pilot signal may be the ratio of the power for sending the data signal on any one RE to the total power on the any one RE. In this case, the any one RE is a shared RE. For example, the total power on one of REs is 1 and the power for sending the data signal on the RE is 0.8, the ratio of the power for sending the data signal on one of REs to the total power on the RE is 0.8. When the ratio of 0.8 is converted into a value in the unit of dB, the ratio of the power for sending the data signal on one of REs to the total power on the RE is -1 dB. For another example, the total power on one of REs is 1 and the power for sending the data signal on another RE is 0.7, the ratio of the power for sending the data signal on the another RE to the total power on the one of REs is 0.7. When the ratio of 0.7 is converted into a value in the unit of dB, the ratio of the power for sending the data signal on the another RE to the total power on the one of REs is -2 dB.

Exemplarily, as shown in FIG. 6, the power parameter of the first pilot signal may be a ratio of the power for sending the data signal on any one of REs corresponding to the 0th, 2nd, 4th, 6th, 8th and 10th sub-carriers on the 0th symbol to the total power on any one of REs corresponding to the 0th, 2nd, 4th, 6th, 8th and 10th sub-carriers on the 0th symbol. In this case, the any one of REs corresponding to the 0th, 2nd, 4th, 6th, 8th and 10th sub-carriers on the 0th symbol is a shared RE, and other REs are not shared REs.

In other embodiments, the second time-frequency resource may be any one of time-frequency resources other than the at least part of time-frequency resources.

Exemplarily, as shown in FIG. 6, the power parameter of the first pilot signal may be a ratio of the power for sending the data signal on any one of REs corresponding to the 0th, 2nd, 4th, 6th, 8th and 10th sub-carriers on the 0th symbol to the total power on any one of other REs. In this case, the any one of REs corresponding to the 0th, 2nd, 4th, 6th, 8th and 10th sub-carriers on the 0th symbol is a shared RE, and other REs are not shared REs. For example, the total power on one of other REs is 1, and the power for sending the data signal on one of the REs corresponding to the 0th, 2nd, 4th, 6th, 8th and 10th sub-carriers on the 0th symbol is 0.5, then the ratio of the power for sending the data signal on one of the REs corresponding to the 0th, 2nd, 4th, 6th, 8th and 10th sub-carriers on the 0th symbol to the total power on one of other REs is 0.5. When the ratio of 0.5 is converted into a value in the unit of dB, then the ratio of the power for sending the data signal on one of the REs corresponding to the 0th, 2nd, 4th, 6th, 8th and 10th sub-carriers on the 0th symbol to the total power on one of other REs is -3 dB.

It is to be noted that, in the case where the ratio is the linear value or the value in the unit of dB, the candidate value of the ratio can be understood with reference to the description in the aforementioned embodiments. For brevity, details are not elaborated herein again.

It is further to be noted that the power parameter of the first pilot signal may also be a ratio of the total power on the second time-frequency resource to the power for sending the data signal on the first time-frequency resource.

Furthermore, for the power parameter of the first pilot signal being the ratio of the total power on the second time-frequency resource to the power for sending the data signal on the first time-frequency resource, and for the power parameter of the first pilot signal being the ratio of the power for sending the data signal on the first time-frequency resource to the total power on the second time-frequency resource: in the case where the two ratios are linear values, candidate values of the two ratios are reciprocal to each other; and in the case where the two ratios are value in the unit of dB, the candidate values of the two ratios are opposite numbers to each other.

It is to be noted that in the case where the ratio is the linear value, the indication of the first information can be simplified.

It is further to be noted that in the case where the ratio is the value in the unit of dB, the first information can indicate a finer power difference.

Through this method, the first information can directly indicate the proportion of the total power, thereby simplifying the calculation of the power parameter of the first pilot signal.

In another possible implementation, the power parameter of the first pilot signal may be the ratio of the power for sending the first pilot signal on the first time-frequency resource to the power for sending the data signal on the first time-frequency resource.

Herein, the first time-frequency resource is any one of the at least part time-frequency resources.

It is to be noted that in the case where the first time-frequency resource is any one of the at least part of time-frequency resources, the first time-frequency resource may be considered to be a shared time-frequency resource.

Exemplarily, as shown in FIG. 5, the power parameter of the first pilot signal may be the ratio of the power for sending the first pilot signal on any one RE to the power for sending the data signal on the RE. In this case, the any one RE is the shared RE. For example, the power for sending the first pilot signal on one of REs is 1, and the power for sending the data signal on the RE is 2, the ratio of the power for sending the first pilot signal on the one of REs to the power for sending the data signal on the RE is 0.5. When the ratio of 0.5 is converted into a value in the unit of dB, the ratio of the power for sending the first pilot signal on the one of REs to the power for sending the data signal on the RE is -3 dB.

Exemplarily, as shown in FIG. 6, the power parameter of the first pilot signal may be a ratio of the power for sending the first pilot signal on any one of REs corresponding to the 0th, 2nd, 4th, 6th, 8th and 10th sub-carriers on the 0th symbol to the power for sending the data signal on the RE. In this case, the any one of REs corresponding to the 0th, 2nd, 4th, 6th, 8th and 10th sub-carriers on the 0th symbol is a shared RE, and other REs are not shared REs.

It is to be noted that, in the case where the ratio is the linear value or the value in the unit of dB, the candidate value of the ratio can be understood with reference to the description in the aforementioned embodiments. For brevity, details are not elaborated herein again.

It is to be noted that in the case where the ratio is the linear value, the indication of the first information can be simplified.

It is further to be noted that in the case where the ratio is the value in the unit of dB, the first information can indicate a finer power difference.

Through this method, compared with the first information directly indicating the proportion of the total power, through the first information indicating the ratio of the power for sending the first pilot signal on the first time-frequency resource to the power for sending the data signal on the first time-frequency resource, it is possible to enable the dynamic value range of the power parameter of the first pilot signal to be smaller, thereby improving the granularity of the indication and reducing the overhead of the indication.

In another possible implementation, the power parameter of the first pilot signal may be the ratio of the power for sending the data signal on the first time-frequency resource to the power for sending the first pilot signal on the first time-frequency resource.

Herein, the first time-frequency resource is any one of the at least part time-frequency resources.

It is to be noted that in the case where the first time-frequency resource is any one of the at least part of time-frequency resources, the first time-frequency resource may be considered to be a shared time-frequency resource.

Exemplarily, as shown in FIG. 5, the power parameter of the first pilot signal may be the ratio of the power for sending the data signal on any one RE to the power for sending the first pilot signal on the RE. In this case, the any one RE is the shared RE. For example, the power for sending the data signal on one of REs is 2, and the power for sending the first pilot signal on the RE is 1, the ratio of the power for sending the data signal on the one of REs to the power for sending the first pilot signal on the RE is 2. When the ratio of 2 is converted into a value in the unit of dB, the ratio of the power for sending the data signal on the one of REs to the power for sending the first pilot signal on the RE is 3 dB.

Exemplarily, as shown in FIG. 6, the power parameter of the first pilot signal may be a ratio of the power for sending the data signal on any one of REs corresponding to the 0th, 2nd, 4th, 6th, 8th and 10th sub-carriers on the 0th symbol to the power for sending the first pilot signal on the RE. In this case, the any one of REs corresponding to the 0th, 2nd, 4th, 6th, 8th and 10th sub-carriers on the 0th symbol is a shared RE, and other REs are not shared REs.

It is to be noted that, in the case where the ratio is the linear value and the value in the unit of dB, the candidate value of the ratio can be understood with reference to the description in the aforementioned embodiments. For brevity, details are not elaborated herein again.

It is further to be noted that, for the power parameter of the first pilot signal being the ratio of the power for sending the data signal on the first time-frequency resource to the power for sending the first pilot signal on the first time-frequency resource, and for the power parameter of the first pilot signal being the ratio of the power for sending the first pilot signal on the first time-frequency resource to the power for sending the data signal on the first time-frequency resource: in the case where the two ratios are linear values, candidate values of the two ratios are reciprocal to each other; and in the case where the two ratios are values in the unit of dB, the candidate values of the two ratios are opposite numbers to each other (for example, a dB becomes -a dB).

It is to be noted that in the case where the ratio is the linear value, the indication of the first information can be simplified.

It is further to be noted that in the case where the ratio is the value in the unit of dB, the first information can indicate a finer power difference.

Through this method, compared with the first information directly indicating the proportion of the total power, through the first information indicating the ratio of the power for sending the data signal on the first time-frequency resource to the power for sending the first pilot signal on the first time-frequency resource, it is possible to enable the dynamic value range of the power parameter of the first pilot signal to be smaller, thereby improving the granularity of the indication and reducing the overhead of the indication.

In a manner #B, the first information may indicate the frequency-domain location of the time-frequency resources occupied by the first pilot signal.

Through this method, the first information indicates the frequency-domain location of the time-frequency resources occupied by the first pilot signal, so that the first device can flexibly change the frequency-domain location of the time-frequency resources occupied by the first pilot signal after receiving the first information, thereby facilitating multiplexing by multiple users and reducing pilot signal interference among multiple users.

In the embodiments of the present disclosure, following possible implementations of the frequency-domain location of the time-frequency resources occupied by the first pilot signal may exist.

In one possible implementation, the first information may indicate a frequency-domain density of the time-frequency resources occupied by the first pilot signal. The frequency-domain location of the time-frequency resources occupied by the first pilot signal may be determined according to the frequency-domain density of the time-frequency resources occupied by the first pilot signal.

In the embodiments of the present disclosure, the frequency-domain density of the time-frequency resources occupied by the first pilot signal may include: a frequency-domain RE density of the time-frequency resources occupied by the first pilot signal and/or a frequency-domain RB density of the time-frequency resources occupied by the first pilot signal.

In a case where the frequency-domain density of the time-frequency resources occupied by the first pilot signal is the RE density of the time-frequency resources occupied by the first pilot signal, the RE density of the time-frequency resources occupied by the first pilot signal may be the RE density of the time-frequency resources occupied by the first pilot signal within one RB range. The RE density of the time-frequency resources occupied by the first pilot signal within one RB range may be a first value. The first value has a mapping relationship with the number of REs of the time-frequency resources occupied by the first pilot signal within one RB range.

Furthermore, the mapping relationship may be a one-to-one mapping relationship or another mapping relationship, which is not limited in the embodiments of the present disclosure.

In some embodiments, in a case where the first value is less than or equal to 1, the number of REs of the time-frequency resources occupied by the first pilot signal within one RB range is a product of the first value and the total number of REs within the RB range.

Exemplarily, it is assumed that there are 12 REs (corresponding to 12 sub-carriers) within one RB range, and the RE density of the time-frequency resources occupied by the first pilot signal within the RB range is 1/2 (i.e., the first value is 1/2), it may be obtained that the number of REs of the time-frequency resources occupied by the first pilot signal within the RB range is 12*1/2=6.

Exemplarily, it is assumed that there are 12 REs (corresponding to 12 sub-carriers) within one RB range, and the RE density of the time-frequency resources occupied by the first pilot signal within the RB range is 1 (i.e., the first value is 1), it may be obtained that the number of REs of the time-frequency resources occupied by the first pilot signal within the RB range is 12.

In other embodiments, in a case where the first value is greater than 1, the number of REs of the time-frequency resources occupied by the first pilot signal within one RB range is equal to the first value.

Exemplarily, it is assumed that there are 12 REs (corresponding to 12 sub-carriers) within one RB range, and the RE density of the time-frequency resources occupied by the first pilot signal within the RB range is 6 (i.e., the first value is 6), it may be obtained that the number of REs of the time-frequency resources occupied by the first pilot signal within the RB range is 6.

Through the method, in the case where the frequency-domain density of the time-frequency resources occupied by the first pilot signal is the RE density of the time-frequency resources occupied by the first pilot signal, the first device can flexibly change the RE density of the time-frequency resources occupied by the first pilot signal according to the wireless environment after receiving the first information, so as to better match with the current channel and improve the system performance.

In a case where the frequency-domain density of the time-frequency resources occupied by the first pilot signal is the RB density of the time-frequency resources occupied by the first pilot signal, the RB density of the time-frequency resources occupied by the first pilot signal may be a second value. It is assumed that one RB of every X RBs is used for the transmission of the first pilot signal, the second value has a mapping relationship with the value of X, where X is a positive integer.

Furthermore, the mapping relationship may be a one-to-one mapping relationship or another mapping relationship, which is not limited in the embodiments of the present disclosure.

In some embodiments, in the case where the second value is less than or equal to 1, the value of X is reciprocal to the second value.

Exemplarily, it is assumed that the RB density of the time-frequency resources occupied by the first pilot signal is 0.5 (i.e., the second value is 0.5), the value of X is 1/0.5=2. That is to say, one RB of every two RBs is used for the transmission of the first pilot signal.

Exemplarily, it is assumed that the RB density of the time-frequency resources occupied by the first pilot signal is 1 (i.e., the second value is 1), the value of X is 1. That is to say, each RB is used for the transmission of the first pilot signal.

In other embodiments, in the case where the second value is greater than 1, the value of X is the second value.

Exemplarily, it is assumed that the RB density of the time-frequency resources occupied by the first pilot signal is 2 (i.e., the second value is 2), the value of X is 2. That is to say, one RB of every two RBs is used for the transmission of the first pilot signal.

It is to be noted that the at least part of REs in one RB of the time-frequency resources occupied by the first pilot signal are used for the transmission of the first pilot signal.

Furthermore, the at least part of REs may be one RE in one RB, multiple REs in one RB (not all of the REs in one RB), or all of the REs in one RB, which are not limited in the embodiment of the present disclosure.

Through the method, in the case where the frequency-domain density of the time-frequency resources occupied by the first pilot signal is the RB density of the time-frequency resources occupied by the first pilot signal, the first device can change the RB density of the time-frequency resources occupied by the first pilot signal with greater granularity according to the wireless environment after receiving the first information, which has better flexibility, is more conducive to the multiplexing by multiple users and reduces pilot signal interference among multiple users.

In another possible implementation, the first information may indicate a frequency-domain offset of the time-frequency resources occupied by the first pilot signal. The frequency-domain location of the time-frequency resources occupied by the first pilot signal may be determined according to the frequency-domain offset of the time-frequency resources occupied by the first pilot signal.

In the embodiments of the present disclosure, the frequency-domain offset of the time-frequency resources occupied by the first pilot signal may include: an RE offset of the time-frequency resources occupied by the first pilot signal and/or an RB offset of the time-frequency resources occupied by the first pilot signal.

In a case where the frequency-domain offset of the time-frequency resources occupied by the first pilot signal is the RE offset of the time-frequency resources occupied by the first pilot signal, according to the RE offset of the time-frequency resources occupied by the first pilot signal and the number of REs of the time-frequency resources occupied by the first pilot signal within one RB range, REs of the time-frequency resources occupied by the first pilot signal within one RB range may be obtained.

Exemplarily, it is assumed that there are 12 REs (corresponding to 12 sub-carriers) within one RB range, the RE offset of the time-frequency resources occupied by the first pilot signal is offset_RE, and the number of REs of the time-frequency resources occupied by the first pilot signal within the RB range is Y, then the identifiers (or referred to as locations, which is similarly used in other embodiments and is not repeated) of the REs of the time-frequency resources occupied by the first pilot signal within the RB range are: offset_RE, offset_RE+12/Y, offset_RE+2*12/Y, and so on, where Y is a positive integer.

For example, as shown in FIG. 8, it is assumed there are 12 REs (corresponding to 12 sub-carriers) within one RB range, taking Y=6 and offset_RE=0 as an example, the identifiers of the REs of the time-frequency resources occupied by the first pilot signal within the RB range are: 0, 2, 4, 6, 8 and 10, respectively.

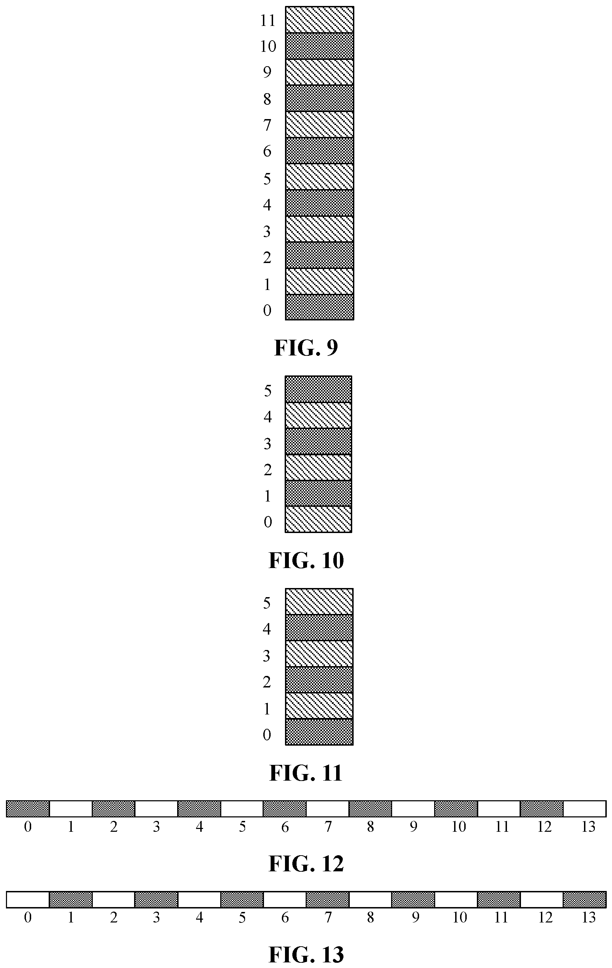

For another example, as shown in FIG. 9, it is assumed there are 12 REs (corresponding to 12 sub-carriers) within one RB range, taking Y=6 and offset_RE=1 as an example, the identifiers of the REs of the time-frequency resources occupied by the first pilot signal within the RB range are: 1, 3, 5, 7, 9 and 11, respectively.

It is to be noted that both the examples shown in FIG. 8 and FIG. 9 take one symbol as an example, and it is to be understood that the examples shown on the basis of FIG. 8 and FIG. 9 may also be directly expanded to multiple symbols, which is not described in detail in the embodiments of the present disclosure.

Through the method, in the case where the frequency-domain offset of the time-frequency resources occupied by the first pilot signal is the RE offset of the time-frequency resources occupied by the first pilot signal, the first device can flexibly change the RE (or sub-carrier) allocation of the time-frequency resources occupied by the first pilot signal after receiving the first information, so that it is more conducive to the multiplexing by multiple users and the pilot signal interference among multiple users can be reduced.

In a case where the frequency-domain offset of the time-frequency resources occupied by the first pilot signal is the RB offset of the time-frequency resources occupied by the first pilot signal, according to the RB offset of the time-frequency resources occupied by the first pilot signal and the value of X (one RB of every X RBs is used for the transmission of the first pilot signal), RBs of the time-frequency resources occupied by the first pilot signal may be obtained.

Exemplarily, it is assumed that the RB offset of the time-frequency resources occupied by the first pilot signal is offset_RB, then the identifiers (or referred to as locations, which is similarly used in other embodiments and is not repeated) of the RBs of the time-frequency resources occupied by the first pilot signal are: offset_RB, offset_RB+X, offset_RB+2*X, offset_RB+3*X, and the like.

For example, as shown in FIG. 10, taking X=2 and offset_RB=0 as an example, the identifiers of the RBs of the time-frequency resources occupied by the first pilot signal are: 0, 2 and 4, respectively.

For another example, as shown in FIG. 11, taking X=2 and offset_RB=1 as an example, the identifiers of the RBs of the time-frequency resources occupied by the first pilot signal are: 1, 3 and 5, respectively.

It is to be noted that the both the examples shown in FIG. 10 and FIG. 11 take one symbol as an example, and it is to be understood that the examples shown on the basis of FIG. 10 and FIG. 11 may also be directly expanded to multiple symbols, which is not described in detail in the embodiments of the present disclosure.

It is further also be noted that in the embodiments of the present disclosure, the identifiers of the RBs may have following two implementations.

In the first implementation, the identifiers of the RBs are the internal identifiers of the RBs actually used for the transmission (or scheduling). Exemplarily, among the multiple RBs actually used for the transmission, the identifiers of the multiple RBs may be arranged in the ascending order, so that the 0th RB, the 1st RB, the 2nd RB, and the like may be obtained. For example, as shown in FIG. 10, there are 6 RBs actually used for the transmission, and the identifiers of the 6 RBs are 0, 1, 2, 3, 4 and 5, respectively.

In the second implementation, the identifiers of the RBs are the identifiers of RBs in the system or BWP. Exemplarily, the i-th RB corresponds to the identifier i of the RB in the system or in the BWP. For example, it is assumed that there are 4 RBs used for the transmission in the system, and the identifiers of the 4 RBs are 2, 3, 4, and 5, respectively. As shown in FIG. 10, the identifiers of the RBs used for the transmission of the first pilot signal are 2 and 4, respectively. As shown in FIG. 11, the identifiers of the RBs for the transmission of the first pilot signal are 3 and 5, respectively.

Through the method, in the case where the frequency-domain offset of the time-frequency resources occupied by the first pilot signal is the RB offset of the time-frequency resources occupied by the first pilot signal, the first device can flexibly change the RB allocation of the time-frequency resources occupied by the first pilot signal after receiving the first information, so that it is more conducive to the multiplexing by multiple users and the pilot signal interference among multiple users can be reduced.

In another possible implementation, the first information may indicate a frequency-domain pattern of the time-frequency resources occupied by the first pilot signal. The frequency-domain location of the time-frequency resources occupied by the first pilot signal may be determined according to the frequency-domain pattern of the time-frequency resources occupied by the first pilot signal.

In the embodiments of the present disclosure, the frequency-domain pattern of the time-frequency resources occupied by the first pilot signal may include: an RE pattern of the time-frequency resources occupied by the first pilot signal and/or an RB pattern of the time-frequency resources occupied by the first pilot signal.

In the case where the frequency-domain pattern of the time-frequency resources occupied by the first pilot signal is the RE pattern of the time-frequency resources occupied by the first pilot signal, the RE pattern may be determined by a predefined rule and/or a configuration of the network device.

Exemplarily, FIG. 8 and FIG. 9 show RE patterns determined by the predefined rule and/or the configuration of the network device, and the RE pattern of time-frequency resources occupied by the first pilot signal may be one of the RE pattern shown in FIG. 8 and the RE pattern shown in FIG. 9. One symbol is taken as an example in FIG. 8 and FIG. 9, which can be expanded to multiple symbols.

Exemplarily, it is assumed that the RE pattern of the time-frequency resources occupied by the first pilot signal is the RE pattern shown in FIG. 8, the identifiers of REs of the time-frequency resources occupied by the first pilot signal within one RB range are 0, 2, 4, 6, 8 and 10, respectively, and the number of REs of the time-frequency resources occupied by the first pilot signal within the RB range is 6.

Exemplarily, it is assumed that the RE pattern of the time-frequency resources occupied by the first pilot signal is the RE pattern shown in FIG. 9, the identifiers of REs of the time-frequency resources occupied by the first pilot signal within one RB range are 1, 3, 5, 7, 9 and 11, respectively, and the number of REs of the time-frequency resources occupied by the first pilot signal within the RB range is 6.

Through the method, in the case where the frequency-domain pattern of the time-frequency resources occupied by the first pilot signal is the RE pattern of the time-frequency resources occupied by the first pilot signal, the first device can flexibly change the RE (or sub-carrier) allocation of the time-frequency resources occupied by the first pilot signal after receiving the first information, so that it is more conducive to the multiplexing by multiple users and the pilot signal interference among multiple users can be reduced.

In the case where the frequency-domain pattern of the time-frequency resources occupied by the first pilot signal is the RB pattern of the time-frequency resources occupied by the first pilot signal, the RB pattern may be determined by a predefined rule and/or a configuration of the network device.

Exemplarily, FIG. 10 and FIG. 11 show RB patterns determined by the predefined rule and/or the configuration of the network device, and the RB pattern of the time-frequency resources occupied by the first pilot signal may be one of the RB pattern shown in FIG. 10 and the RB pattern shown in FIG. 11.

Exemplarily, it is assumed that the RB pattern of the time-frequency resources occupied by the first pilot signal is the RB pattern shown in FIG. 10, the identifiers of RBs of the time-frequency resources occupied by the first pilot signal are 0, 2 and 4, respectively.

Exemplarily, it is assumed that the RB pattern of the time-frequency resources occupied by the first pilot signal is the RB pattern shown in FIG. 11, the identifiers of RBs of the time-frequency resources occupied by the first pilot signal are 1, 3 and 5, respectively.

Through the method, in the case where the frequency-domain pattern of the time-frequency resources occupied by the first pilot signal is the RB pattern of the time-frequency resources occupied by the first pilot signal, the first device can flexibly change the RB allocation of the time-frequency resources occupied by the first pilot signal after receiving the first information, so that it is more conducive to the multiplexing by multiple users and the pilot signal interference among multiple users can be reduced.

Based on the aforementioned several possible implementations, the frequency-domain location of the time-frequency resources occupied by the first pilot signal may be determined according to one or more of the following parameters indicated by the first information:
a frequency-domain density of the time-frequency resources occupied by the first pilot signal;
a frequency-domain offset of the time-frequency resources occupied by the first pilot signal; or
a frequency-domain pattern of the time-frequency resources occupied by the first pilot signal.

Exemplarily, the frequency-domain location of the time-frequency resources occupied by the first pilot signal may be determined according to the frequency-domain density of the time-frequency resources occupied by the first pilot signal. For example, the frequency-domain location of the time-frequency resources occupied by the first pilot signal may be determined according to the RE density of the time-frequency resources occupied by the first pilot signal. In this case, the RE offset of the time-frequency resources occupied by the first pilot signal may be determined by a predefined rule and/or a configuration of the network device. And/or, the frequency-domain location of the time-frequency resources occupied by the first pilot signal may be determined according to the RB density of the time-frequency resources occupied by the first pilot signal. In this case, the RB offset of the time-frequency resources occupied by the first pilot signal may be determined by a predefined rule and/or a configuration of the network device.

Exemplarily, the frequency-domain location of the time-frequency resources occupied by the first pilot signal may be determined according to the frequency-domain offset of the time-frequency resources occupied by the first pilot signal. For example, the frequency-domain location of the time-frequency resources occupied by the first pilot signal may be determined according to the RE offset of the time-frequency resources occupied by the first pilot signal. In this case, the RE density of the time-frequency resources occupied by the first pilot signal may be determined by a predefined rule and/or a configuration of the network device. And/or, the frequency-domain location of the time-frequency resources occupied by the first pilot signal may be determined according to the RB offset of the time-frequency resources occupied by the first pilot signal. In this case, the RB density of the time-frequency resources occupied by the first pilot signal may be determined by a predefined rule and/or a configuration of the network device.

Exemplarily, the frequency-domain location of the time-frequency resources occupied by the first pilot signal may be determined according to the frequency-domain pattern of the time-frequency resources occupied by the first pilot signal. For example, the frequency-domain location of the time-frequency resources occupied by the first pilot signal may be determined according to one or more of: an RE pattern of the time-frequency resources occupied by the first pilot signal or an RB pattern of the time-frequency resources occupied by the first pilot signal.

Exemplarily, the frequency-domain location of the time-frequency resources occupied by the first pilot signal may be determined according to the frequency-domain density and the frequency-domain offset of the time-frequency resources occupied by the first pilot signal. For example, the frequency-domain location of the time-frequency resources occupied by the first pilot signal may be determined according to the RE density and/or RB density of the time-frequency resources occupied by the first pilot signal and the RE offset and/or RB offset of the time-frequency resources occupied by the first pilot signal.

Exemplarily, the frequency-domain location of the time-frequency resources occupied by the first pilot signal may be determined according to the frequency-domain density and the frequency-domain pattern of the time-frequency resources occupied by the first pilot signal. For example, the frequency-domain location of the time-frequency resources occupied by the first pilot signal may be determined according to the RE density and/or RB density of the time-frequency resources occupied by the first pilot signal and the RE pattern and/or RB pattern of the time-frequency resources occupied by the first pilot signal.

Exemplarily, the frequency-domain location of the time-frequency resources occupied by the first pilot signal may be determined according to the frequency-domain offset and the frequency-domain pattern of the time-frequency resources occupied by the first pilot signal. For example, the frequency-domain location of the time-frequency resources occupied by the first pilot signal may be determined according to the RE offset and/or RB offset of the time-frequency resources occupied by the first pilot signal and the RE pattern and/or RB pattern of the time-frequency resources occupied by the first pilot signal.

Exemplarily, the frequency-domain location of the time-frequency resources occupied by the first pilot signal may be determined according to the frequency-domain density, the frequency-domain offset and the frequency-domain pattern of the time-frequency resources occupied by the first pilot signal. For example, the frequency-domain location of the time-frequency resources occupied by the first pilot signal may be determined according to the RE density and/or RB density of the time-frequency resources occupied by the first pilot signal, the RE offset and/or RB offset of the time-frequency resources occupied by the first pilot signal, and the RE pattern and/or RB pattern of the time-frequency resources occupied by the first pilot signal.

In the embodiments of the present disclosure, when the first information indicates the frequency-domain location of the time-frequency resources occupied by the first pilot signal, following two possible implementations may exist.

In one possible implementation, the first information may indicate, through a first bitmap, the frequency-domain location of the time-frequency resources occupied by the first pilot signal.

Exemplarily, the first information may indicate, through the first bitmap, the RBs used for the transmission of the first pilot signal and/or the REs used for the transmission of the first pilot signal within one RB. For example, the first information may indicate the REs used for the transmission of the first pilot signal within one RB through a first bitmap having the length of 12 bits or 16 bits. Herein, an RE corresponding to a value of 1 in the first bitmap is used for the transmission of the first pilot signal.

Through this method, the first information may indicate, through the first bitmap, the RBs used for the transmission of the first pilot signal and/or the REs used for the transmission of the first pilot signal within one RB, thereby improving flexibility when the first information indicates the frequency-domain location of the time-frequency resources occupied by the first pilot signal.

In another possible implementation, the first information may indicate, through identifiers of frequency-domain resources, the frequency-domain location of the time-frequency resources occupied by the first pilot signal.

It is to be noted that the manner where the first information indicates, through the identifiers of the frequency-domain resources, the frequency-domain location of the time-frequency resources occupied by the first pilot signal is a manner of directly indicating the frequency-domain location of the time-frequency resources occupied by the first pilot signal.

Exemplarily, the first information may indicate, through identifiers of REs, the REs used for the transmission of the first pilot signal within one RB; and/or
the first information may indicate, through identifiers of RBs, the RBs used for the transmission of the first pilot signal.

Through this method, the first information directly indicates, through the identifiers of the frequency-domain resources, the frequency-domain location of the time-frequency resources occupied by the first pilot signal, thereby improving flexibility when the first information indicates the frequency-domain location of the time-frequency resources occupied by the first pilot signal.

In a manner #C, the first information may indicate the time-domain location of the time-frequency resources occupied by the first pilot signal.

Through this method, the first information indicates the time-domain location of the time-frequency resources occupied by the first pilot signal, so that the first device can flexibly change the time-domain location of the time-frequency resources occupied by the first pilot signal according to the current channel situation after receiving the first information. In this way, a better balance between the total power for the pilot signal and the channel estimation performance can be achieved, and the system performance can be improved.

In the embodiments of the present disclosure, following possible implementations of the time-domain location of the time-frequency resources occupied by the first pilot signal may exist.

In one possible implementation, the first information may indicate a time-domain density of the time-frequency resources occupied by the first pilot signal. The time-domain location of the time-frequency resources occupied by the first pilot signal is determined according to the time-domain density of the time-frequency resources occupied by the first pilot signal.

In the embodiments of the present disclosure, the time-domain density of the time-frequency resources occupied by the first pilot signal may include: a symbol density of the time-frequency resources occupied by the first pilot signal and/or a slot density of the time-frequency resources occupied by the first pilot signal.

In a case where the time-domain density of the time-frequency resources occupied by the first pilot signal is the symbol density of the time-frequency resources occupied by the first pilot signal, the symbol density of the time-frequency resources occupied by the first pilot signal may be the symbol density of the time-frequency resources occupied by the first pilot signal within one slot range. The symbol density of the time-frequency resources occupied by the first pilot signal within one slot range may be a third value. The third value has a mapping relationship with the number of symbols of the time-frequency resources occupied by the first pilot signal within one slot range.

Furthermore, the mapping relationship may be a one-to-one mapping relationship or another mapping relationship, which is not limited in the embodiments of the present disclosure.

In some embodiments, in a case where the third value is less than or equal to 1, the number of symbols of the time-frequency resources occupied by the first pilot signal within one slot range is a product of the third value and the total number of symbols within the slot range.

Exemplarily, it is assumed that there are 14 symbols within one slot range, and the symbol density of the time-frequency resources occupied by the first pilot signal within the slot range is 1/2 (i.e., the third value is 1/2), it may be obtained that the number of symbols of the time-frequency resources occupied by the first pilot signal within the slot range is 14*1/2=7.

Exemplarily, it is assumed that there are 14 symbols within one slot range, and the symbol density of the time-frequency resources occupied by the first pilot signal within the slot range is 1 (i.e., the third value is 1), it may be obtained that the number of symbols of the time-frequency resources occupied by the first pilot signal within the slot range is 14.

In other embodiments, in a case where the third value is greater than 1, the number of symbols of the time-frequency resources occupied by the first pilot signal within one slot range is equal to the third value.

Exemplarily, it is assumed that there are 14 symbols within one slot range, and the symbol density of the time-frequency resources occupied by the first pilot signal within the slot range is 6 (i.e., the third value is 6), it may be obtained that the number of symbols of the time-frequency resources occupied by the first pilot signal within the slot range is 6.

Through the method, in the case where the time-domain density of the time-frequency resources occupied by the first pilot signal is the symbol density of the time-frequency resources occupied by the first pilot signal, the first device can flexibly change the symbol density of the time-frequency resources occupied by the first pilot signal according to the wireless environment after receiving the first information, so as to better match with the current channel and improve the system performance.

In a case where the time-domain density of the time-frequency resources occupied by the first pilot signal is the slot density of the time-frequency resources occupied by the first pilot signal, the slot density of the time-frequency resources occupied by the first pilot signal may be a fourth value. It is assumed that one slot of every P slots is used for the transmission of the first pilot signal, the fourth value has a mapping relationship with the value of P, where P is a positive integer.

Furthermore, the mapping relationship may be a one-to-one mapping relationship or another mapping relationship, which is not limited in the embodiments of the present disclosure.

In some embodiments, in the case where the fourth value is less than or equal to 1, the value of P is reciprocal to the fourth value.

Exemplarily, it is assumed that the slot density of the time-frequency resources occupied by the first pilot signal is 0.5 (i.e., the fourth value is 0.5), the value of P is 1/0.5 = 2. That is to say, one slot of every two slots is used for the transmission of the first pilot signal.

Exemplarily, it is assumed that the slot density of the time-frequency resources occupied by the first pilot signal is 1 (i.e., the fourth value is 1), the value of P is 1. That is to say, each slot is used for the transmission of the first pilot signal.

In other embodiments, in the case where the fourth value is greater than 1, the value of P is the fourth value.

Exemplarily, it is assumed that the slot density of the time-frequency resources occupied by the first pilot signal is 2 (i.e., the fourth value is 2), the value of P is 2. That is to say, one slot of every two slots is used for the transmission of the first pilot signal.

It is to be noted that the at least part of symbols in one slot of the time-frequency resources occupied by the first pilot signal are used for the transmission of the first pilot signal.

Furthermore, the at least part of symbols may be one symbol in one slot, multiple symbols in one slot (not all of the symbols in one slot), or all of the symbols in one slot, which are not limited in the embodiment of the present disclosure.

Through the method, in the case where the time-domain density of the time-frequency resources occupied by the first pilot signal is the slot density of the time-frequency resources occupied by the first pilot signal, the first device can change the slot density of the time-frequency resources occupied by the first pilot signal with greater granularity according to the wireless environment after receiving the first information, which has better flexibility, is more conducive to the multiplexing by multiple users and reduces pilot signal interference among multiple users.

In another possible implementation, the first information may indicate a time-domain offset of the time-frequency resources occupied by the first pilot signal. The time-domain location of the time-frequency resources occupied by the first pilot signal may be determined according to the time-domain offset of the time-frequency resources occupied by the first pilot signal.

In the embodiments of the present disclosure, the time-domain offset of the time-frequency resources occupied by the first pilot signal may include: a symbol offset of the time-frequency resources occupied by the first pilot signal and/or a slot offset of the time-frequency resources occupied by the first pilot signal.

In a case where the time-domain offset of the time-frequency resources occupied by the first pilot signal is the symbol offset of the time-frequency resources occupied by the first pilot signal, according to the symbol offset of the time-frequency resources occupied by the first pilot signal and the number of symbols of the time-frequency resources occupied by the first pilot signal within one slot range, symbols of the time-frequency resources occupied by the first pilot signal within one slot range may be obtained.

Exemplarily, it is assumed that there are 14 symbols within one slot range, the symbol offset of the time-frequency resources occupied by the first pilot signal is offset_symbol, and the number of symbols of the time-frequency resources occupied by the first pilot signal within the slot range is Q, then the identifiers (or referred to as locations, which is similarly used in other embodiments and is not repeated) of the symbols of the time-frequency resources occupied by the first pilot signal within the slot range are: offset_symbol, offset_symbol+14/Q, offset_symbol+2*14/Q, and so on, where Q is a positive integer.

For example, as shown in FIG. 12, it is assumed there are 14 symbols within one slot range, taking Q=7 and offset_symbol=0 as an example, the identifiers of the symbols of the time-frequency resources occupied by the first pilot signal within the slot range are: 0, 2, 4, 6, 8, 10 and 12, respectively.

For another example, as shown in FIG. 13, it is assumed there are 14 symbols within one slot range, taking Q=7 and offset_symbol=1 as an example, the identifiers of the symbols of the time-frequency resources occupied by the first pilot signal within the slot range are: 1, 3, 5, 7, 9, 11 and 13, respectively.

Through the method, in the case where the time-domain offset of the time-frequency resources occupied by the first pilot signal is the symbol offset of the time-frequency resources occupied by the first pilot signal, the first device can flexibly change the symbol allocation of the time-frequency resources occupied by the first pilot signal after receiving the first information, so as to better match with the current channel, which it is more conducive to the multiplexing by multiple users and the pilot signal interference among multiple users can be reduced.

In a case where the time-domain offset of the time-frequency resources occupied by the first pilot signal is the slot offset of the time-frequency resources occupied by the first pilot signal, according to the slot offset of the time-frequency resources occupied by the first pilot signal and the value of P (one slot of every P RBs is used for the transmission of the first pilot signal), slots of the time-frequency resources occupied by the first pilot signal may be obtained.

Exemplarily, it is assumed that the slot offset of the time-frequency resources occupied by the first pilot signal is offset_slot, then the identifiers of the slots of the time-frequency resources occupied by the first pilot signal are: offset_slot, offset_slot+P, offset_slot+2*P, offset_slot+3*P, and the like, respectively.

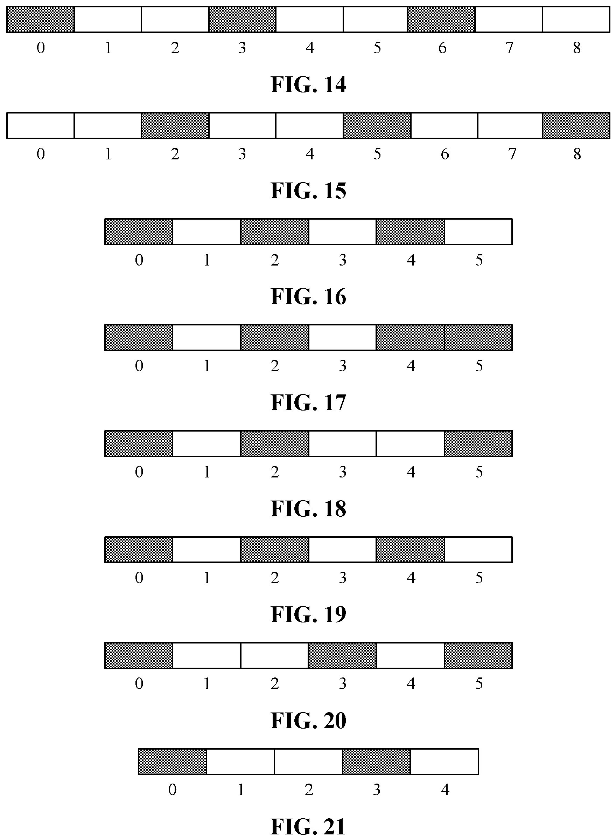

For example, as shown in FIG. 14, taking P=3 and offset_slot=0 as an example, the identifiers of the slots of the time-frequency resources occupied by the first pilot signal are: 0, 3 and 6, respectively.

For another example, as shown in FIG. 15, taking P=3 and offset_slot=2 as an example, the identifiers of the slots of the time-frequency resources occupied by the first pilot signal are: 2, 5 and 8, respectively.

It is also be noted that in the embodiments of the present disclosure, the identifiers of the slots may have following two implementations.

In the first implementation, the identifiers of the slots are the internal identifiers of the slots actually used for the transmission (or scheduling). Exemplarily, among the multiple slots actually used for the transmission, the identifiers (or referred to as locations, which is similarly used in other embodiments and is not repeated) of the multiple slots may be arranged in the ascending order, so that the 0th slot, the 1st slot, the 2nd slot, and the like may be obtained. For example, as shown in FIG. 14, there are 9 slots actually used for the transmission, and the identifiers of the 9 slots are 0, 1, 2, 3, 4, 5, 6, 7 and 8, respectively.

In the second implementation, the identifiers of the slots are the identifiers of slots in the system. Exemplarily, the i-th slot corresponds to the identifier i of the slot in the system. For example, it is assumed that there are 4 slots used for the transmission in the system, and the identifiers of the 4 slots are 2, 3, 4, and 5, respectively. As shown in FIG. 14, the identifier of the slot used for the transmission of the first pilot signal is 3. As shown in FIG. 15, the identifiers of the slots for the transmission of the first pilot signal are 2 and 5, respectively.

Through the method, in the case where the time-domain offset of the time-frequency resources occupied by the first pilot signal is the slot offset of the time-frequency resources occupied by the first pilot signal, the first device can flexibly change the slot allocation of the time-frequency resources occupied by the first pilot signal after receiving the first information, so as to better match with the current channel, which it is more conducive to the multiplexing by multiple users and the pilot signal interference among multiple users can be reduced.

In another possible implementation, the first information may indicate a time-domain pattern of the time-frequency resources occupied by the first pilot signal. The time-domain location of the time-frequency resources occupied by the first pilot signal may be determined according to the time-domain pattern of the time-frequency resources occupied by the first pilot signal.

In the embodiments of the present disclosure, the time-domain pattern of the time-frequency resources occupied by the first pilot signal may include: a symbol pattern of the time-frequency resources occupied by the first pilot signal and/or a slot pattern of the time-frequency resources occupied by the first pilot signal.

In the case where the time-domain pattern of the time-frequency resources occupied by the first pilot signal is the symbol pattern of the time-frequency resources occupied by the first pilot signal, the symbol pattern may be determined by a predefined rule and/or a configuration of the network device.

Exemplarily, FIG. 12 and FIG. 13 show symbol patterns determined by the predefined rule and/or the configuration of the network device, and the symbol pattern of time-frequency resources occupied by the first pilot signal may be one of the symbol pattern shown in FIG. 12 and the symbol pattern shown in FIG. 13.

Exemplarily, it is assumed that the symbol pattern of the time-frequency resources occupied by the first pilot signal is the symbol pattern shown in FIG. 12, the identifiers of symbols of the time-frequency resources occupied by the first pilot signal within one slot range are 0, 2, 4, 6, 8, 10 and 12, respectively.

Exemplarily, it is assumed that the symbol pattern of the time-frequency resources occupied by the first pilot signal is the symbol pattern shown in FIG. 13, the identifiers of symbols of the time-frequency resources occupied by the first pilot signal within one slot range are 1, 3, 5, 7, 9, 11 and 13, respectively.

Through the method, in the case where the time-domain pattern of the time-frequency resources occupied by the first pilot signal is the symbol pattern of the time-frequency resources occupied by the first pilot signal, the first device can flexibly change the symbol allocation of the time-frequency resources occupied by the first pilot signal after receiving the first information, so that it is more conducive to the multiplexing by multiple users and the pilot signal interference among multiple users can be reduced.

In the case where the time-domain pattern of the time-frequency resources occupied by the first pilot signal is the slot pattern of the time-frequency resources occupied by the first pilot signal, the slot pattern may be determined by a predefined rule and/or a configuration of the network device.

Exemplarily, FIG. 14 and FIG. 15 show slot patterns determined by the predefined rule and/or the configuration of the network device, and the slot pattern of time-frequency resources occupied by the first pilot signal may be one of the slot pattern shown in FIG. 14 and the slot pattern shown in FIG. 15.

Exemplarily, it is assumed that the slot pattern of the time-frequency resources occupied by the first pilot signal is the slot pattern shown in FIG. 14, the identifiers of slots of the time-frequency resources occupied by the first pilot signal are 0, 3 and 6, respectively.

Exemplarily, it is assumed that the slot pattern of the time-frequency resources occupied by the first pilot signal is the slot pattern shown in FIG. 15, the identifiers of slots of the time-frequency resources occupied by the first pilot signal are 2, 5 and 8, respectively.

Through the method, in the case where the time-domain pattern of the time-frequency resources occupied by the first pilot signal is the slot pattern of the time-frequency resources occupied by the first pilot signal, the first device can flexibly change the slot allocation of the time-frequency resources occupied by the first pilot signal after receiving the first information, so that it is more conducive to the multiplexing by multiple users and the pilot signal interference among multiple users can be reduced.

Based on the aforementioned several possible implementations, the time-domain location of the time-frequency resources occupied by the first pilot signal may be determined according to one or more of the following parameters indicated by the first information:
a time-domain density of the time-frequency resources occupied by the first pilot signal;
a time-domain offset of the time-frequency resources occupied by the first pilot signal; or
a time-domain pattern of the time-frequency resources occupied by the first pilot signal.

Exemplarily, the time-domain location of the time-frequency resources occupied by the first pilot signal may be determined according to the time-domain density of the time-frequency resources occupied by the first pilot signal. For example, the time-domain location of the time-frequency resources occupied by the first pilot signal may be determined according to the symbol density of the time-frequency resources occupied by the first pilot signal. In this case, the symbol offset of the time-frequency resources occupied by the first pilot signal may be determined by the predefined rule and/or the configuration of the network device. And/or, the time-domain location of the time-frequency resources occupied by the first pilot signal may be determined according to the slot density of the time-frequency resources occupied by the first pilot signal. In this case, the slot offset of the time-frequency resources occupied by the first pilot signal may be determined by the predefined rule and/or the configuration of the network device.

Exemplarily, the time-domain location of the time-frequency resources occupied by the first pilot signal may be determined according to the time-domain offset of the time-frequency resources occupied by the first pilot signal. For example, the time-domain location of the time-frequency resources occupied by the first pilot signal may be determined according to the symbol offset of the time-frequency resources occupied by the first pilot signal. In this case, the symbol density of the time-frequency resources occupied by the first pilot signal may be determined by the predefined rule and/or the configuration of the network device. And/or, the time-domain location of the time-frequency resources occupied by the first pilot signal may be determined according to the slot offset of the time-frequency resources occupied by the first pilot signal. In this case, the slot density of the time-frequency resources occupied by the first pilot signal may be determined by the predefined rule and/or the configuration of the network device.

Exemplarily, the time-domain location of the time-frequency resources occupied by the first pilot signal may be determined according to the time-domain pattern of the time-frequency resources occupied by the first pilot signal. For example, the time-domain location of the time-frequency resources occupied by the first pilot signal may be determined according to one or more of: a symbol pattern of the time-frequency resources occupied by the first pilot signal or a slot pattern of the time-frequency resources occupied by the first pilot signal.

Exemplarily, the time-domain location of the time-frequency resources occupied by the first pilot signal may be determined according to the time-domain density and the time-domain offset of the time-frequency resources occupied by the first pilot signal. For example, the time-domain location of the time-frequency resources occupied by the first pilot signal may be determined according to the symbol density and/or slot density of the time-frequency resources occupied by the first pilot signal and the symbol offset and/or slot offset of the time-frequency resources occupied by the first pilot signal.

Exemplarily, the time-domain location of the time-frequency resources occupied by the first pilot signal may be determined according to the time-domain density and the time-domain pattern of the time-frequency resources occupied by the first pilot signal. For example, the time-domain location of the time-frequency resources occupied by the first pilot signal may be determined according to the symbol density and/or slot density of the time-frequency resources occupied by the first pilot signal and the symbol pattern and/or slot pattern of the time-frequency resources occupied by the first pilot signal.

Exemplarily, the time-domain location of the time-frequency resources occupied by the first pilot signal may be determined according to the time-domain offset and the time-domain pattern of the time-frequency resources occupied by the first pilot signal. For example, the time-domain location of the time-frequency resources occupied by the first pilot signal may be determined according to the symbol offset and/or slot offset of the time-frequency resources occupied by the first pilot signal and the symbol pattern and/or slot pattern of the time-frequency resources occupied by the first pilot signal.

Exemplarily, the time-domain location of the time-frequency resources occupied by the first pilot signal may be determined according to the time-domain density, the time-domain offset and the time-domain pattern of the time-frequency resources occupied by the first pilot signal. For example, the time-domain location of the time-frequency resources occupied by the first pilot signal may be determined according to the symbol density and/or slot density of the time-frequency resources occupied by the first pilot signal, the symbol offset and/or slot offset of the time-frequency resources occupied by the first pilot signal and the symbol pattern and/or slot pattern of the time-frequency resources occupied by the first pilot signal.

In the embodiments of the present disclosure, when the first information indicates the time-domain location of the time-frequency resources occupied by the first pilot signal, following two possible implementations may exist.

In one possible implementation, the first information indicates, through a second bitmap, the time-domain location of the time-frequency resources occupied by the first pilot signal.

Exemplarily, the first information may indicate, through the second bitmap, the slots used for the transmission of the first pilot signal and/or the symbols used for the transmission of the first pilot signal within one slot. For example, the first information may indicate the symbols used for the transmission of the first pilot signal within one slot through a second bitmap having the length of 14 bits. Herein, a symbol corresponding to a value of 1 in the second bitmap is used for the transmission of the first pilot signal.

Through this method, the first information may indicate, through the second bitmap, the slots used for the transmission of the first pilot signal and/or the symbols used for the transmission of the first pilot signal within one slot, thereby improving flexibility when the first information indicates the time-domain location of the time-frequency resources occupied by the first pilot signal.

In another possible implementation, the first information may indicate, through identifiers of time-domain resources, the time-domain location of the time-frequency resources occupied by the first pilot signal.

It is to be noted that the manner where the first information indicates, through the identifiers of the time-domain resources, the time-domain location of the time-frequency resources occupied by the first pilot signal is a manner of directly indicating the time-domain location of the time-frequency resources occupied by the first pilot signal.

Exemplarily, the first information may indicate, through identifiers of symbols, the symbols used for the transmission of the first pilot signal within one slot; and/or

the first information may indicate, through identifiers of slots, the slots used for the transmission of the first pilot signal.

Through this method, the first information directly indicates, through the identifiers of the time-domain resources, the time-domain location of the time-frequency resources occupied by the first pilot signal, thereby improving flexibility when the first information indicates the time-domain location of the time-frequency resources occupied by the first pilot signal.

In the embodiments, the time-domain location of the time-frequency resources occupied by the first pilot signal may include: a first symbol and/or a last symbol that are occupied by the data signal.

Exemplarily, as shown in FIG. 16, it is assumed that 6 symbols are occupied for the transmission of the data signal, and one symbol of every two symbols contains the first pilot signal. In this case, the time-frequency resources occupied by the first pilot signal are the 0th symbol, the 2nd symbol, and the 4th symbol in FIG. 16, and the time-domain location of the time-frequency resources occupied by the first pilot signal may include the time-domain location of the first symbol occupied by the data signal.

Exemplarily, as shown in FIG. 17, it is assumed that 6 symbols are occupied for the transmission of the data signal, and the time-frequency resources occupied by the first pilot signal are the 0th symbol, the 2nd symbol, the 4th symbol and 5th symbol in FIG. 17, then, the time-domain location of the time-frequency resources occupied by the first pilot signal may include: the first symbol and the last symbol that are occupied by the data signal.

Exemplarily, as shown in FIG. 18, it is assumed that 6 symbols are occupied for the transmission of the data signal, and the time-frequency resources occupied by the first pilot signal are the 0th symbol, the 2nd symbol and 5th symbol in FIG. 18, then, the time-domain location of the time-frequency resources occupied by the first pilot signal may include: the first symbol and the last symbol that are occupied by the data signal.

Through this method, in a case where the time-domain location of the time-frequency resources occupied by the first pilot signal includes the first symbol and/or the last symbol that are occupied by the data signal, the system performance can be improved.

In some embodiments, in the case where a time-domain density of the time-frequency resources occupied by the first pilot signal meets a first preset range, the time-domain location of the time-frequency resources occupied by the first pilot signal includes the first symbol and/or the last symbol that are occupied by the data signal.

It is to be noted that the first preset range may be a parameter range predefined in a protocol, a parameter range configured by the network device, or a parameter range set in another manner, which is not limited in the embodiment of the present disclosure.

It is further to be noted that the time-domain density of the time-frequency resources occupied by the first pilot signal is: a symbol density of the time-frequency resources occupied by the first pilot signal and/or a slot density of the time-frequency resources occupied by the first pilot signal.

Exemplarily, in a case where the symbol density of the time-frequency resources occupied by the first pilot signal is less than or equal to 1, the first preset range is assumed to be (0, 1/3]. As shown in FIG. 19, taking 6 symbols being occupied by data transmission as an example, the symbol density of the time-frequency resources occupied by the first pilot signal is 1/2. In this case, the symbol density of the time-frequency resources occupied by the first pilot signal does not meet the first preset range, so the time-domain location of the time-frequency resources occupied by the first pilot signal may not include the last symbol (that is, the fifth symbol) occupied by the data signal.

Exemplarily, in a case where the symbol density of the time-frequency resources occupied by the first pilot signal is less than or equal to 1, the first preset range is assumed to be (0, 1/3]. As shown in FIG. 20, taking 6 symbols being occupied by the data transmission as the example, the symbol density of the time-frequency resources occupied by the first pilot signal is 1/3. In this case, the symbol density of the time-frequency resources occupied by the first pilot signal meets the first preset range, so the time-domain location of the time-frequency resources occupied by the first pilot signal may include the last symbol (that is, the fifth symbol) occupied by the data signal.

In some embodiments, in a case where an interval between the last symbol occupied by the data signal and a target symbol is greater than or equal to a first threshold and the target symbol is a latest symbol containing the first pilot signal before the last symbol, the time-domain location of the time-frequency resources occupied by the first pilot signal includes the first symbol and/or the last symbol that are occupied by the data signal.

It is to be noted that the first threshold may be a parameter value predefined in a protocol, a parameter value configured by the network device, or a parameter value set in another manner, which is not limited in the embodiment of the present disclosure.

Exemplarily, it is assumed that the first threshold is 2. As shown in FIG. 21, taking 5 symbols being occupied by the data transmission as the example, the last symbol occupied by the data signal is the fourth symbol, and the latest symbol (i.e., the target symbol) containing the first pilot signal before the last symbol is the third symbol. In this case, the interval between the last symbol occupied by the data signal and the target symbol is 1 (that is less than the first threshold of 2), thus, the time-domain location of the time-frequency resources occupied by the first pilot signal may not include the time-domain location of the last symbol (i.e., the fourth symbol) occupied by the data signal.

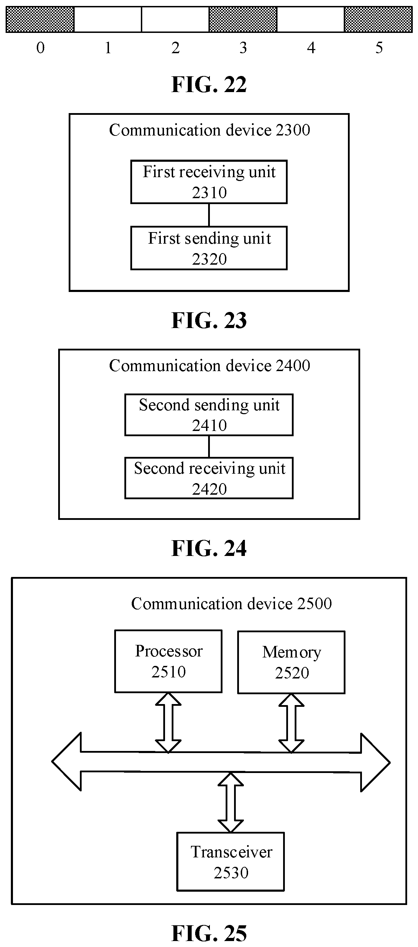

Exemplarily, it is assumed that the first threshold is 2. As shown in FIG. 22, taking 6 symbols being occupied by the data transmission as the example, the last symbol occupied by the data signal is the 5th symbol, and the latest symbol (i.e., the target symbol) containing the first pilot signal before the last symbol is the third symbol. In this case, the interval between the last symbol occupied by the data signal and the target symbol is 2 (that is equal to the first threshold), so the time-domain location of the time-frequency resources occupied by the first pilot signal may include the last symbol occupied by the data signal.

Based on this, the time-domain location of the time-frequency resources occupied by the first pilot signal may include the first symbol and/or the last symbol that are occupied by the data signal in in one or more of following cases:
a time-domain density of the time-frequency resources occupied by the first pilot signal meets the first preset range; or
an interval between the last symbol occupied by the data signal and a target symbol is greater than or equal to the first threshold, and the target symbol is a latest symbol containing the first pilot signal before the last symbol.

In a manner #D, the first information may indicate a sequence for the first pilot signal.

In some embodiments, the first information may indicate a type of the sequence for the first pilot signal; and/or a sequence generation manner for the first pilot signal.

Exemplarily, the type of the sequence for the first pilot signal may be a Gold sequence, a ZC sequence, an M sequence, or the like, which is not limited in the embodiments of the present disclosure.

It is to be noted that the sequence generation manner for the first pilot signal may be predefined or may be determined in another manner, which is not limited in the embodiments of the present disclosure.

It is further to be noted that the sequence generation manner for the first pilot signal may be a generation manner of different types of sequences.

Through this method, the first information can flexibly indicate the sequence for the first pilot signal, thereby optimizing the sequences between different users, reducing the interference between the sequences and improving the system performance.

In a manner #E, the first information may indicate a sequence generation parameter for the first pilot signal.

Through this method, the first information can flexibly indicate the sequence generation for the first pilot signal, thereby optimizing the sequences between different users, reducing the interference between the sequences and improving the system performance.

Exemplarily, the first information may indicate one or more groups of sequence generation parameters for the first pilot signal. Each group of sequence generation parameters for the first pilot signal may include one or more sequence generation parameters.

Exemplarily, the second device may select the sequence generation parameter for the first pilot signal through DCI signaling.

Through this method, the second device can select the sequence generation parameter for the first pilot signal through the DCI signaling, thereby improving flexibility.

It is to be noted that in a case where there are multiple sequence generation parameters for the first pilot signal, different sequence generation parameters may correspond to different ports for the first pilot signal.

Through this method, the first information can flexibly indicate the sequence generation of corresponding port for the first pilot signal, thereby reducing sequence interference of pilot signals between multiple layers and improving the system performance.

In some embodiments, the sequence generation parameter for the first pilot signal includes one or more of:
an identifier of a time-domain resource of the time-frequency resources occupied by the first pilot signal;
an identifier of a system frame number where the first pilot signal is located;
an identifier of a cell where the first pilot signal is located;
an identifier of a carrier where the first pilot signal is located;
an identifier of a port for the first pilot signal;
a scrambling parameter for the first pilot signal;
an identifier of a control channel for the data signal; or
other parameters configured by the network.

It is to be noted that each group of sequence generation parameters for the first pilot signal indicated by the first information may include the aforementioned one or more sequence generation parameters.

It is further to be noted that the identifier of the time-domain resource of the time-frequency resources occupied by the first pilot signal may include one or more of: an identifier of a slot of the time-frequency resources occupied by the first pilot signal; an identifier of a symbol of the time-frequency resources occupied by the first pilot signal; and an identifier of the symbol of the time-frequency resources occupied by the first pilot signal within one slot, one sub-frame, or one frame.

Exemplarily, the identifier of the cell where the first pilot signal is located may be an identifier of a physical layer cell where the first pilot signal is located.

Exemplarily, the carrier where the first pilot signal is located may be a component carrier in the CA.

Exemplarily, the identifier of the control channel for the data signal may be a packet identifier corresponding to a Control Resource Set (CORESET).

It is to be noted that the sequence generation corresponding to the port i for the first pilot signal may be based on the identifier i of the port. Furthermore, the identifier of the port for the first pilot signal may be an identifier of a part of ports for the first pilot signal, or may be the identifier of each port for the first pilot signal, which is not limited in the embodiment of the present disclosure.

It is further to be noted that the sequence generation parameter for the first pilot signal may further include the other related parameters configured by the network device.

Through this method, the sequence for the first pilot signal can be randomized, the sequence interference of the pilot signals between multiple layers can be reduced, and the system performance can be improved.

In a manner #F, the first information may indicate port information for the first pilot signal.

It is to be noted that after receiving the first information, the first device may determine different ports for the first pilot signal.

In some embodiments, the port information for the first pilot signal may include one or more of:
a maximum number of ports for the first pilot signal;
a sequence corresponding to a port for the first pilot signal;
a time-domain resource corresponding to the port for the first pilot signal;
a frequency-domain resource corresponding to the port for the first pilot signal;
a code division multiplexing manner adopted by the port for the first pilot signal;
a frequency division multiplexing manner adopted by the port for the first pilot signal; or
a time division multiplexing manner adopted by the port for the first pilot signal.

It is to be noted that the first information may indicate the maximum number of ports for the first pilot signal. For example, the first information may indicate that the maximum number of ports for the first pilot signal is 2. In actual transmission, the second device may determine, according to the number of layers for actual transmission, whether one port or two ports for the first pilot signal are used when the first pilot signal is sent. The second device may determine, according to scheduling information (e.g. the number of layers for the transmission of the data signal), whether one port or two ports for the first pilot signal are used when the first pilot signal is sent. The time-frequency resource corresponding to the port may be determined by a predefined rule and/or configured by a network device. The sequence for the first pilot signal corresponding to the port may be determined by a predefined rule and/or configured by the network device.

It is further to be noted that, the port for the first pilot signal may be each port for the first pilot signal, or may be a part of ports for the first pilot signal, which is not limited in the embodiment of the present disclosure.

It is further to be noted that the first information may indicate the sequence corresponding to the port for the first pilot signal. For example, the first information may indicate two different groups of sequence generation parameters. Each group of sequence generation parameters may include one or more sequence generation parameters, and each group of sequence generation parameters may correspond to sequence generation for one port. In actual transmission, the second device may determine, according to the port for the first pilot signal that is actually used, the corresponding sequence generation parameter to obtain the corresponding sequence. The first device may also determine the sequence corresponding to the first pilot signal according to the scheduling information (for example, which port or ports for the first pilot signal is used by the second device).

It is further to be noted that when the first information indicates a time-domain resource corresponding to a port for the first pilot signal, different ports may correspond to different time-domain resources.

It is further to be noted that when the first information indicates a frequency-domain resource corresponding to a port for the first pilot signal, different ports may correspond to different frequency-domain resources.

It is further to be noted that the code division multiplexing manner may be an OCC manner. That is to say, different orthogonal vectors may be adopted for different ports for the first pilot signal.

Through this method, the first information can flexibly indicate different ports for the first pilot signal, thereby reducing sequence interference of pilot signals between multiple layers and improving the system performance.

Based on the aforementioned manner #A to manner #F, after receiving the first information, the first device can know the corresponding configuration of the first pilot signal based on the first information, so that the adaptation between the receiver and the actually received data signal can be improved, so as to demodulate the data signal by using the receiver.

In some embodiments, before the first device receives the first information, the method may further include: the first device sends capability information of the first device. The capability information of the first device represents that the first device supports the first pilot signal.

Correspondingly, before the second device sends the first information to the first device, the method may further include: the second device receives the capability information of the first device.

Furthermore, the first device may send the capability information of the first device through RRC signaling, MAC CE signaling, or the like.

In some embodiments, the capability information of the first device is a capability for any one of following objects:
a band;
a band combination;
per band in the band combination;
per carrier per band in the band combination;
a Frequency Range (FR); or
the first device.

It is to be noted that the capability information of the first device may be a capability for the band. That is to say, for per band, the corresponding capability information of the first device may be independently reported. Based on this, the first device may have a greater freedom degree. For example, the first device may support reporting corresponding capability information of the first device in a certain band or certain bands, and may not support reporting the corresponding capability information of the first device in other bands, so as to enable more first devices to support reporting the corresponding capability information of the first device.

It is further to be noted that the capability information of the first device may be a capability for the band combination. That is to say, for different band combinations, corresponding capability information of the first device may be independently reported. Based on this, the first device may have a greater freedom degree. For example, the first device may support reporting corresponding capability information of the first device in a certain band combination or certain band combinations, and may not support reporting the corresponding capability information of the first device in other band combinations, so as to enable more first devices to support reporting the corresponding capability information of the first device.

It is further to be noted that the capability information of the first device may be a capability for per band in the band combination. That is to say, for per band per band combination, corresponding capability information of the first device may be independently reported. Based on this, the first device may have a greater freedom degree. For example, the first device may not support reporting corresponding capability information of the first device under a certain Carrier Aggregation (CA) combination, but may support reporting the corresponding capability information of the first device in certain bands of another CA combination, so as to enable more first devices to support reporting the corresponding capability information of the first device.

It is further to be noted that the capability information of the first device may be a capability for each carrier on each band of the band combination. That is to say, for per CC per band per band combination, corresponding capability information of the first device may be independently reported. Based on this, the first device may have a greater freedom degree. For example, corresponding capability information of the first device may be independently reported for different band combinations, and corresponding capability information of the first device may be independently reported for different carriers on one band, so as to enable more first devices to support reporting the corresponding capability information of the first device.

It is further to be noted that the capability information of the first device may be a capability for the FR. That is to say, for per FR, corresponding capability information of the first device may be independently reported. Based on this, the first device may have a greater freedom degree. For example, there are two FRs, denoted as a low-frequency FR (i.e. FR1) and a high-frequency FR (i.e. FR2), respectively. Reporting the corresponding capability information of the first device may be not supported for the FR1, and reporting the corresponding capability information of the first device may be supported for the FR2, so as to enable more first devices to support reporting the corresponding capability information of the first device.

It is further to be noted that the capability information of the first device may be a capability for the first device. Based on this, in the case where the first device reports the capability information of the first device, it may be considered that the first device may support reporting the capability information of the first device in each band, thereby reducing the signaling overhead of the capability reporting of the first device.

The embodiments of the present disclosure provide a communication method. The first device may receive the first information. The first information is used for configuring the first pilot signal, and the at least part of time-frequency resources occupied by the first pilot signal are used for transmission of a data signal. In this way, after the first device receives the first signal, the first device may know that the first pilot signal to be configured and the data signal occupy the same at least part of time-frequency resources. In this way, in the case where the first pilot signal occupies more time-frequency resources, the at least part of the time-frequency resources occupied by the first pilot signal may also be occupied by the data signal, thereby increasing the time-frequency resources occupied by the data signal, and improving the transmission rate and transmission reliability of the data signal.

Hereinafter, the communication method provided by the embodiments of the present disclosure will be described in detail with reference to specific application scenarios.

In the related art, the DMRS signal and the data signal occupy different time-frequency resources. That is to say, the DMRS signal and the data signal are placed orthogonally on the time-frequency resources. In the case where the total time-frequency resources are constant, an increase in the time-frequency resource overhead for the transmission of the DMRS signal means that the time-frequency resources for the transmission of the data signal are reduced, thereby reducing the transmission rate of the data signal.

One manner to solve the aforementioned problem is to enable the transmission of the DMRS signal and the transmission of the data signal are performed on the same time-frequency resources (e.g., REs). In this case, the advanced receiver (e.g., the iterative receiver, the AI/ML receiver) may be used for processing, so as to demodulate the data signal. The AI/ML receiver may adopt various methods such as deep learning algorithms, for example, one or a combination of following architectures may be adopted for implementing: the FCN, the CNN, the RNN, and the Transformer neural network. The aforementioned receiver is merely an example, and the actual receiver may not be limited to be the aforementioned example.

It is to be noted that the premise of adopting the advanced receiver is that the receiving end (e.g., the first terminal device) should know the corresponding DMRS signal configuration, otherwise the adaptation between the receiver and the actual received data signal may be caused, thereby resulting in performance deterioration. There is currently a lack of a specific design method for the non-orthogonal DMRS signals, and the embodiments of the present disclosure may provide specific configuration schemes for such non-orthogonal DMRS signals.

It is further to be noted that in the following description, the non-orthogonal DMRS signals are referred to as the first DMRS signal, and the orthogonal DMRS signals are referred to as the second DMRS signal. In addition, in order to simplify the description, the data signal mentioned in the embodiments of the present disclosure may refer to a general data signal to be transmitted or control information if not specifically specified (for example, referring to a data channel).

The configuration of the first DMRS signal in the embodiments of the present disclosure mainly relates to the following seven aspects.
(1) The power parameter of the first DMRS signal.
(2) The frequency-domain location of time-frequency resources occupied by the first DMRS signal: an RE/RB density, an RE/RB offset (i.e., RE-level offset and RB-level offset), and an RE/RB pattern.
(3) The time-domain location of time-frequency resources occupied by the first DMRS signal: a symbol/slot density, a symbol/slot offset (i.e., symbol-level offset and slot -level offset), and a symbol/slot pattern.
(4) The sequence for the first DMRS signal.
(5) The port information for the first DMRS signal.
(6) The sequence generation parameter for the first DMRS signal.
(7) The granularity of the configuration.

In the embodiments of the present disclosure, the first terminal device (i.e., the first device) may receive the first information sent by the network device or the second terminal device (corresponding to a sidelink scenario) (i.e., the second device). The first information may be used for configuring the first DMRS signal, and one or more or all time-frequency resources (such as REs) occupied by the first DMRS signal are also time-frequency resources occupied by the data signal (including the general data signal or the control information) (for simplification of description, these time-frequency resources are referred to as the shared time-frequency resources in the following description).

Taking the PDSCH transmission as an example, it is assumed that the network device schedules 8 symbols (which may be other numbers, such as 1, 2, 3, 4, 5, 6, 7, 9, 10, 11, 12, 13, 14, etc.) for the transmission of the data signal, and 12 sub-carriers are taken as an example in the frequency domain (i.e., 12*8 = 96 REs in total).

As shown in FIG. 5, all REs may be used for both the transmission of the data signal and the transmission of the first DMRS signal. As shown in FIG. 6, REs corresponding to the 0th, 2nd, 4th, 6th, 8th and 10th sub-carriers on the 0th symbol may be used for both the transmission of the data signal and the transmission of the first DMRS signal, and other REs are used for the transmission of the data signal.

Through this method, the same time-frequency resources may be occupied by the first DMRS signal and the data signal, so as to enable the data signal to use more time-frequency resources, thereby improving the transmission rate of the data signal and further improving the transmission reliability of the data signal.

In some embodiments, the first information may be carried through a first signaling. The specific transmission of the first information may be implemented by combinations of one or more of the following messages/signaling:
a broadcast message, e.g., the MIB;
a system message, e.g., the SIB1 and the SIB;
RRC signaling;
MAC CE signaling;
DCI;
a downlink message (i.e. a random access message) in the random access procedure, e.g., the MsgB, the Msg2 and the Msg4; or
dedicated signaling, e.g., the AI/ML dedicated signaling.

For example, the first information may be carried through the RRC signaling and DCI. For another example, the first information may be carried through the system message and the RRC signaling. Other combinations are no longer exemplified one by one, and can be directly popularized.

It is to be noted that the first information may be carried by adopting the same type of signaling/message, or may be carried by multiple signaling/messages having the same type. For example, the first signaling may correspond to multiple pieces of RRC signaling, and in this case, the first information may be carried through multiple pieces of RRC signaling.

It is further to be noted that first signaling in different times may carry different DMRS signals. For example, the first signaling for a certain time may carry first information, and the first information is used for configuring the first DMRS signal. For another example, the first signaling for another time may carry the second information, and the second information is used for configuring the second DMRS signal. The time-frequency resources occupied by the second DMRS signal are not used for the transmission of the data signal, i.e., the data signal and the second DMRS signal occupy different time-frequency resources. That is to say, the time-frequency resources occupied by the data signal are placed orthogonally with the time-frequency resources occupied by the second DMRS signal.

Exemplarily, as shown in FIG. 7, REs corresponding to the 0th, 2nd, 4th, 6th, 8th and 10th sub-carriers on the 0th symbol may be used for the transmission of the second DMRS signal, and other REs may be used for the transmission of the data signal. In this case, the data signal and the second DMRS signal occupy different REs.

In some embodiments, the first signaling may include first indication information. Different values of the first indication information are used for indicating whether the DMRS signal carried by the first signaling is the first DMRS signal or the second DMRS signal.

In other embodiments, the first signaling may indicate, by configuring different fields (i.e., the first information field and the second information field) and through a CHOICE structure, whether the first signaling carries the first DMRS signal or the second DMRS.

Hereinafter, the configuration of the first DMRS signal will be described in detail in combination with several aspects mainly involved in the configuration of the first DMRS signal.

In the first aspect, the first information indicates a power parameter of the first DMRS signal.

It is to be noted that the "power" mentioned in the embodiments of the present disclosure may be directly expanded to "energy", which is not limited in the embodiments of the present disclosure.

Through this method, the first information can flexibly indicate the power allocation for the first DMRS signal, so as to enable the system to optimize the transmission power for the first DMRS signal according to the wireless environment, thereby improving the system performance.

In some embodiments, the power parameter of the first DMRS signal may be: on one shared time-frequency resource (i.e., the first time-frequency resource), a ratio of the power for sending the first DMRS signal to the total power on the shared time-frequency resource (i.e., the total power for the first DMRS signal and the data signal).

Exemplarily, taking any one RE in FIG. 5 as an example, the power parameter of the first DMRS signal may be the ratio of the power for sending the first DMRS signal on any one RE in FIG. 5 to the total power on the RE. For example, the total power on one RE is 1 and the power for sending the first DMRS signal on the RE is 0.2, and the power for sending the data signal on the RE is 0.8, then, the power parameter of the first DMRS signal is 0.2. When the value of 0.2 is converted into the value in the unit of dB, the power parameter of the first DMRS signal is -7 dB.

Exemplarily, taking FIG. 6 as an example, the power parameter of the first DMRS signal may be a ratio of the power for sending the first DMRS signal on one of REs corresponding to the 0th, 2nd, 4th, 6th, 8th and 10th sub-carriers on the 0th symbol to the total power on the RE.

Exemplarily, in a case where the ratio is a linear value, the candidate value of the ratio may be one or more of the following values: {0.01, 0.02, 0.03, 0.04, 0.05, 0.06, 0.07, 0.08, 0.09, 0.10, 0.15, 0.20, 0.25, 0.3, 0.35, 0.4, 0.45, 0.5, 0.55, 0.6, 0.65, 0.7, 0.75, 0.8, 0.85, 0.9}.

Exemplarily, in a case where the ratio is a value in the unit of dB, the candidate value of the ratio may be one or more of the following values: {-1 dB, -2 dB,-3 dB, -4 dB, -5 dB, -6 dB, -7 dB, -8 dB, -9 dB, -10 dB, -11 dB, -12 dB, -13 dB, -14 dB, -15 dB, -16 dB, -17 dB, -18 dB, -19 dB, -20 dB}.

It is to be noted that the power parameter of the first DMRS signal may also be: on one shared time-frequency resource, a ratio of the total power on the shared time-frequency resource to the power for sending the first DMRS signal on the shared time-frequency resource. In this scenario, in the case where the ratio is a linear value, the candidate value of the ratio is reciprocal to the aforementioned example value. In the case where the ratio is a value in the unit of dB, the candidate value of the ratio may be the opposite number of the aforementioned example value.

Through this method, the first information can directly indicate the proportion of the total power (i,e, the ratio of the power for sending the first DMRS signal on one shared time-frequency resource to the total power on the shared time-frequency resource), thereby simplifying the calculation of the power parameter of the first DMRS signal.

In some embodiments, the power parameter of the first DMRS signal may be: on one shared time-frequency resource (i.e., the first time-frequency resource), a ratio of the power for sending the data signal to the total power on the shared time-frequency resource (i.e., the total power for the first DMRS signal and the data signal).

Exemplarily, taking any one RE in FIG. 5 as an example, the power parameter of the first DMRS signal may be the ratio of the power for sending the data signal on any one RE in FIG. 5 to the total power on the RE. For example, the total power on one RE is 1 and the power for sending the first DMRS signal on the RE is 0.2, and the power for sending the data signal on the RE is 0.8, then, the power parameter of the first DMRS signal is 0.8. When the value of 0.8 is converted into the value in the unit of dB, the power parameter of the first DMRS signal is -1 dB.

Exemplarily, taking FIG. 6 as an example, the power parameter of the first DMRS signal may be a ratio of the power for sending the data signal on one of REs corresponding to the 0th, 2nd, 4th, 6th, 8th and 10th sub-carriers on the 0th symbol to the total power on the RE.

It is to be noted that, in the case where the ratio is the linear value or the value in the unit of dB, the candidate value of the ratio can be understood with reference to the description in the aforementioned embodiments. For brevity, details are not elaborated herein again.

It is further to be noted that the power parameter of the first DMRS signal may also be: on one shared time-frequency resource, a ratio of the total power on the shared time-frequency resource to the power for sending the data signal on the shared time-frequency resource. In this scenario, in the case where the ratio is a linear value, the candidate value of the ratio is reciprocal to the aforementioned example value. In the case where the ratio is a value in the unit of dB, the candidate value of the ratio may be the opposite number of the aforementioned example value.

Through this method, the first information can directly indicate the proportion of the total power (i,e, the ratio of the power for sending the data signal on one shared time-frequency resource to the total power on the shared time-frequency resource), thereby simplifying the calculation of the power parameter of the first DMRS signal.

In some embodiments, the power parameter of the first DMRS signal may be: on one shared time-frequency resource (i.e., the first time-frequency resource), a ratio of the power for sending the first DMRS signal on the shared time-frequency resource to the power for sending the data signal on the shared time-frequency resource.

Exemplarily, taking any one RE in FIG. 5 as an example, the power parameter of the first DMRS signal may be the ratio of the power for sending the first DMRS signal on any one RE in FIG. 5 to the power for sending the data signal on the RE. For example, the power for sending the first DMRS signal on one RE is 1, and the power for sending the data signal on the RE is 2, then, the power parameter of the first DMRS signal is 0.5. When the value of 0.5 is converted into the value in the unit of dB, the power parameter of the first DMRS signal is -3 dB.

Exemplarily, taking FIG. 6 as an example, the power parameter of the first DMRS signal may be a ratio of the power for sending the first DMRS signal on one of REs corresponding to the 0th, 2nd, 4th, 6th, 8th and 10th sub-carriers on the 0th symbol to the power for sending the data signal on the RE.

It is to be noted that, in the case where the ratio is the linear value or the value in the unit of dB, the candidate value of the ratio can be understood with reference to the description in the aforementioned embodiments. For brevity, details are not elaborated herein again.

Through this method, compared with the first information directly indicating the proportion of the total power, through the first information indicating the ratio of the power for sending the first DMRS signal on the one shared time-frequency resource to the power for sending the data signal on the shared time-frequency resource, it is possible to enable the dynamic value range of the power parameter of the first DMRS signal to be smaller, thereby improving the granularity of the indication and reducing the overhead of the indication.

In some embodiments, the power parameter of the first DMRS signal may be: on one shared time-frequency resource (i.e., the first time-frequency resource), a ratio of the power for sending the data signal on the shared time-frequency resource to the power for sending the first DMRS signal on the shared time-frequency resource.

Exemplarily, taking any one RE in FIG. 5 as an example, the power parameter of the first DMRS signal may be the ratio of the power for sending the data signal on any one RE in FIG. 5 to the power for sending the first DMRS signal on the RE. For example, the power for sending the first DMRS signal on one RE is 1, and the power for sending the data signal on the RE is 2, then, the power parameter of the first DMRS signal is 2. When the value of 2 is converted into the value in the unit of dB, the power parameter of the first DMRS signal is 3 dB.

Exemplarily, taking FIG. 6 as an example, the power parameter of the first DMRS signal may be a ratio of the power for sending the data signal on one of REs corresponding to the 0th, 2nd, 4th, 6th, 8th and 10th sub-carriers on the 0th symbol to the power for sending the first DMRS signal on the RE.

It is to be noted that, in the case where the ratio is the linear value or the value in the unit of dB, the candidate value of the ratio can be understood with reference to the description in the aforementioned embodiments. For brevity, details are not elaborated herein again.

Through this method, compared with the first information directly indicating the proportion of the total power, through the first information indicating the ratio of the power for sending the data signal on one shared time-frequency resource to the power for sending the first DMRS signal on the shared time-frequency resource, it is possible to enable the dynamic value range of the power parameter of the first DMRS signal to be smaller, thereby improving the granularity of the indication and reducing the overhead of the indication.

In some embodiments, the power parameter of the first DMRS signal may be the ratio of the power for sending the first DMRS signal on one shared time-frequency resource to the total power on one time-frequency resource (that is not limited to whether it is a shared time-frequency resource).

Exemplarily, taking FIG. 6 as an example, the power parameter of the first DMRS signal may be a ratio of the power for sending the first DMRS signal on one of REs corresponding to the 0th, 2nd, 4th, 6th, 8th and 10th sub-carriers on the 0th symbol to the total power on one of REs (that may be one of REs corresponding to the 0th, 2nd, 4th, 6th, 8th and 10th sub-carriers in FIG. 6, or may be another RE) in FIG. 6. For example, the power for sending the first DMRS signal on one of REs corresponding to the 0th, 2nd, 4th, 6th, 8th and 10th sub-carriers is 0.5, and the total power on one of REs in FIG. 6 is 1, then, the power parameter of the first DMRS signal is 0.5. When the value of 0.5 is converted into the value in the unit of dB, the power parameter of the first DMRS signal is -3 dB.

It is to be noted that, in the case where the ratio is the linear value or the value in the unit of dB, the candidate value of the ratio can be understood with reference to the description in the aforementioned embodiments. For brevity, details are not elaborated herein again.

It is to be noted that the power parameter of the first DMRS signal may also be: a ratio of the total power on one time-frequency resource (that is not limited to whether it is a shared time-frequency resource) to the power for sending the first DMRS signal on one shared time-frequency resource. In this scenario, in the case where the ratio is a linear value, the candidate value of the ratio is reciprocal to the aforementioned example value. In the case where the ratio is a value in the unit of dB, the candidate value of the ratio may be the opposite number of the aforementioned example value.

Through this method, the first information can directly indicate the proportion of the total power (i.e., the power parameter of the first DMRS signal may be the ratio of the power for sending the first DMRS signal on one shared time-frequency resource to the total power on one time-frequency resource), thereby simplifying the calculation of the power parameter of the first DMRS signal.

In some embodiments, the power parameter of the first DMRS signal may be the ratio of the power for sending the data signal on one shared time-frequency resource to the total power on one time-frequency resource (that is not limited to whether it is a shared time-frequency resource).

Exemplarily, taking FIG. 6 as an example, the power parameter of the first DMRS signal may be a ratio of the power for sending the data signal on one of REs corresponding to the 0th, 2nd, 4th, 6th, 8th and 10th sub-carriers to the total power on one of REs (that may be one of REs corresponding to the 0th, 2nd, 4th, 6th, 8th and 10th sub-carriers in FIG. 6, or may be another RE) in FIG. 6. For example, the power for sending the data signal on one of REs corresponding to the 0th, 2nd, 4th, 6th, 8th and 10th sub-carriers is 0.5, and the total power on one of REs in FIG. 6 is 1, then, the power parameter of the data signal is 0.5. When the value of 0.5 is converted into the value in the unit of dB, the power parameter of the first DMRS signal is -3 dB.

It is to be noted that, in the case where the ratio is the linear value or the value in the unit of dB, the candidate value of the ratio can be understood with reference to the description in the aforementioned embodiments. For brevity, details are not elaborated herein again.

It is to be noted that the power parameter of the data signal may also be: a ratio of the total power on one time-frequency resource (that is not limited to whether it is a shared time-frequency resource) to the power for sending the data signal on one shared time-frequency resource. In this scenario, in the case where the ratio is a linear value, the candidate value of the ratio is reciprocal to the aforementioned example value. In the case where the ratio is a value in the unit of dB, the candidate value of the ratio may be the opposite number of the aforementioned example value.

Through this method, the first information can directly indicate the proportion of the total power (i.e., the power parameter of the data signal may be the ratio of the power for sending the data signal on one shared time-frequency resource to the total power on one time-frequency resource), thereby simplifying the calculation of the power parameter of the first DMRS signal.

In the second aspect, the first information may indicate the frequency-domain location of the time-frequency resources occupied by the first DMRS signal.

Through this method, the first device can flexibly change the frequency-domain location of the time-frequency resources occupied by the first DMRS signal, thereby better facilitating multiplexing by multiple users and reducing DMRS signal interference among users.

In some embodiments, the frequency-domain location of the time-frequency resources occupied by the first DMRS signal may be determined according to one or more of the following parameters indicated by the first information:
a frequency-domain density of the time-frequency resources occupied by the first DMRS signal;
a frequency-domain offset of the time-frequency resources occupied by the first DMRS signal; or
a frequency-domain pattern of the time-frequency resources occupied by the first DMRS signal.

The first information may indicate an RE density of the time-frequency resources occupied by the first DMRS signal within one RB range. The frequency-domain location of the time-frequency resources occupied by the first DMRS signal may be determined according to the RE density of the time-frequency resources occupied by the first DMRS signal within one RB range.

Furthermore, the RE density of the time-frequency resources occupied by the first DMRS signal within one RB range may be a first value. The first value has a mapping relationship with the number of REs of the time-frequency resources occupied by the first DMRS signal within one RB range.

Exemplarily, the mapping relationship may be a one-to-one mapping relationship or another mapping relationship, which is not limited in the embodiments of the present disclosure.

In some embodiments, in a case where the first value is less than or equal to 1, the number of REs of the time-frequency resources occupied by the first DMRS signal within one RB range is a product of the first value and the total number of REs within the RB range.

Exemplarily, it is assumed that there are 12 REs (corresponding to 12 sub-carriers) within one RB range, and the RE density of the time-frequency resources occupied by the first DMRS signal within the RB range is 1/2 (i.e., the first value is 1/2), it may be obtained that the number of REs of the time-frequency resources occupied by the first DMRS signal within the RB range is 12 * 1/2=6.

Exemplarily, it is assumed that there are 12 REs (corresponding to 12 sub-carriers) within one RB range, and the RE density of the time-frequency resources occupied by the first DMRS signal within the RB range is 1 (i.e., the first value is 1), it may be obtained that the number of REs of the time-frequency resources occupied by the first DMRS signal within the RB range is 12.

In other embodiments, in a case where the first value is greater than 1, the number of REs of the time-frequency resources occupied by the first DMRS signal within one RB range is equal to the first value.

Exemplarily, it is assumed that there are 12 REs (corresponding to 12 sub-carriers) within one RB range, and the RE density of the time-frequency resources occupied by the first DMRS signal within the RB range is 6 (i.e., the first value is 6), it may be obtained that the number of REs of the time-frequency resources occupied by the first DMRS signal within the RB range is 6.

Through the method, in the case where the first information indicates the RE density of the time-frequency resources occupied by the first DMRS signal within one RB range, the first terminal device can flexibly change the RE density of the time-frequency resources occupied by the first DMRS signal according to the wireless environment after receiving the first information, so as to better match with the current channel and improve the system performance.

The first information may indicate an RE offset of the time-frequency resources occupied by the first DMRS signal. The frequency-domain location of the time-frequency resources occupied by the first DMRS signal may be determined according to the RE offset of the time-frequency resources occupied by the first DMRS signal.

Exemplarily, it is assumed that there are 12 REs (corresponding to 12 sub-carriers) within one RB range, the RE offset of the time-frequency resources occupied by the first DMRS signal is offset_RE, and the number of REs of the time-frequency resources occupied by the first DMRS signal within the RB range is Y, then the time-frequency resources occupied by the first DMRS signal are on offset_RE-th, offset_RE+12/Y-th, offset_RE+2*12/Y-th sub-carriers (or REs), and other sub-carriers within one RB range.

For example, as shown in FIG. 8, it is assumed there are 12 REs (corresponding to 12 sub-carriers) within one RB range, taking Y=6 and offset_RE=0 as an example, the time-frequency resources occupied by the first DMRS signal are on the 0th, 2nd, 4th, 6th, 8th and 10th sub-carriers within the RB range.

For another example, as shown in FIG. 9, it is assumed there are 12 REs (corresponding to 12 sub-carriers) within one RB range, taking Y=6 and offset_RE=1 as an example, the time-frequency resources occupied by the first DMRS signal are on the 1st, 3rd, 5th, 7th, 9th and 11th sub-carriers within the RB range.

It is to be noted that both the examples shown in FIG. 8 and FIG. 9 take one symbol as an example, i.e., one column of first DMRS signals are taken as an example, which can be directly expanded to multiple columns of first DMRS signals.

Through the method, in the case where the first information indicates the RE offset of the time-frequency resources occupied by the first DMRS signal, the first terminal device can flexibly change the RE (or sub-carrier) allocation of the time-frequency resources occupied by the first DMRS signal after receiving the first information, so that it is more conducive to the multiplexing by multiple users and the DMRS signal interference among multiple users can be reduced.

It is to be noted that the first information may indicate both the RE density of the time-frequency resources occupied by the first DMRS signal within one RB range and the RE offset of the time-frequency resources occupied by the first DMRS signal.

It is further to be noted that the first information may indicate only the RE offset of the time-frequency resources occupied by the first DMRS signal. In this case, the RE density of the time-frequency resources occupied by the first DMRS signal within one RB range may be determined by the predefined rule and/or the configuration of the network device.

The first information may indicate an RE pattern of the time-frequency resources occupied by the first DMRS signal. The frequency-domain location of the time-frequency resources occupied by the first DMRS signal may be determined according to the RE pattern of the time-frequency resources occupied by the first DMRS signal.

Furthermore, the RE pattern of the time-frequency resources occupied by the first DMRS signal may be determined by a predefined rule and/or a configuration of the network device.

It is to be noted that through the RE pattern of the time-frequency resources occupied by the first DMRS signal, it is possible to obtain which REs on the RE pattern can be used for the transmission of the first DMRS signal.

Exemplarily, two RE patterns respectively shown in FIG. 8 and FIG. 9 may be pre-specified, and the first information may indicate an RE pattern used by the time-frequency resources occupied by the first DMRS signal. For example, the first information may indicate that the time-frequency resources occupied by the first DMRS signal use the RE pattern shown in FIG. 8. For another example, the first information may indicate that the time-frequency resources occupied by the first DMRS signal use the RE pattern shown in FIG. 9.

Through the method, in the case where the first information indicates the RE pattern of the time-frequency resources occupied by the first DMRS signal, the first terminal device can flexibly change the RE (or sub-carrier) allocation of the time-frequency resources occupied by the first DMRS signal after receiving the first information, so that it is more conducive to the multiplexing by multiple users and the DMRS signal interference among multiple users can be reduced.

The first information may indicate an RB density of the time-frequency resources occupied by the first DMRS signal. The frequency-domain location of the time-frequency resources occupied by the first DMRS signal may be determined according to the RB density of the time-frequency resources occupied by the first DMRS signal.

Furthermore, the RB density of the time-frequency resources occupied by the first DMRS signal may be a second value. It is assumed that one RB of every X RBs is used for the transmission of the first DMRS signal, then, the second value has a mapping relationship with the value of X.

Exemplarily, the mapping relationship may be a one-to-one mapping relationship or another mapping relationship, which is not limited in the embodiments of the present disclosure.

In some embodiments, in the case where the second value is less than or equal to 1, the value of X is reciprocal to the second value.

Exemplarily, it is assumed that the RB density of the time-frequency resources occupied by the first DMRS signal is 0.5 (i.e., the second value is 0.5), the value of X is 1/0.5=2. That is to say, one RB of every two RBs is used for the transmission of the first DMRS signal.

Exemplarily, it is assumed that the RB density of the time-frequency resources occupied by the first DMRS signal is 1 (i.e., the second value is 1), the value of X is 1. That is to say, each RB is used for the transmission of the first DMRS signal.

In other embodiments, in the case where the second value is greater than 1, the value of X is the second value.

Exemplarily, it is assumed that the RB density of the time-frequency resources occupied by the first DMRS signal is 2 (i.e., the second value is 2), the value of X is 2. That is to say, one RB of every two RBs is used for the transmission of the first DMRS signal.

It is to be noted that the at least part of REs in one RB of the time-frequency resources occupied by the first DMRS signal are used for the transmission of the first DMRS signal.

Furthermore, the at least part of REs may be one RE in one RB, multiple REs in one RB (not all of the REs in one RB), or all of the REs in one RB, which are not limited in the embodiment of the present disclosure.

Through the method, in the case where the first information indicates the RB density of the time-frequency resources occupied by the first DMRS signal, the first terminal device can change the RB density of the time-frequency resources occupied by the first DMRS signal with greater granularity according to the wireless environment after receiving the first information, which has better flexibility, is more conducive to the multiplexing by multiple users and reduces DMRS signal interference among multiple users.

The first information may indicate an RB offset of the time-frequency resources occupied by the first DMRS signal. The frequency-domain location of the time-frequency resources occupied by the first DMRS signal may be determined according to the RB offset of the time-frequency resources occupied by the first DMRS signal.

Exemplarily, it is assumed that the RB offset of the time-frequency resources occupied by the first DMRS signal is offset_RB, one RB of every X RBs is used for the transmission of the first DMRS signal, then the time-frequency resources occupied by the first DMRS signal are on the offset_RB-th, offset_RB+X-th, offset_RB+2*X-th, offset_RB+3*X-th RBs and other RBs.

For example, as shown in FIG. 10, taking X=2 and offset_RB=0 as an example, the time-frequency resources occupied by the first DMRS signal are on the 0th, 2nd and 4th RBs.

For another example, as shown in FIG. 11, taking X=2 and offset_RB=1 as an example, the time-frequency resources occupied by the first DMRS signal are on the 1st, 3rd, and 5th RBs.

It is to be noted that the both the examples shown in FIG. 10 and FIG. 11 take one symbol as an example, i.e., one column of first DMRS signals are taken as an example, which can be directly expanded to multiple columns of first DMRS signals.

It is further also be noted that in the embodiments of the present disclosure, the identifiers of the RBs may have following two implementations.

In the first implementation, the identifiers of the RBs are the internal identifiers of the RBs actually used for the transmission (or scheduling). For example, the RB with the smallest identifier is recorded as the 0th RB, and so on. It is assumed that 6 RBs in FIG. 10 are used in this transmission, the identifiers of the 6 RBs correspond to the 0th, 1st, 2nd, 3rd, 4th, 5th, and 6th identifiers, respectively.

In the second implementation, the identifiers of the RBs are the identifiers of RBs in the system or BWP, Exemplarily, the i-th RB corresponds to the identifier i of the RB in the system or in the BWP. For example, it is assumed that 4 RBs (corresponding to the identifiers of 2, 3, 4 and 5) in FIG. 10 are used in this transmission, the time-frequency resources occupied by the first DMRS signal are on the 2nd and 4th RBs. For example, it is assumed that 4 RBs (corresponding the identifiers of 2, 3, 4 and 5) in FIG. 11 are used in this transmission, the time-frequency resources occupied by the first DMRS signal are on the 3rd and 5th RBs.

Through the method, in the case where the first information indicates the RB offset of the time-frequency resources occupied by the first DMRS signal, the first terminal device can flexibly change the RB allocation of the time-frequency resources occupied by the first DMRS signal after receiving the first information, so that it is more conducive to the multiplexing by multiple users and the DMRS signal interference among multiple users can be reduced.

It is to be noted that the first information may indicate both the RB density of the time-frequency resources occupied by the first DMRS signal and the RB offset of the time-frequency resources occupied by the first DMRS signal.

It is further to be noted that the first information may indicate only the RB offset of the time-frequency resources occupied by the first DMRS signal. In this case, the RB density of the time-frequency resources occupied by the first DMRS signal may be determined by a predefined rule and/or a configuration of the network device.

The first information may indicate an RB pattern of the time-frequency resources occupied by the first DMRS signal. The frequency-domain location of the time-frequency resources occupied by the first DMRS signal may be determined according to the RB pattern of the time-frequency resources occupied by the first DMRS signal.

Furthermore, the RB pattern of the time-frequency resources occupied by the first DMRS signal may be determined by a predefined rule and/or a configuration of the network device.

It is to be noted that through the RB pattern of the time-frequency resources occupied by the first DMRS signal, it is possible to obtain which RBs on the RB pattern can be used for the transmission of the first DMRS signal.

Exemplarily, two RB patterns respectively shown in FIG. 10 and FIG. 11 may be pre-specified, and the first information may indicate an RB pattern used by the time-frequency resources occupied by the first DMRS signal. For example, the first information may indicate that the time-frequency resources occupied by the first DMRS signal use the RB pattern shown in FIG. 10. For another example, the first information may indicate that the time-frequency resources occupied by the first DMRS signal use the RB pattern shown in FIG. 11.

Through the method, in the case where the first information indicates the RB pattern of the time-frequency resources occupied by the first DMRS signal, the first terminal device can flexibly change the RB allocation of the time-frequency resources occupied by the first DMRS signal after receiving the first information, so that it is more conducive to the multiplexing by multiple users and the DMRS signal interference among multiple users can be reduced.

It is to be noted that the first information may indicate one or more of the aforementioned pieces of information. For example, the first information may indicate the RE density of the time-frequency resources occupied by the first DMRS signal within one RB range and the RB density of the time-frequency resources occupied by the first DMRS signal. For another example, the first information may indicate the RE density of the time-frequency resources occupied by the first DMRS signal within one RB range, the RB density of the time-frequency resources occupied by the first DMRS signal, the RE offset of the time-frequency resources occupied by the first DMRS signal, and the RB offset of the time-frequency resources occupied by the first DMRS signal. For another example, the first information may indicate the RE offset of the time-frequency resources occupied by the first DMRS signal, and RB offset of the time-frequency resources occupied by the first DMRS signal. For another example, the first information may indicate the RB density of the time-frequency resources occupied by the first DMRS signal and the RB offset of the time-frequency resources occupied by the first DMRS signal.

In some embodiments, the first information may indicate the RBs and/or REs in one RB of the time-frequency resources occupied by the first DMRS signal in a manner of a bitmap (i.e., the first bitmap). For example, the first information may indicate, through a bitmap having the length of 12 bits or 16 bits, the REs used for the transmission of the first DMRS signal within one RB. The RE corresponding to the value of 1 in the bitmap is used for the transmission of first DMRS signal.

In some embodiments, the first information may indicate the RBs and/or REs in one RB of the time-frequency resources occupied by the first DMRS signal in a manner of directly indicating the RBs and/or the REs. For example, the first information may indicate, through identifiers of REs and/or identifiers of RBs, the RBs and/or REs in one RB that are used for the transmission of the first DMRS signal.

In the third aspect, the first information may indicate the time-domain location of the time-frequency resources occupied by the first DMRS signal.

Through this method, the first information indicates the time-domain location of the time-frequency resources occupied by the first DMRS signal, so that the first terminal device can flexibly change the time-domain location of the time-frequency resources occupied by the first DMRS signal according to the current channel situation after receiving the first information. In this way, a better balance between the total power for the DMRS signal and the channel estimation performance can be achieved, and the system performance can be improved.

In some embodiments, the time-domain location of the time-frequency resources occupied by the first DMRS signal may be determined according to one or more of the following parameters indicated by the first information:
a time-domain density of the time-frequency resources occupied by the first DMRS signal;
a time-domain offset of the time-frequency resources occupied by the first DMRS signal; or
a time-domain pattern of the time-frequency resources occupied by the first DMRS signal.

The first information may indicate a symbol density of the time-frequency resources occupied by the first DMRS signal within one slot range. The time-domain location of the time-frequency resources occupied by the first DMRS signal may be determined according to the symbol density of the time-frequency resources occupied by the first DMRS signal.

Furthermore, the symbol density of the time-frequency resources occupied by the first DMRS signal within one slot range may be a third value. The third value has a mapping relationship with the number of symbols of the time-frequency resources occupied by the first DMRS signal within one slot range.

Exemplarily, the mapping relationship may be a one-to-one mapping relationship or another mapping relationship, which is not limited in the embodiments of the present disclosure.

In some embodiments, in a case where the third value is less than or equal to 1, the number of symbols of the time-frequency resources occupied by the first DMRS signal within one slot range may be a product of the third value and the total number of symbols within the slot range.

Exemplarily, it is assumed that there are 14 symbols within one slot range, and the symbol density of the time-frequency resources occupied by the first DMRS signal within the slot range is 1/2 (i.e., the third value is 1/2), it may be obtained that the number of symbols of the time-frequency resources occupied by the first DMRS signal within the slot range is 14*1/2=7.

Exemplarily, it is assumed that there are 14 symbols within one slot range, and the symbol density of the time-frequency resources occupied by the first DMRS signal within the slot range is 1 (i.e., the third value is 1), it may be obtained that the number of symbols of the time-frequency resources occupied by the first DMRS signal within the slot range is 14.

In other embodiments, in a case where the third value is greater than 1, the number of symbols of the time-frequency resources occupied by the first DMRS signal within one slot range is equal to the third value.

Exemplarily, it is assumed that there are 14 symbols within one slot range, and the symbol density of the time-frequency resources occupied by the first DMRS signal within the slot range is 6 (i.e., the third value is 6), it may be obtained that the number of symbols of the time-frequency resources occupied by the first DMRS signal within the slot range is 6.

Through the method, in the case where the first information indicates the symbol density of the time-frequency resources occupied by the first DMRS signal within one slot range, the first terminal device can flexibly change the symbol density of the time-frequency resources occupied by the first DMRS signal according to the wireless environment after receiving the first information, so as to better match with the current channel and improve the system performance.

In some embodiments, among the symbols used for the transmission of the data signal, both the first symbol and/or the last symbol contain the first DMRS signal. Taking 6 symbols being used for the transmission of the data signal as an example, it is assumed that one symbol of every two symbols contains the first DMRS signal, then, the symbols containing the first DMRS signal may be as shown in FIG. 16, herein, the 0th, 2nd and 4th symbols in FIG. 16 contain the first DMRS signal. If it is required that both the first symbol and the last symbol among the symbols used for the transmission of the data signal contain the first DMRS signal, the symbols containing the first DMRS signal may be as shown in FIG. 17, herein, the 0th, 2nd, 4th and 5th symbols in FIG. 17 contain the first DMRS signal.

In some embodiments, in the case where a time-domain density of the time-frequency resources occupied by the first DMRS signal meets a first preset range, among the symbols used for the transmission of the data signal, the first symbol and/or the last symbol contain the first DMRS signal. Herein, the first preset range may be predefined in a protocol, or configured by the network device.

Exemplarily, in the case where the symbol density of the time-frequency resources occupied by the first DMRS signal is less than or equal to 1, when the symbol density of the time-frequency resources occupied by the first DMRS signal meets (0, 1/3] (i.e., the first preset range is (0, 1/3]), it is required that the last symbol among the symbols used for the transmission of the data signal contains the first DMRS signal. As shown in FIG. 19, the time-domain density of the time-frequency resources occupied by the first DMRS signal is 1/2, thus, the last symbol among the symbols used for the transmission of the data signal does not contain the first DMRS signal. As shown in FIG. 20, the time-domain density of time-frequency resources occupied by the first DMRS signal is 1/3, and thus, the last symbol among the symbols used for the transmission of the data signal contains the first DMRS signal.

In some embodiments, when the interval between the last symbol used for the transmission of the data signal and a latest symbol containing the first DMRS signal before the last symbol is greater than or equal to a first threshold, it is required that the last symbol among the symbols used for the transmission of the data signal contains the first DMRS signal. Herein, the first threshold may be predefined in a protocol, or configured by the network device.

Exemplarily, when the first threshold is 2, if among the symbols used for the transmission of the data signal, the interval between the last symbol and the latest symbol containing the first DMRS signal before the last symbol is greater than or equal to 2, it is required that the last symbol contains the first DMRS signal. As shown in FIG. 21, among the symbols used for the transmission of the data signal, the interval between the last symbol and the latest symbol containing the first DMRS signal before the last symbol is less than 2 (by taking 5 symbols being used for the transmission of the data signal as an example), thus, the last symbol among the symbols used for the transmission of the data signal does not contain the first DMRS signal. As shown in FIG. 22, among the symbols used for the transmission of the data signal, the interval between the last symbol and the latest symbol containing the first DMRS signal before the last symbol is equal 2 (by taking 6 symbols being used for the transmission of the data signal as an example), thus, the last symbol among the symbols used for the transmission of the data signal contains the first DMRS signal.

The first information may indicate a symbol offset of the time-frequency resources occupied by the first DMRS signal. The time-domain location of the time-frequency resources occupied by the first DMRS signal may be determined according to the symbol offset of the time-frequency resources occupied by the first DMRS signal.

Exemplarily, it is assumed that there are 14 symbols within one slot range, the symbol offset of the time-frequency resources occupied by the first DMRS signal is offset_symbol, and the number of symbols of the time-frequency resources occupied by the first DMRS signal within the slot range is Q, then the time-frequency resources occupied by the first DMRS signal are on the offset_symbol-th, symbol+14/Q-th, offset_symbol+2*14/Q-th symbols, and other symbols within one slot range.

For example, as shown in FIG. 12, it is assumed there are 14 symbols within one slot range, taking Q=7 and offset_symbol=0 as an example, the time-frequency resources occupied by the first DMRS signal are on the 0th, 2nd, 4th, 6th, 8th, 10th and 12th symbols within the slot range.

For another example, as shown in FIG. 13, it is assumed there are 14 symbols within one slot range, taking Q=7 and offset_symbol=1 as an example, the time-frequency resources occupied by the first DMRS signal are on 1st, 3rd, 5th, 7th, 9th, 11th and 13th within the slot range.

Through the method, in the case where the first information indicates the symbol offset of the time-frequency resources occupied by the first DMRS signal, the first terminal device can flexibly change the symbol allocation of the time-frequency resources occupied by the first DMRS signal after receiving the first information, so as to better match with the current channel, which it is more conducive to the multiplexing by multiple users and the DMRS signal interference among multiple users can be reduced.

It is to be noted that the first information may indicate both the symbol density of the time-frequency resources occupied by the first DMRS signal within one slot range and the symbol offset of the time-frequency resources occupied by the first DMRS signal.

It is further to be noted that the first information may indicate only the symbol offset of the time-frequency resources occupied by the first DMRS signal. In this case, the symbol density of the time-frequency resources occupied by the first DMRS signal within one slot range may be determined by a predefined rule and/or a configuration of the network device.

The first information may indicate a symbol pattern of the time-frequency resources occupied by the first DMRS signal. The time-domain location of the time-frequency resources occupied by the first DMRS signal may be determined according to the symbol pattern of the time-frequency resources occupied by the first DMRS signal.

Furthermore, the symbol pattern of the time-frequency resources occupied by the first DMRS signal may be determined by a predefined rule and/or a configuration of the network device.

It is to be noted that through the symbol pattern of the time-frequency resources occupied by the first DMRS signal, it is possible to obtain which symbols on the symbol pattern can be used for the transmission of the first DMRS signal.

Exemplarily, two symbol patterns respectively shown in FIG. 12 and FIG. 13 may be pre-specified, and the first information may indicate a symbol pattern used by the time-frequency resources occupied by the first DMRS signal. For example, the first information may indicate that the time-frequency resources occupied by the first DMRS signal use the symbol pattern shown in FIG. 12. For another example, the first information may indicate that the time-frequency resources occupied by the first DMRS signal use the symbol pattern shown in FIG. 13.

Through the method, in the case where the first information indicates the symbol pattern of the time-frequency resources occupied by the first DMRS signal, the first terminal device can flexibly change the symbol allocation of the time-frequency resources occupied by the first DMRS signal after receiving the first information, so that it is more conducive to the multiplexing by multiple users and the DMRS signal interference among multiple users can be reduced.

The first information may indicate the slot density of the time-frequency resources occupied by the first DMRS signal. The time-domain location of the time-frequency resources occupied by the first DMRS signal may be determined according to the slot density of the time-frequency resources occupied by the first DMRS signal.

Furthermore, the slot density of the time-frequency resources occupied by the first DMRS signal may be a fourth value. It is assumed that one slot of every P slots is used for the transmission of the first DMRS signal, then, the fourth value has a mapping relationship with the value of P.

Exemplarily, the mapping relationship may be a one-to-one mapping relationship or another mapping relationship, which is not limited in the embodiments of the present disclosure.

In some embodiments, in the case where the fourth value is less than or equal to 1, the value of P is reciprocal to the fourth value.

Exemplarily, it is assumed that the slot density of the time-frequency resources occupied by the first DMRS signal is 0.5 (i.e., the fourth value is 0.5), the value of P is 1/0.5=2. That is to say, one slot of every two slots is used for the transmission of the first DMRS signal.

Exemplarily, it is assumed that the slot density of the time-frequency resources occupied by the first DMRS signal is 1 (i.e., the fourth value is 1), the value of P is 1. That is to say, each slot is used for the transmission of the first DMRS signal.

In other embodiments, in the case where the fourth value is greater than 1, the value of P is the fourth value.

Exemplarily, it is assumed that the slot density of the time-frequency resources occupied by the first DMRS signal is 2 (i.e., the fourth value is 2), the value of P is 2. That is to say, one slot of every two slots is used for the transmission of the first DMRS signal.

It is to be noted that the at least part of symbols in one the slot of the time-frequency resources occupied by the first DMRS signal are used for the transmission of the first DMRS signal.

Furthermore, the at least part of symbols may be one symbol in one slot, multiple symbols in one slot (not all of the symbols in one slot), or all of the symbols in one slot, which are not limited in the embodiment of the present disclosure.

Through the method, in the case where the first information indicates the slot density of the time-frequency resources occupied by the first DMRS signal, the first terminal device can change the slot density of the time-frequency resources occupied by the first DMRS signal with greater granularity according to the wireless environment after receiving the first information, which has better flexibility, is more conducive to the multiplexing by multiple users and reduces DMRS signal interference among multiple users.

The first information may indicate a slot offset of the time-frequency resources occupied by the first DMRS signal. The time-domain location of the time-frequency resources occupied by the first DMRS signal may be determined according to the slot offset of the time-frequency resources occupied by the first DMRS signal.

Exemplarily, it is assumed that the slot offset of the time-frequency resources occupied by the first DMRS signal is offset_slot, and one slot of every P slots is used for the transmission of the first DMRS signal, then, the time-frequency resources occupied by the first DMRS signal are on the offset_stlot-th, offset_stlot+P-th, offset_stlot+2*P-th, offset_stlot+3*P-th slots, and other slots.

For example, as shown in FIG. 14, taking P=3 and offset_slot=0 as an example, the time-frequency resources occupied by the first DMRS signal are on the 0th, 3rd and 6th slots.

For another example, as shown in FIG. 15, taking P=3 and offset_slot=2 as an example, the time-frequency resources occupied by the first DMRS signal are on the 2nd, 5th and 8th slots.

It is also be noted that in the embodiments of the present disclosure, the identifiers of the slots may have following two implementations.

In the first implementation, the identifiers of the slots are the internal identifiers of the slots actually used for the transmission (or scheduling). Exemplarily, among the multiple slots actually used for the transmission, the identifiers of the multiple slots may be arranged in the ascending order, so that the 0th slot, the 1st slot, the 2nd slot, and the like may be obtained. For example, as shown in FIG. 14, there are 9 slots actually used for the transmission, and the identifiers of the 9 slots are 0, 1, 2, 3, 4, 5, 6, 7 and 8, respectively.

In the second implementation, the identifiers of the slots are the identifiers of slots in the system. Exemplarily, the i-th slot corresponds to the identifier i of the slot in the system. For example, it is assumed that there are four slots used for the transmission in the system, and the identifiers of the 4 slots are 2, 3, 4, and 5, respectively. As shown in FIG. 14, the identifier of the slot used for the transmission of the first DMRS signal is 3. As shown in FIG. 15, the identifiers of the slots for the transmission of the first DMRS signal are 2 and 5, respectively.

Through the method, in the case where the first information indicates the slot offset of the time-frequency resources occupied by the first DMRS signal, the first terminal device can flexibly change the slot allocation of the time-frequency resources occupied by the first DMRS signal after receiving the first information, so as to better match with the current channel, which it is more conducive to the multiplexing by multiple users and the DMRS signal interference among multiple users can be reduced.

It is to be noted that the first information may indicate both the slot density of the time-frequency resources occupied by the first DMRS signal and the slot offset of the time-frequency resources occupied by the first DMRS signal.

It is further to be noted that the first information may indicate only the slot offset of the time-frequency resources occupied by the first DMRS signal. In this case, the slot density of the time-frequency resources occupied by the first DMRS signal may be determined by a predefined rule and/or a configuration of the network device.

The first information may indicate a slot pattern of the time-frequency resources occupied by the first DMRS signal. The time-domain location of the time-frequency resources occupied by the first DMRS signal may be determined according to the slot pattern of the time-frequency resources occupied by the first DMRS signal.

Furthermore, the slot pattern of the time-frequency resources occupied by the first DMRS signal may be determined by a predefined rule and/or a configuration of the network device.

It is to be noted that through the slot pattern of the time-frequency resources occupied by the first DMRS signal, it is possible to obtain which slots on the slot pattern can be used for the transmission of the first DMRS signal.

Exemplarily, two slot patterns respectively shown in FIG. 14 and FIG. 15 may be pre-specified, and the first information may indicate a slot pattern used by the time-frequency resources occupied by the first DMRS signal. For example, the first information may indicate that the time-frequency resources occupied by the first DMRS signal use the slot pattern shown in FIG. 14. For another example, the first information may indicate that the time-frequency resources occupied by the first DMRS signal use the slot pattern shown in FIG. 15.

Through the method, in the case where the first information indicates the slot pattern of the time-frequency resources occupied by the first DMRS signal, the first terminal device can flexibly change the slot allocation of the time-frequency resources occupied by the first DMRS signal after receiving the first information, so that it is more conducive to the multiplexing by multiple users and the DMRS signal interference among multiple users can be reduced.

It is to be noted that the first information may indicate one or more of the aforementioned pieces of information. For example, the first information may indicate the symbol density of the time-frequency resources occupied by the first DMRS signal within one slot range and the slot density of the time-frequency resources occupied by the first DMRS signal. For another example, the first information may indicate the symbol density of the time-frequency resources occupied by the first DMRS signal within one slot range, the slot density of the time-frequency resources occupied by the first DMRS signal, the symbol offset of the time-frequency resources occupied by the first DMRS signal, and the slot offset of the time-frequency resources occupied by the first DMRS signal. For another example, the first information may indicate the symbol offset of the time-frequency resources occupied by the first DMRS signal, and the slot offset of the time-frequency resources occupied by the first DMRS signal. For another example, the first information may indicate the slot density of the time-frequency resources occupied by the first DMRS signal and the slot offset of the time-frequency resources occupied by the first DMRS signal.

In some embodiments, the first information may indicate the slots and/or symbols within one slot of the time-frequency resources occupied by the first DMRS signal in a manner of a bitmap (i.e., the second bitmap). For example, the first information may indicate, through a bitmap having the length of 14 bits, the symbols used for the transmission of the first DMRS signal within one slot. The symbol corresponding to the value of 1 in the bitmap is used for the transmission of first DMRS signal.

In some embodiments, the first information may indicate the slots and/or symbols within one slot of the time-frequency resources occupied by the first DMRS signal in a manner of directly indicating the slots and/or the symbols. For example, the first information may indicate, through identifiers of symbols and/or identifiers of slots, the slots and/or symbols in one slot that are used for the transmission of the first DMRS signal.

In the fourth aspect, the first information indicates a sequence for the first DMRS signal.

In some embodiments, the first information may indicate a type of the sequence for the first DMRS signal; and/or a sequence generation manner for the first DMRS signal.

Exemplarily, the type of the sequence for the first DMRS signal may be a Gold sequence, a ZC sequence, an M sequence, or the like, which is not limited in the embodiments of the present disclosure.

It is to be noted that the sequence generation manner for the first DMRS signal may be predefined or may be determined in another manner, which is not limited in the embodiments of the present disclosure.

It is further to be noted that the sequence generation manner for the first DMRS signal may be a generation manner of sequences with different types.

Through this method, the first information can flexibly indicate the sequence for the first DMRS signal, thereby optimizing the sequences between different users, reducing the interference between the sequences and improving the system performance.

In the fifth aspect, the first information indicates port information for the first DMRS signal.

It is to be noted that after receiving the first information, the first terminal device may determine different ports for the first DMRS signal.

In some embodiments, the port information for the DMRS pilot signal may include one or more of following seven items.
(1) The maximum number of ports for the first DMRS signal. For example, the first information may indicate that the maximum number of ports for the first DMRS signal is 2. In actual transmission, the network device or the second terminal device may determine, according to the number of layers for actual transmission, whether one port or two ports for the first DMRS signal are used when the first DMRS signal is sent. The network device or the second terminal device may determine, according to scheduling information (e.g. the number of layers for the transmission of the data signal), whether one port or two ports for the first DMRS signal are used when the first DMRS signal is sent. The time-frequency resource corresponding to the port may be determined by a predefined rule and/or configured by a network device. The sequence for the first DMRS signal corresponding to the port may be determined by a predefined rule and/or configured by the network device.
(2) The sequence corresponding to a port for the first DMRS signal. For example, the first information may indicate two different groups of sequence generation parameters. Each group of sequence generation parameters may include one or more sequence generation parameters, and each group of sequence generation parameters may correspond to sequence generation for one port. In actual transmission, the network device or the second terminal device may determine, according to the port for the first DMRS signal that is actually used, the corresponding sequence generation parameter to obtain the corresponding sequence. The first terminal device may also determine the sequence corresponding to the first DMRS signal according to the scheduling information (for example, which port or ports for the first DMRS signal is used by the network device or the second terminal device).
(3) The time-domain resource corresponding to a port for the first DMRS signal, and different ports may correspond to different time-domain resources.
(4) The frequency-domain resource corresponding to a port for the first DMRS signal, and different ports may correspond to different frequency-domain resources.
(5) The CDM manner adopted by the port for the first DMRS signal. The code division multiplexing manner may be the OCC manner. That is to say, different orthogonal vectors and/or corresponding orthogonal vectors may be adopted for different ports for the first pilot signal.
(6) The FDM manner adopted by the port for the first DMRS signal and/or frequency-domain resource corresponding to the port for the first DMRS signal.
(7) The TDM manner adopted by the port for the first DMRS signal and/or time-domain resource corresponding to the port for the first DMRS signal.

Through this method, the first information can flexibly indicate different ports for the first DMRS signal, thereby reducing sequence interference of DMRS signals between multiple layers and improving the system performance.

In the sixth aspect, the first information indicates a sequence generation parameter for the first DMRS signal.

Through this method, the first information can flexibly indicate the sequence generation for the first DMRS signal, thereby optimizing the sequences between different users, reducing the interference between the sequences and improving the system performance.

Exemplarily, the first information may indicate one or more groups of sequence generation parameters for the first DMRS signal. Each group of sequence generation parameters for the first DMRS signal may include one or more sequence generation parameters.

Exemplarily, the terminal second device or the network device may select the sequence generation parameter for the first DMRS signal through DCI signaling.

Through this method, the second device or the network device can select the sequence generation parameter for the first DMRS signal through the DCI signaling, thereby improving flexibility.

It is to be noted that in a case where there are multiple sequence generation parameters for the first DMRS signal, different sequence generation parameters may correspond to different ports for the first DMRS signal.

Through this method, the first information can flexibly indicate the sequence generation of corresponding port for the first DMRS signal, thereby reducing sequence interference of DMRS signals between multiple layers and improving the system performance.

In some embodiments, the sequence generation parameter for the first DMRS signal includes one or more of:
an identifier of a slot of the time-frequency resources occupied by first DMRS signal;
an identifier of a symbol of the time-frequency resources occupied by first DMRS signal; and/or an identifier of a symbol of the time-frequency resources occupied by first DMRS signal within one slot, one sub-frame or one frame;
an identifier of an SNF where the first DMRS signal is located;
an identifier of a cell where the first DMRS signal a cell is located, for example, an identifier of a physical layer cell;
an identifier of a carrier where the first DMRS signal is located, and the carrier may be a carrier in the CA;
an identifier of a port for the first DMRS signal, and the sequence generation corresponding to the port i for the first DMRS signal may be based on the identifier i of the port.
a scrambling parameter for the first DMRS signal; or
an identifier of a control channel for the data signal, for example, a packet identifier corresponding to the CORESET; or
other parameters configured by the network.

It is to be noted that each group of sequence generation parameters for the first DMRS signal indicated by the first information may include the aforementioned one or more sequence generation parameters.

Through this method, the sequence for the first DMRS signal can be randomized, the sequence interference of the DMRS signals between multiple layers can be reduced, and the system performance can be improved.

In the seventh aspect, the first information indicates a granularity of the configuration.

In some embodiments, the first information is configured for different objects.

The first information may be configured for one cell, i.e., the first information may be information in configuration information of one cell.

The first information may be configured for one carrier, i.e., the first information may be configuration information of one carrier.

The first information may be configured for one BWP (the BWP may be the BWP mentioned in the NR), i.e., the first information may be configuration information of one BWP.

The first information may be configured for PDSCH, i.e., the first information may be information in configuration information of one PDSCH channel.

The first information may be configured for PDCCH, i.e., the first information may be information in configuration information of one PDCCH channel.

The first information may be configured for PUSCH, i.e., the first information may be information in configuration information of one PUSCH channel.

The first information may be configured for PUCCH, i.e., the first information may be information in configuration information of one PUCCH channel.

The first information may be configured for PSSCH, i.e., the first information may be information in configuration information of one PSSCH channel.

The first information may be configured for PSCCH, i.e., the first information may be information in configuration information of one PSCCH channel.

The first information may be configured for PSFCH, i.e., the first information may be information in configuration information of one PSFCH channel.

According to this method, by configuring the first information based on the aforementioned one or more objects, different configuration granularities may be obtained, thereby meeting different flexibilities.

In the embodiments of the present disclosure, the first terminal device may receive the data signal according to the first information. In this case, the first terminal device may determine the first DMRS signal according to the first information and receive the corresponding data signal. The first terminal device may send the data signal according to the first information. In this case, the first terminal device may determine the first DMRS signal according to the first information and send the corresponding data signal.

It is to be noted that, for sending the uplink data signal and the reception of the downlink data signal, the first terminal device may receive two pieces of first information. One piece of the first information corresponds to sending the uplink data signal and the other piece of the first information corresponds to the reception of the downlink data signal. It may be expanded to more first information, which is not limited in the embodiments of the present disclosure.

In some embodiments, before the first terminal device receives the first information, the first terminal device may send capability information of the first terminal device to the second terminal device or the network device. The capability information of the first terminal device represents that the first terminal device supports the first DMRS signal.

Furthermore, the first terminal device may send the capability information of the first terminal device through RRC signaling, MAC CE signaling, or the like.

It is to be noted that the capability information of the first terminal device may be a capability for the band. That is to say, for per band, the corresponding capability information of the first terminal device may be independently reported. Based on this, the first terminal device may have a greater freedom degree. For example, the first terminal device may support reporting corresponding capability information of the first terminal device in a certain band or certain bands, and may not support reporting the corresponding capability information of the first terminal device in other bands, so as to enable more first terminal devices to support reporting the corresponding capability information of the first terminal device.

It is further to be noted that the capability information of the first terminal device may be a capability for the band combination. That is to say, for different band combinations, corresponding capability information of the first terminal device may be independently reported. Based on this, the first terminal device may have a greater freedom degree. For example, the first terminal device may support reporting corresponding capability information of the first terminal device in a certain band combination or certain band combinations, and may not support reporting the corresponding capability information of the first terminal device in other band combinations, so as to enable more first terminal devices to support reporting the corresponding capability information of the first terminal device.

It is further to be noted that the capability information of the first terminal device may be a capability for per band in the band combination. That is to say, for for per band per band combination, corresponding capability information of the first terminal device may be independently reported. Based on this, the first terminal device may have a greater freedom degree. For example, the first terminal device may not support reporting corresponding capability information of the first terminal device under a certain CA combination, but may support reporting the corresponding capability information of the first terminal device in certain bands of another CA combination, so as to enable more first terminal devices to support reporting the corresponding capability information of the first terminal device.

It is further to be noted that the capability information of the first terminal device may be a capability for each carrier on each band of the band combination. That is to say, for for per CC per band per band combination, corresponding capability information of the first terminal device may be independently reported. Based on this, the first terminal device may have a greater freedom degree. For example, corresponding capability information of the first terminal device may be independently reported for different band combinations, and corresponding capability information of the first terminal device may be independently reported for different carriers on one band, so as to enable more first terminal devices to support reporting the corresponding capability information of the first terminal device.

It is further to be noted that the capability information of the first terminal device may be a capability for the FR. That is to say, for per FR, corresponding capability information of the first terminal device may be independently reported. Based on this, the first terminal device may have a greater freedom degree. For example, there are two FRs, denoted as a low-frequency FR (i.e. FR1) and a high-frequency FR (i.e. FR2), respectively. Reporting the corresponding capability information of the first terminal device may be not supported for the FR1, and reporting the corresponding capability information of the first terminal device may be supported for the FR2, so as to enable more first terminal devices to support reporting the corresponding capability information of the first terminal device.

It is further to be noted that the capability information of the first terminal device may be a capability for the first terminal device. Based on this, in the case where the first terminal device reports the capability information of the first terminal device, it may be considered that the first terminal device may support reporting the capability information of the first terminal device in each band, thereby reducing the signaling overhead of the capability reporting of the first terminal device.

In the embodiments of the present disclosure, in the case where more time-frequency resources are occupied by the first DMRS signal, at least part of the time-frequency resources (i.e., the shared time-frequency resource) occupied by the first DMRS signal may also be occupied by the data signal, thereby increasing the time-frequency resources occupied by the data signal, and improving the transmission rate and transmission reliability of the data signal.

Preferred implementations of the present disclosure have been described in detail above with reference to the accompanying drawings. However, the present disclosure is not limited to the specific details of the aforementioned implementations. Within the scope of the technical conception of the present disclosure, a variety of simple modifications may be made to the technical solution of the present disclosure, and such simple modifications shall fall within the scope of protection of the present disclosure. For example, various specific technical features described in the aforementioned specific embodiments may be combined in any suitable manner without contradiction, and various possible combinations are not further described in the present disclosure, in order to avoid unnecessary repetition. For another example, any combination may be made between various implementations of the present disclosure, as long as the combination does not depart from the idea of the present disclosure, and the combinations shall also be considered as the contents of the present disclosure. For another example, on the premise of no conflict, various embodiments described in the present disclosure and/or the technical features in the various embodiments may be combined with the related art in any manner. The technical solutions obtained after the combination shall also fall within the scope of protection of the present disclosure.

It is further to be understood that in various method embodiments of the present disclosure, the sequence number(s) of the above processes do not imply the sequence(s) of execution, and the sequence of execution of each process should be determined according to the functions and internal logic thereof, and should not constitute any limitation on the implementation process of the embodiments of the present disclosure.

FIG. 23 is a schematic diagram of a structural composition of a communication device 2300 according to an embodiment of the present disclosure. The communication device 2300 is applied to a first device that may be the first terminal device in the aforementioned embodiments. As shown in FIG. 23, the communication device 2300 includes a first receiving unit 2310.

The first receiving unit 2310 is configured to receive first information. The first information is used for configuring a first pilot signal, and at least part of time-frequency resources occupied by the first pilot signal are used for transmission of a data signal.

In some embodiments, the first information indicates a power parameter of the first pilot signal.

In some embodiments, the power parameter of the first pilot signal includes one or more of:
a ratio of a power for sending the first pilot signal on a first time-frequency resource to a total power on a second time-frequency resource;
a ratio of a power for sending the data signal on the first time-frequency resource to the total power on the second time-frequency resource;
a ratio of the power for sending the first pilot signal on the first time-frequency resource to the power for sending the data signal on the first time-frequency resource; or
a ratio of the power for sending the data signal on the first time-frequency resource to the power for sending the first pilot signal on the first time-frequency resource.

Herein, the first time-frequency resource is any one of the at least part of time-frequency resources; and the second time-frequency resource is any one of the at least part of time-frequency resources, or the second time-frequency resource is any one of time-frequency resources other than the at least part of time-frequency resources.

In some embodiments, the first information indicates the frequency-domain location of the time-frequency resources occupied by the first pilot signal.

In some embodiments, the frequency-domain location is determined based on one or more of following parameters indicated in the first information: a frequency-domain density; a frequency-domain offset; or a frequency-domain pattern.

In some embodiments, the first information indicates the frequency-domain location through a first bitmap; and/or the first information indicates the frequency-domain location through identifiers of frequency-domain resources.

In some embodiments, the first information indicates the time-domain location of the time-frequency resources occupied by the first pilot signal.

In some embodiments, the time-domain location is determined based on one or more of following parameters indicated in the first information: a time-domain density; a time-domain offset; or a time-domain pattern.

In some embodiments, the first information indicates the time-domain location through a second bitmap; and/or the first information indicates the time-domain location through identifiers of time-domain resources.

In the embodiments, the time-domain location includes: a first symbol and/or a last symbol that are occupied by the data signal.

In the embodiments, the time-domain location includes the first symbol and/or the last symbol that are occupied by the data signal in in one or more of following cases:
a time-domain density of the time-frequency resources occupied by the first pilot signal meets a first preset range; or
an interval between the last symbol occupied by the data signal and a target symbol is greater than or equal to a first threshold, the target symbol being a latest symbol containing the first pilot signal before the last symbol.

In some embodiments, the first indication information indicates a sequence for the first pilot signal.

In some embodiments, the first information indicates a sequence generation parameter for the first pilot signal.

In some embodiments, the sequence generation parameter for the first pilot signal includes one or more of:
an identifier of a time-domain resource of the time-frequency resources occupied by the first pilot signal;
an identifier of a system frame number where the first pilot signal is located;
an identifier of a cell where the first pilot signal is located;
an identifier of a carrier where the first pilot signal is located;
an identifier of a port for the first pilot signal;
a scrambling parameter for the first pilot signal; or
an identifier of a control channel for the data signal.

In some embodiments, the first indication information indicates port information for the first pilot signal.

In some embodiments, the port information for the first pilot signal includes one or more of:
a maximum number of ports for the first pilot signal;
a sequence corresponding to a port for the first pilot signal;
a time-domain resource corresponding to the port for the first pilot signal;
a frequency-domain resource corresponding to the port for the first pilot signal;
a code division multiplexing manner adopted by the port for the first pilot signal;
a frequency division multiplexing manner adopted by the port for the first pilot signal; or
a time division multiplexing manner adopted by the port for the first pilot signal.

In some embodiments, the first information is configured for one or more of following objects:
a cell;
a carrier;
a BWP;
a PDSCH;
a PDCCH;
a PUSCH;
a PUCCH;
a PSSCH;
a PSCCH; or
a PSFCH.

In some embodiments, as shown in FIG. 23, the communication device 2300 may further include a first sending unit 2320.

The first sending unit 2320 is configured to send capability information of the first device. The capability information of the first device represents that the first device supports the first pilot signal.

In some embodiments, the capability information of the first device is a capability for any one of following objects:
a band;
a band combination;
per band in the band combination;
per carrier per band in the band combination;
an FR; or
the first device.

In some embodiments, the first receiving unit 2310 is further configured to receive second information. The second information is used for configuring a second pilot signal, and time-frequency resources occupied by the second pilot signal are not used for transmission of a data signal.

In some embodiments, the first information and/or the second information are carried through a first signaling. The first signaling includes one or more of:
a broadcast message;
a system message;
an RRC signaling;
an MAC CE signaling;
DCI;
a random access message; or
a dedicated signaling.

In some embodiments, the first signaling includes first indication information. The first indication information is used for indicating that the first signaling carries the first information and/or the second information.

In some embodiments, the first signaling includes a first information field and a second information field. The first information field is used for carrying the first information and the second information field is used for carrying the second information.

The embodiments of the present disclosure provide a communication device. The first device may receive the first information. The first information is used for configuring the first pilot signal, and the at least part of time-frequency resources occupied by the first pilot signal are used for transmission of a data signal. In this way, after the first device receives the first signal, the first device may know that the first pilot signal to be configured and the data signal occupy the same at least part of time-frequency resources. In this way, in the case where the first pilot signal occupies more time-frequency resources, the at least part of the time-frequency resources occupied by the first pilot signal may also be occupied by the data signal, thereby increasing the time-frequency resources occupied by the data signal, and improving the transmission rate and transmission reliability of the data signal.

Those skilled in the art will appreciate that the related descriptions of the aforementioned communication device in the embodiments of the present disclosure may be understood with reference to the descriptions of the aforementioned communication method in the embodiments of the present disclosure.

FIG. 24 is a schematic diagram of a structural composition of a communication device 2400 according to an embodiment of the present disclosure. The communication device 2400 is applied to a second device that may be the second terminal device or the network device in the aforementioned embodiments. As shown in FIG. 24, the communication device 2400 includes a second sending unit 2410.

The second sending unit 2410 is configured to send first information to a first device. The first information is used for configuring a first pilot signal, and at least part of time-frequency resources occupied by the first pilot signal are used for transmission of a data signal.

In some embodiments, the first information indicates a power parameter of the first pilot signal.

In some embodiments, the power parameter of the first pilot signal includes one or more of:
a ratio of a power for sending the first pilot signal on a first time-frequency resource to a total power on a second time-frequency resource;
a ratio of a power for sending the data signal on the first time-frequency resource to the total power on the second time-frequency resource;
a ratio of the power for sending the first pilot signal on the first time-frequency resource to the power for sending the data signal on the first time-frequency resource; or
a ratio of the power for sending the data signal on the first time-frequency resource to the power for sending the first pilot signal on the first time-frequency resource.

Herein, the first time-frequency resource is any one of the at least part of time-frequency resources; and the second time-frequency resource is any one of the at least part of time-frequency resources, or the second time-frequency resource is any one of time-frequency resources other than the at least part of time-frequency resources.

In some embodiments, the first information indicates the frequency-domain location of the time-frequency resources occupied by the first pilot signal.

In some embodiments, the frequency-domain location is determined based on one or more of following parameters indicated in the first information: a frequency-domain density; a frequency-domain offset; or a frequency-domain pattern.

In some embodiments, the first information indicates the frequency-domain location through a first bitmap; and/or the first information indicates the frequency-domain location through identifiers of frequency-domain resources.

In some embodiments, the first information indicates the time-domain location of the time-frequency resources occupied by the first pilot signal.

In some embodiments, the time-domain location is determined based on one or more of following parameters indicated in the first information: a time-domain density; a time-domain offset; or a time-domain pattern.

In some embodiments, the first information indicates the time-domain location through a second bitmap; and/or the first information indicates the time-domain location through identifiers of time-domain resources.

In the embodiments, the time-domain location includes: a first symbol and/or a last symbol that are occupied by the data signal.

In the embodiments, the time-domain location includes the first symbol and/or the last symbol that are occupied by the data signal in in one or more of following cases:
a time-domain density of the time-frequency resources occupied by the first pilot signal meets a first preset range; or
an interval between the last symbol occupied by the data signal and a target symbol is greater than or equal to a first threshold, the target symbol being a latest symbol containing the first pilot signal before the last symbol.

In some embodiments, the first indication information indicates a sequence for the first pilot signal.

In some embodiments, the first information indicates a sequence generation parameter for the first pilot signal.

In some embodiments, the sequence generation parameter for the first pilot signal includes one or more of:
an identifier of a time-domain resource of the time-frequency resources occupied by the first pilot signal;
an identifier of a system frame number where the first pilot signal is located;
an identifier of a cell where the first pilot signal is located;
an identifier of a carrier where the first pilot signal is located;
an identifier of a port for the first pilot signal;
a scrambling parameter for the first pilot signal; or
an identifier of a control channel for the data signal.

In some embodiments, the first indication information indicates port information for the first pilot signal.

In some embodiments, the port information for the first pilot signal includes one or more of:
a maximum number of ports for the first pilot signal;
a sequence corresponding to a port for the first pilot signal;
a time-domain resource corresponding to the port for the first pilot signal;
a frequency-domain resource corresponding to the port for the first pilot signal;
a code division multiplexing manner adopted by the port for the first pilot signal;
a frequency division multiplexing manner adopted by the port for the first pilot signal; or
a time division multiplexing manner adopted by the port for the first pilot signal.

In some embodiments, the first information is configured for one or more of following objects:
a cell;
a carrier;
a BWP;
a PDSCH;
a PDCCH;
a PUSCH;
a PUCCH);
a PSSCH;
a PSCCH; or
a PSFCH;

In some embodiments, as shown in FIG. 24, the communication device 2400 may further include a second receiving unit 2420.

The second receiving unit 2420 is configured to receive capability information of the first device. The capability information of the first device represents that the first device supports the first pilot signal.

In some embodiments, the capability information of the first device is a capability for any one of following objects:
a band;
a band combination;
per band in the band combination;
per carrier per band in the band combination;
an FR; or
the first device.

In some embodiments, the second sending unit 2410 is further configured to send second information to the first device. The second information is used for configuring a second pilot signal, and time-frequency resources occupied by the second pilot signal are not used for transmission of a data signal.

In some embodiments, the first information and/or the second information are carried through a first signaling. The first signaling includes one or more of:
a broadcast message;
a system message;
an RRC signaling;
an MAC CE signaling;
DCI;
a random access message; or
a dedicated signaling.

In some embodiments, the first signaling includes first indication information. The first indication information is used for indicating that the first signaling carries the first information and/or the second information.

In some embodiments, the first signaling includes a first information field and a second information field. The first information field is used for carrying the first information and the second information field is used for carrying the second information.

The embodiments of the present disclosure provide a communication device. The second device may send the first information to a first device. The first information is used for configuring the first pilot signal, and the at least part of time-frequency resources occupied by the first pilot signal are used for transmission of a data signal. In this way, in the case where the first pilot signal occupies more time-frequency resources, the at least part of the time-frequency resources occupied by the first pilot signal may also be occupied by the data signal, thereby increasing the time-frequency resources occupied by the data signal, and improving the transmission rate and transmission reliability of the data signal.

Those skilled in the art will appreciate that the related descriptions of the aforementioned communication device in the embodiments of the present disclosure may be understood with reference to the descriptions of the aforementioned communication method in the embodiments of the present disclosure.

FIG. 25 is a schematic structural diagram of a communication device according to an embodiment of the present disclosure. The communication device 2500 may be a first device or a second device. The first device may be the first terminal device in the aforementioned embodiments, and the second device may be the second terminal device or the network device in the aforementioned embodiments. As illustrated in FIG. 25, the communication device 2500 includes a processor 2510 and a memory 2520.

The memory 2520 is configured to store computer-executable instructions; and

The processor 2510 is connected to the memory 2520 and configured to implement the method in the embodiments of the present disclosure by executing the computer-executable instructions.

The memory 2520 may be a separate device that is independent of the processor 2510 or may be integrated in the processor 2510.

In some embodiments, as illustrated in FIG. 25, the communication device 2500 may further include a transceiver 2530. The processor 2510 may control the transceiver 2530 to communicate with other devices. Specifically, the transceiver 1030 may send information or data to other devices, or receive information or data from other devices.

Herein, the transceiver 2530 may include a transmitter and a receiver. The transceiver 2530 may further include one or more antennas.

In some embodiments, the communication device 2500 may be the first device in the embodiments of the present disclosure. The communication device 2500 may implement the corresponding flow implemented by the first device in various methods in the embodiments of the present disclosure. For brevity, details are not elaborated herein again.

In some embodiments, the communication device 2500 may be the second device in the embodiments of the present disclosure. The communication device 2500 may implement the corresponding flow implemented by the second device in various methods in the embodiments of the present disclosure. For brevity, details are not elaborated herein again.

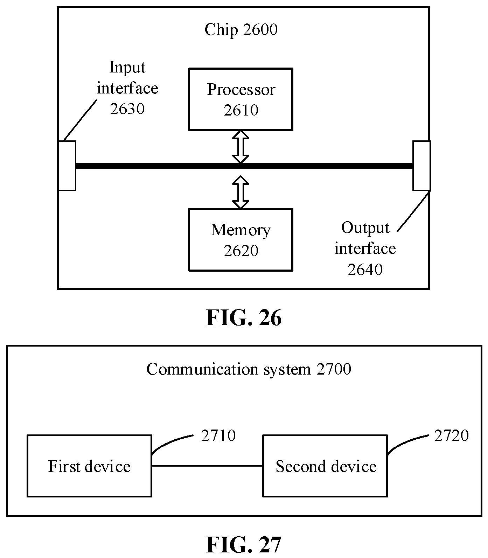

FIG. 26 is a schematic structural diagram of a chip according to an embodiment of the present disclosure. As illustrated in FIG. 26, the chip 2600 includes a processor 2610 and a memory 2620.

The processor 2610 is configured to invoke and execute a computer program from the memory 2620, to enable a device on which the chip is mounted to perform the methods in the embodiments of the present disclosure.

The memory 2620 may be a separate device that is independent of the processor 2610 or may be integrated in the processor 2610.

In some embodiments, the chip 2600 may further include an input interface 2630. The processor 2610 may control the input interface 2630 to communicate with other devices or chips. Specifically, the input interface 2630 may acquire information or data sent by other devices or chips.

In some embodiments, the chip 2600 may further include an output interface 2640. Herein, the processor 2610 may control the output interface 2640 to communicate with other devices or chips. Specifically, the output interface 2640 may output information or data to other devices or chips.

In some embodiments, the chip may be applied to the first device (e.g., the first terminal device) in the embodiments of the present disclosure. The chip may implement the corresponding flow implemented by the first device in various methods in the embodiments of the present disclosure. For brevity, details are not elaborated herein again.

In some embodiments, the chip may be applied to the second device (e.g., the second terminal device, or the network device) in the embodiments of the present disclosure. The chip may implement the corresponding flow implemented by the second device in various methods in the embodiments of the present disclosure. For brevity, details are not elaborated herein again.

It should be understood that, the chip referred to in the embodiments of the present disclosure may also be referred to as a system-level chip, a system chip, a chip system, or a system-on-chip, etc.

FIG. 27 is a schematic structural diagram of a communication system according to an embodiment of the present disclosure. As shown in FIG. 27, the communication system 2700 may include a first device 2710 and a second device 2720.

The first device may 2710 be the first terminal device in the aforementioned embodiments, and the second device 2720 may be the second terminal device or the network device in the aforementioned embodiments. Herein, the first device 2710 may be configured to implement the corresponding functions implemented by the first device in the foregoing methods. The second device 2720 may be configured to implement the corresponding functions implemented by the second device in the foregoing methods. For brevity, details are not elaborated herein again.

It is to be understood that the processor in the embodiments of the present disclosure may be an integrated circuit chip with signal processing capacity. In the implementation process, various operations of the above method embodiments may be completed by integrated logic circuits of hardware in the processor or instructions in the form of software. The above processor may be a general-purpose processor, a Digital Signal Processor (DSP), an Application Specific Integrated Circuit (ASIC), a Field Programmable Gate Array (FPGA), or other programmable logic devices, discrete gate or transistor logic devices, and discrete hardware components. Various methods, steps, and logical block diagrams disclosed in the embodiments of the disclosure may be implemented or performed. The general-purpose processor may be a microprocessor, any conventional processor, or the like. Steps of the methods disclosed with reference to the embodiments of the disclosure may be directly performed and accomplished by a hardware decoding processor, or may be performed and accomplished by a combination of hardware and software modules in the decoding processor. The software modules may be located in a mature storage medium in the art, such as a random access memory, a flash memory, a read-only memory, a programmable read-only memory or electrically erasable programmable memory, or a register. The storage medium is located in the memory, and the processor reads information in the memory and completes the steps in the foregoing methods in combination with hardware of the processor.

It is to be understood that the memory in the embodiments of the present disclosure may be a volatile memory or a non-volatile memory, or may include both the volatile memory and the non-volatile memory. The non-volatile memory may be an ROM, a Programmable ROM (PROM), an Erasable PROM (EPROM), an Electrically EPROM (EEPROM) or a flash memory. The volatile memory may be a Random Access Memory (RAM) and is used as an external high-speed cache. It is exemplarily but unlimitedly described that RAMs in various forms may be adopted, such as a static RAM (SRAM), a dynamic RAM (DRAM), a Synchronous DDRAM (SDRAM), a double data rate SDRAM (DDR SDRAM), an Enhanced SDRAM (ESDRAM), a Synchlink DRAM (SLDRAM) and a Direct Rambus RAM (DR RAM). It is to be noted that the memory of the systems and methods includes described in the specification includes but is not limited to these and any other proper types of memories.

It is to be understood that the abovementioned memories are exemplary but not restrictive, for example, the memory in the embodiments of the disclosure may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), and a Direct Rambus RAM (DR RAM). That is to say, the memories described in the embodiments f the disclosure are intended to include, but not limited to, these and any other suitable types of memories.

The embodiments of the present disclosure provide a computer-readable storage medium. The computer-readable storage medium has stored a computer program that, when executed by at least one processor, implements the method in the embodiments of the present disclosure.

In some embodiments, the computer-readable storage medium may be applied to the first device (e.g., the first terminal device) in the embodiments of the present disclosure. The computer program causes the computer to implement the corresponding flow implemented by the first device in various methods in the embodiments of the present disclosure. For brevity, details are not elaborated herein again.

In some embodiments, the computer-readable storage medium may be applied to the second device (e.g., the second terminal device or the network device) in the embodiments of the present disclosure. The computer program causes the computer to implement the corresponding flow implemented by the second device in various methods in the embodiments of the present disclosure. For brevity, details are not elaborated herein again.

The embodiments of the present disclosure provide a computer program product. The computer program product includes a computer storage medium storing a computer program including instructions executable by at least one processor that, when executed by at least one processor, implement the methods in the embodiments of the present disclosure.

In some embodiments, the computer program product may be applied to the first device (e.g., the first terminal device) in the embodiments of the present disclosure. The computer program instructions cause the computer to implement the corresponding flow implemented by the first device in various methods in the embodiments of the present disclosure. For brevity, details are not elaborated herein again.

In some embodiments, the computer program product may be applied to the second device (e.g., the second terminal device or the network device) in the embodiments of the present disclosure. The computer program instructions cause the computer to implement the corresponding flow implemented by the second device in various methods in the embodiments of the present disclosure. For brevity, details are not elaborated herein again.

The embodiments of the present disclosure provide a computer program that cases a computer to perform the methods in the embodiments of the present disclosure.

In some embodiments, the computer program may be applied to the first device (e.g., the first terminal device) in the embodiments of the present disclosure, and the computer program, when is run on a computer, causes the computer to perform the corresponding flows performed by the first device in various methods of the embodiments of the present disclosure. For brevity, details are not described herein again.

In some embodiments, the computer program may be applied to the second device (e.g., the second terminal device or the network device) in the embodiments of the present disclosure, and the computer program, when is run on a computer, causes the computer to perform the corresponding flows performed by the second device in various methods of the embodiments of the present disclosure. For brevity, details are not described herein again.

Those of ordinary skill in the art may realize that units and algorithm steps of various examples described in combination with the embodiments disclosed in the present disclosure herein may be implemented by electronic hardware, or a combination of computer software and electronic hardware. Whether the functions are executed in a hardware or software manner depends on specific applications and design constraints of the technical solutions. Professionals may implement the described functions for each specific application by using different methods, but such implementations shall not be regarded as outside the scope of the present disclosure.

It may be clearly understood by those skilled in the art that, for the specific working processes of the aforementioned apparatuses and units, reference may be made to the corresponding processes in the aforementioned method embodiments, and such specific working processes of the systems, devices and units are not described herein again for the purpose of convenient and brief description

In the several embodiments provided in the present disclosure, it is to be understood that the disclosed devices and method may be implemented in other modes. For example, the device embodiments described above are only schematic, and for example, division of the units is only logic function division, and other division manners may be adopted during practical implementation. For example, multiple units or components may be combined or integrated into another system, or some characteristics may be neglected or not executed. In addition, the displayed or discussed mutual couplings or direct couplings or communication connections may be implemented by using some interfaces. The indirect couplings or communication connections between the devices or units may be implemented in electronic, mechanical, or other forms.

The units described as separate components may or may not be physically separated, and the components displayed as units may or may not be physical units, and may be located in one place or may be distributed over multiple network units. Some or all of the units may be selected according to actual needs to achieve the objectives of the solutions of the embodiments of the present disclosure.

In addition, functional units in various embodiments of the disclosure may be integrated into one processing unit, or each of the units may be physically separated, or two or more units may be integrated into one unit.

If the function is implemented in the form of a software functional unit and sold or used as an independent product, it may also be stored in a computer-readable storage medium. Based on this understanding, the technical solutions of the disclosure essentially or the parts that contribute to the prior art, or part of the technical solutions can be embodied in the form of a software product. The computer software product is stored in a storage medium, including multiple instructions for causing a computer device (which may be a personal computer, a server, or a network device, and the like) to execute all or part of the steps of the methods described in various embodiments of the disclosure. The aforementioned storage medium includes various media capable of storing a program code such as a USB disk, a mobile hard drive disk, a Read-Only Memory (ROM), a Random Access Memory (RAM), a magnetic disk or an optical disk.

The above descriptions are merely specific implementations of the disclosure, but are not intended to limit the scope of protection of the disclosure. Any variation or replacement readily figured out by a person skilled in the art within the technical scope disclosed in the disclosure shall fall within the scope of protection of the disclosure. Therefore, the scope of protection of the disclosure is defined by the scope of protection of the claims.

## Claims

1. A communication method, comprising:
receiving, by a first device, first information, the first information being used for configuring a first pilot signal, and at least part of time-frequency resources occupied by the first pilot signal being used for transmission of a data signal.

2. The method of claim 1, wherein the first information indicates a power parameter of the first pilot signal.

3. The method of claim 2, wherein the power parameter of the first pilot signal comprises one or more of:
a ratio of a power for sending the first pilot signal on a first time-frequency resource to a total power on a second time-frequency resource;
a ratio of a power for sending the data signal on the first time-frequency resource to the total power on the second time-frequency resource;
a ratio of the power for sending the first pilot signal on the first time-frequency resource to the power for sending the data signal on the first time-frequency resource; or
a ratio of the power for sending the data signal on the first time-frequency resource to the power for sending the first pilot signal on the first time-frequency resource,
wherein the first time-frequency resource is any one of the at least part of time-frequency resources; and the second time-frequency resource is any one of the at least part of time-frequency resources, or the second time-frequency resource is any one of time-frequency resources other than the at least part of time-frequency resources.

4. The method of any one of claims 1 to 3, wherein the first information indicates a frequency-domain location of the time-frequency resources occupied by the first pilot signal.

5. The method of claim 4, wherein the frequency-domain location is determined based on one or more of following parameters indicated in the first information:
a frequency-domain density;
a frequency-domain offset; or
a frequency-domain pattern.

6. The method of claim 4 or 5, wherein the first information indicates the frequency-domain location of the time-frequency resources occupied by the first pilot signal, which comprises:
the first information indicates the frequency-domain location through a first bitmap; and/or
the first information indicates the frequency-domain location through identifiers of frequency-domain resources.

7. The method of any one of claims 1 to 6, wherein the first information indicates a time-domain location of the time-frequency resources occupied by the first pilot signal.

8. The method of claim 7, wherein the time-domain location is determined based on one or more of following parameters indicated in the first information:
a time-domain density;
a time-domain offset; or
a time-domain pattern.

9. The method of claim 7 or 8, wherein the first information indicates the time-domain location of the time-frequency resources occupied by the first pilot signal, which comprises:
the first information indicates the time-domain location through a second bitmap; and/or
the first information indicates the time-domain location through identifiers of time-domain resources.

10. The method of any one of claims 7 to 9, wherein the time-domain location comprises a first symbol and/or a last symbol that are occupied by the data signal.

11. The method of claim 10, wherein the time-domain location comprises the first symbol and/or the last symbol that are occupied by the data signal, in one or more of following cases:
a time-domain density of the time-frequency resources occupied by the first pilot signal meets a first preset range; or
an interval between the last symbol occupied by the data signal and a target symbol is greater than or equal to a first threshold, the target symbol being a latest symbol containing the first pilot signal before the last symbol.

12. The method of any one of claims 1 to 11, wherein the first information indicates a sequence for the first pilot signal.

13. The method of any one of claims 1 to 12, wherein the first information indicates a sequence generation parameter for the first pilot signal.

14. The method of claim 13, wherein the sequence generation parameter for the first pilot signal comprises one or more of:
an identifier of a time-domain resource of the time-frequency resources occupied by the first pilot signal;
an identifier of a system frame number where the first pilot signal is located;
an identifier of a cell where the first pilot signal is located;
an identifier of a carrier where the first pilot signal is located;
an identifier of a port for the first pilot signal;
a scrambling parameter for the first pilot signal; or
an identifier of a control channel for the data signal.

15. The method of any one of claims 1 to 14, wherein the first information indicates port information for the first pilot signal.

16. The method of claim 15, wherein the port information for the first pilot signal comprises one or more of:
a maximum number of ports for the first pilot signal;
a sequence corresponding to a port for the first pilot signal;
a time-domain resource corresponding to the port for the first pilot signal;
a frequency-domain resource corresponding to the port for the first pilot signal;
a code division multiplexing manner adopted by the port for the first pilot signal;
a frequency division multiplexing manner adopted by the port for the first pilot signal; or
a time division multiplexing manner adopted by the port for the first pilot signal.

17. The method of any one of claims 1 to 16, wherein the first information is configured for one or more of following objects:
a cell;
a carrier;
a Bandwidth Part (BWP);
a Physical Downlink Shared Channel (PDSCH);
a Physical Downlink Control Channel (PDCCH);
a Physical Uplink Shared Channel (PUSCH);
a Physical Uplink Control Channel (PUCCH);
a Physical Sidelink Shared Channel (PSSCH);
a Physical Sidelink Control Channel (PSCCH); or
a Physical Sidelink Feedback Channel (PSFCH).

18. The method of any one of claims 1 to 17, further comprising: before receiving, by the first device, the first information,
sending, by the first device, capability information of the first device, the capability information of the first device representing that the first device supports the first pilot signal.

19. The method of claim 18, wherein the capability information of the first device is a capability for any one of following objects:
a band;
a band combination;
per band in the band combination;
per carrier per band in the band combination;
a Frequency Range (FR); or
the first device.

20. The method of any one of claims 1 to 19, further comprising:
receiving, by the first device, second information, the second information being used for configuring a second pilot signal, and time-frequency resources occupied by the second pilot signal being not used for transmission of the data signal.

21. The method of claim 20, wherein the first information and/or the second information are carried through a first signaling, the first signaling comprising one or more of:
a broadcast message;
a system message;
a Radio Resource Control (RRC) signaling;
a Media Access Control Control Element (MAC CE) signaling;
Downlink Control Information (DCI);
a random access message; or
a dedicated signaling.

22. The method of claim 21, wherein the first signaling comprises first indication information, the first indication information being used for indicating that the first signaling carries the first information and/or the second information.

23. The method of claim 21, wherein the first signaling comprises a first information field and a second information field, the first information field being used for carrying the first information and the second information field being used for carrying the second information.

24. A communication method, comprising:
sending, by a second device, first information to a first device, the first information being used for configuring a first pilot signal, and at least part of time-frequency resources occupied by the first pilot signal being used for transmission of a data signal.

25. The method of claim 24, wherein the first information indicates a power parameter of the first pilot signal.

26. The method of claim 25, wherein the power parameter of the first pilot signal comprises one or more of:
a ratio of a power for sending the first pilot signal on a first time-frequency resource to a total power on a second time-frequency resource;
a ratio of a power for sending the data signal on the first time-frequency resource to the total power on the second time-frequency resource;
a ratio of the power for sending the first pilot signal on the first time-frequency resource to the power for sending the data signal on the first time-frequency resource; or
a ratio of the power for sending the data signal on the first time-frequency resource to the power for sending the first pilot signal on the first time-frequency resource,
wherein the first time-frequency resource is any one of the at least part of time-frequency resources; and the second time-frequency resource is any one of the at least part of time-frequency resources, or the second time-frequency resource is any one of time-frequency resources other than the at least part of time-frequency resources.

27. The method of any one of claims 24 to 26, wherein the first information indicates a frequency-domain location of the time-frequency resources occupied by the first pilot signal.

28. The method of claim 27, wherein the frequency-domain location is determined based on one or more of following parameters indicated in the first information:
a frequency-domain density;
a frequency-domain offset; or
a frequency-domain pattern.

29. The method of claim 27 or 28, wherein the first information indicates the frequency-domain location of the time-frequency resources occupied by the first pilot signal, which comprises:
the first information indicates the frequency-domain location through a first bitmap; and/or
the first information indicates the frequency-domain location through identifiers of frequency-domain resources.

30. The method of any one of claims 24 to 29, wherein the first information indicates a time-domain location of the time-frequency resources occupied by the first pilot signal.

31. The method of claim 30, wherein the time-domain location is determined based on one or more of following parameters indicated in the first information:
a time-domain density;
a time-domain offset; or
a time-domain pattern.

32. The method of claim 30 or 31, wherein the first information indicates the time-domain location of the time-frequency resources occupied by the first pilot signal, which comprises:
the first information indicates the time-domain location through a second bitmap; and/or
the first information indicates the time-domain location through identifiers of time-domain resources.

33. The method of any one of claims 30 to 32, wherein the time-domain location comprises a first symbol and/or a last symbol that are occupied by the data signal.

34. The method of claim 33, wherein the time-domain location comprises the first symbol and/or the last symbol that are occupied by the data signal, in one or more of following cases:
a time-domain density of the time-frequency resources occupied by the first pilot signal meets a first preset range; or
an interval between the last symbol occupied by the data signal and a target symbol is greater than or equal to a first threshold, the target symbol being a latest symbol containing the first pilot signal before the last symbol.

35. The method of any one of claims 24 to 34, wherein the first information indicates a sequence for the first pilot signal.

36. The method of any one of claims 24 to 35, wherein the first information indicates a sequence generation parameter for the first pilot signal.

37. The method of claim 36, wherein the sequence generation parameter for the first pilot signal comprises one or more of:
an identifier of a time-domain resource of the time-frequency resources occupied by the first pilot signal;
an identifier of a system frame number where the first pilot signal is located;
an identifier of a cell where the first pilot signal is located;
an identifier of a carrier where the first pilot signal is located;
an identifier of a port for the first pilot signal;
a scrambling parameter for the first pilot signal; or
an identifier of a control channel for the data signal.

38. The method of any one of claims 24 to 37, wherein the first information indicates port information for the first pilot signal.

39. The method of claim 38, wherein the port information for the first pilot signal comprises one or more of:
a maximum number of ports for the first pilot signal;
a sequence corresponding to a port for the first pilot signal;
a time-domain resource corresponding to the port for the first pilot signal;
a frequency-domain resource corresponding to the port for the first pilot signal;
a code division multiplexing manner adopted by the port for the first pilot signal;
a frequency division multiplexing manner adopted by the port for the first pilot signal; or
a time division multiplexing manner adopted by the port for the first pilot signal.

40. The method of any one of claims 24 to 39, wherein the first information is configured for one or more of following objects:
a cell;
a carrier;
a Bandwidth Part (BWP);
a Physical Downlink Shared Channel (PDSCH);
a Physical Downlink Control Channel (PDCCH);
a Physical Uplink Shared Channel (PUSCH);
a Physical Uplink Control Channel (PUCCH);
a Physical Sidelink Shared Channel (PSSCH);
a Physical Sidelink Control Channel (PSCCH); or
a Physical Sidelink Feedback Channel (PSFCH).

41. The method of any one of claims 24 to 40, further comprising: before sending, by the second device, the first information to the first device,
receiving, by the second device, capability information of the first device, the capability information of the first device representing that the first device supports the first pilot signal.

42. The method of claim 41, wherein the capability information of the first device is a capability for any one of following objects:
a band;
a band combination;
per band in the band combination;
per carrier per band in the band combination;
a Frequency Range (FR); or
the first device.

43. The method of any one of claims 24 to 42, further comprising:
sending, by the second device, second information to the first device, the second information being used for configuring a second pilot signal, and time-frequency resources occupied by the second pilot signal being not used for transmission of the data signal.

44. The method of claim 43, wherein the first information and/or the second information are carried through a first signaling, the first signaling comprising one or more of:
a broadcast message;
a system message;
a Radio Resource Control (RRC) signaling;
a Media Access Control Control Element (MAC CE) signaling;
Downlink Control Information (DCI);
a random access message; or
a dedicated signaling.

45. The method of claim 44, wherein the first signaling comprises first indication information, the first indication information being used for indicating that the first signaling carries the first information and/or the second information.

46. The method of claim 44, wherein the first signaling comprises a first information field and a second information field, the first information field being used for carrying the first information and the second information field being used for carrying the second information.

47. A communication device, applied to a first device, comprising:
a first receiving unit, configured to receive first information, the first information being used for configuring a first pilot signal, and at least part of time-frequency resources occupied by the first pilot signal being used for transmission of a data signal.

48. A communication device, applied to a second device, comprising:
a second sending unit, configured to send first information to a first device, the first information being used for configuring a first pilot signal, and at least part of time-frequency resources occupied by the first pilot signal being used for transmission of a data signal.

49. A communication device, comprising:
a memory, configured to store computer-executable instructions; and
a processor connected to the memory and configured to implement, by executing the computer-executable instructions, the method of any one of claims 1 to 23 or the method of any one of claims 24 to 46.

50. A chip, comprising:
a processor, configured to invoke and execute a computer program from a memory, to enable a device on which the chip is mounted to perform the method of any one of claims 1 to 23 or the method of any one of claims 24 to 46.

51. A computer-readable storage medium having stored thereon a computer program that, when executed by at least one processor, implements the method of any one of claims 1 to 23 or implements the method of any one of claims 24 to 46.

52. A computer program product comprising a computer storage medium, wherein the computer storage medium stores a computer program including instructions executable by at least one processor, and the instructions, when executed by at least one processor, implement the method of any one of claims 1 to 23 or implement the method of any one of claims 24 to 46.

53. A computer program that causes a computer to perform the method of any one of claims 1 to 23 or implement the method of any one of claims 24 to 46.
